(19) **Europäisches Patentamt / European Patent Office / Office européen des brevets**

(11) **EP 4 376 527 B1**

(12) **EUROPEAN PATENT SPECIFICATION**

(45) Date of publication and mention
of the grant of the patent:
**01.10.2025 Bulletin 2025/40**

(21) Application number: **22857707.8**

(22) Date of filing: **12.08.2022**

(51) International Patent Classification (IPC):
**H04W 72/04** (2023.01)    **H04B 7/04** (2017.01)
**H04W 74/0816** (2024.01)    **H04W 76/15** (2018.01)
**H04W 84/12** (2009.01)

(52) Cooperative Patent Classification (CPC):
**H04B 7/04; H04W 76/15; H04W 74/0816;**
**H04W 84/12; Y02D 30/70**

(86) International application number:
**PCT/CN2022/112175**

(87) International publication number:
**WO 2023/020395 (23.02.2023 Gazette 2023/08)**

(54) **FRAME EXCHANGE IN EMLSR (ENHANCED MULTI-LINK SINGLE RADIO)**

RAHMENAUSTAUSCH IN EMLSR (ENHANCED MULTI-LINK SINGLE RADIO)

ÉCHANGE DE TRAMES DANS EMLSR (ENHANCED MULTI-LINK SINGLE RADIO)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2021 CN 202110945312**
**21.10.2021 CN 202111229676**

(43) Date of publication of application:
**29.05.2024 Bulletin 2024/22**

(60) Divisional application:
**25197971.2**

(73) Proprietor: **Huawei Technologies Co., Ltd.
Shenzhen, Guangdong 518129 (CN)**

(72) Inventors:
• **YANG, Mao**
  Xi'an, Shaanxi 710072 (CN)
• **YAN, Zhongjiang**
  Xi'an, Shaanxi 710072 (CN)
• **LU, Yuxin**
  Shenzhen, Guangdong 518129 (CN)
• **LI, Yiqing**
  Shenzhen, Guangdong 518129 (CN)
• **LI, Yunbo**
  Shenzhen, Guangdong 518129 (CN)
• **GUO, Yuchen**
  Shenzhen, Guangdong 518129 (CN)
• **GAN, Ming**
  Shenzhen, Guangdong 518129 (CN)

(74) Representative: **MERH-IP Matias Erny Reichl
Hoffmann
Patentanwälte PartG mbB
Paul-Heyse-Straße 29
80336 München (DE)**

(56) References cited:
**WO-A1-2021/141467    CN-A- 112 512 135
CN-A- 112 788 716**

• LIWEN CHU (NXP): "minutes for tgbe mac ad hoc
  teleconferences may and july 2020", vol. 802.11
  EHT; 802.11be, no. 14, 9 July 2020 (2020-07-09),
  pages 1 - 106, XP068172856, Retrieved from the
  Internet <URL:https://mentor.ieee.org/802.11/
  dcn/20/
  11-20-0777-14-00be-minutes-for-tgbe-mac-ad-
  hoc-teleconferences-may-and-july-2020.docx>
  [retrieved on 20200709]
• PARK, M. Y.: "CC34/CC36 Comment Resolution
  for EMLSR - Part 2", IEEE P802.11 WIRELESS
  LANS  DOC.: IEEE 802.11-20/287R2, IEEE, US, 9
  August 2021 (2021-08-09), US, pages 1 - 11,
  XP009543898

## Description

### TECHNICAL FIELD

This application relates to the field of wireless communication technologies, and in particular, to a communication method to a related apparatus and to a related program product.

### BACKGROUND

There is a spatial multiplexing power save (Spatial Multiplexing Power Save, SM PS) function in the existing 802.11 standards (herein refer to the 802.11ax standard and earlier versions). For details, refer to the descriptions in the section 11.2.6 of the 802.11ax standard. The SM PS allows one non-access point station (non-access point station, non-AP STA) to retain only one active receive chain (receive chain), and to receive a signal usually by using one antenna. After the non-AP STA receives an initial frame sent by an AP, another receive chain of the non-AP STA is opened, and a frame exchange with the AP is performed by using a plurality of antennas. After end of the frame exchange, the non-AP STA switches back to a single receive chain mode. It should be understood that the non-AP STA may be referred to as a station (station, STA) for short, and the non-AP STA and the STA may be used alternatively in this specification. In the existing 802.11 standards, when the STA determines that any condition specified in the 802.11ax standard is met (for details, refer to the section 11.2.6 of the 802.11ax standard), the STA may immediately switch back to the single receive chain mode, to increase a gain through spatial multiplexing and save energy.

A next-generation 802.11 standard, such as 802.11be, is referred to as extremely high throughput (Extremely High Throughput, EHT) or Wi-Fi 7. A key technology of the standard is to improve a throughput through multi-link (multi-link, ML) communication. A core idea of the multi-link communication is as follows: A wireless local area network (wireless local area network, WLAN) device that supports the next-generation 802.11 standard, namely, an EHT device, has multi-band (multi-band) sending and receiving capabilities, to use a larger bandwidth for data transmission, thereby significantly improving a throughput. A multi-band includes but is not limited to a 2.4 GHz Wi-Fi band, a 5 GHz Wi-Fi band, and a 6 GHz Wi-Fi band. In 802.11be, a WLAN device that supports multi-link communication is referred to as a multi-link device (multi-link device, MLD). Clearly, the multi-link device may perform parallel communication on a plurality of links (or a plurality of bands), so that a transmission rate is greatly improved. The multi-link device (MLD) includes one or more affiliated stations (affiliated STAs). The affiliated station is a logical station and may operate on one link. The affiliated station may be an access point (access point, AP) or a non-access point station (non-access point station, non-AP STA). In the 802.11be standard, a multi-link device whose affiliated station is an AP is referred to as an AP MLD, and a multi-link device whose affiliated station is a non-AP STA is referred to as a non-AP MLD.

However, some non-AP MLDs each can have only single radio (Single radio) sending and receiving capabilities, but to enable the non-AP MLDs to enjoy benefits of multiple links, an enhanced multi-link single radio (Enhanced Multi-link Single Radio, EMLSR) capability is introduced in 802.11be. Therefore, a design of an enhanced-multi-link-based communication method in a WLAN needs to be explored urgently. Document

LIWEN CHU (NXP): "minutes for tgbe mac ad hoc teleconferences may and july 2020", IEEE DRAFT; 11-20-0777-14-00BE-MINUTES-FOR-TGBE-MAC-AD-HOC-TELECONFERENCES-MAY-AND-JULY-2020, IEEE-SA MENTOR, PISCATAWAY, NJ USA,vol. 802.11 EHT; 802.11be, no. 14 9 July 2020 (2020-07-09), pages 1-106, URL:https://mentor.ieee.org/802.11/dcn/20/11-20-0777-14-00be-minutes-for-tgbe-mac-ad-hoc-teleconferences-may-and-july-2020.docx, discloses that if an AP MLD does not receive an immediate response successfully on a link that is not a first frame exchange within the obtained TXOP of the link, and if the AP MLD receives an immediate response on at least one another link, the AP MLD can continue its transmission on the link within the obtained TXOP TBD (e.g., SIFS or PIFS) time after the failed reception of the immediate response if the channel is idle.

### SUMMARY

Embodiments of this application provide a communication method and a related apparatus. SM PS and EMLSR may be combined for communication, to resolve a problem that end of a frame exchange is defined by directly reusing an existing SM PS rule is not applicable to the EMLSR, and further enable an AP to serve other STAs while serving a STA in the EMLSR mode, to perform multi-user communication, thereby further improving communication efficiency. In particular, this application provides a communication method, corresponding apparatuses, and a computer-readable storage medium, having the features of respective independent claims. The dependent claims relate to preferred embodiments.

The following describes this application from different aspects. It should be understood that mutual reference may be made to the following implementations and beneficial effect of the different aspects.

According to a first aspect, this application provides a communication method. The method includes: A non-AP MLD receives a first frame from a first AP when performing a listening operation (Listening Operation) on a first link. The non-AP MLD switches (some or all of) spatial streams/antennas on each link (or another link) of the non-AP MLD to the first link to perform a frame exchange with the first AP. When determining that any preset condition in a preset condition set is met, the non-AP MLD switches some spatial streams/antennas on the first link back to each link (or the another link) to perform the listening operation. The non-AP MLD supports an enhanced multi-link (Enhanced Multi-link, EML) mode. The preset condition set includes a first preset condition, and the first preset condition is that the non-AP MLD receives a radio frame on the first link, where a transmitting address of the radio frame is different from a transmitting address of a frame that initiates a current transmission opportunity (Transmission Opportunity, TXOP); the radio frame is not an uplink unicast control frame, or the radio frame is neither an uplink unicast control frame nor a frame used for reporting; and the uplink unicast control frame includes a block acknowledgment (Block ACK, BA) frame.

Correspondingly, the first AP sends the first frame on the first link.

It can be learned that in this solution, an existing SM PS rule is modified, to be specific, some uplink unicast control frames are excluded, to resolve a problem that the existing SM PS rule is not applicable to EMLSR and/or enhanced multi-link multi-radio (Enhanced Multi-link Multi-Radio, EMLMR). In other words, when an AP serves an EMLSR/EMLMR non-AP STA, EMLSR/EMLMR non-AP STA does not switch back to a listening operation because the EMLSR/EMLMR non-AP STA receives these frames. In addition, the rule enables the AP to serve other STAs while serving a STA in the EMLSR mode, to perform multi-user communication, thereby further improving communication efficiency.

According to a second aspect, this application provides a communication apparatus. The communication apparatus may be a non-AP MLD or a chip in the non-AP MLD, for example, a Wi-Fi chip. The communication apparatus includes: a transceiver unit, configured to: when performing a listening operation on a first link, receive a first frame sent by a first AP; and a switching unit, configured to: after the first frame sent by the first AP is received when the listening operation is performed on the first link, switch a spatial stream on each link to the first link to perform a frame exchange with the first AP, where the non-AP MLD supports an EML. The switching unit is further configured to: when the non-AP MLD meets any preset condition in a preset condition set, switch the spatial stream on the first link back to each link to perform the listening operation. The preset condition set includes a first preset condition, and the first preset condition is that the non-AP MLD receives a radio frame on the first link, where a transmitting address of the radio frame is different from a transmitting address of a frame that initiates a current TXOP; the radio frame is not an uplink unicast control frame, or the radio frame is neither an uplink unicast control frame nor a frame used for reporting; and the uplink unicast control frame includes a BA frame.

In a possible implementation of any one of the foregoing aspects, the non-AP MLD supports EMLSR, or the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

In a possible implementation of any one of the foregoing aspects, the uplink unicast control frame further includes a power saving-poll (Power Saving-Poll, PS-Poll) frame.

In a possible implementation of any one of the foregoing aspects, the frame used for reporting includes one or more of the following: a compressed beamforming (Compressed Beamforming/CQI) frame, a frame including a beamforming report (Beamforming Report, BFR), a frame including a buffer status report (Buffer Status Report, BSR), a frame including a bandwidth query report (Bandwidth Query Report, BQR), and a frame including a null data packet feedback report (NDP Feedback Report, NFR).

In a possible implementation of any one of the foregoing aspects, the preset condition set further includes a second preset condition, and the second preset condition is that the non-AP MLD receives a unicast frame on the first link, where a destination address of the unicast frame is another station, the unicast frame is not a unicast control frame, and the another station is a station other than a station that is in the non-AP MLD and that operates on (operates on) the first link.

Optionally, the unicast control frame includes a block acknowledgment request (Block ACK Request, BAR) frame.

Optionally, the unicast control frame includes one or more of the following: an acknowledgment (acknowledgment, ACK) frame, a beamforming report poll (Beamforming Report Poll, BFRP) frame, and a null data packet announcement (Null Data Packet Announcement, NDPA) frame.

Optionally, the unicast control frame further includes a unicast trigger frame. The unicast trigger frame includes one or more of the following: a multi-user (multi-user, MU) block acknowledgment request MU-BAR frame, a buffer status report poll (Buffer Status Report Poll, BSRP) frame, a beamforming report poll BFRP frame, a multi-user request to send (Multi-User request to send, MU-RTS) frame, a bandwidth query report poll (Bandwidth Query Report Poll, BQRP) frame, and a null data packet feedback report poll (NDP Feedback Report Poll, NFRP) frame.

It can be learned that in this solution, on the basis of an existing SM PS rule, some unicast control frames are excluded, to resolve a problem that the existing SM PS rule is not applicable to EMLSR and/or EMLMR.

In a possible implementation of any one of the foregoing aspects, the preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink orthogonal frequency division multiple access (Orthogonal Frequency Division Multiple Access, OFDMA)-based random access does not exist in the trigger frame.

Optionally, the trigger frame includes one or both of the following: an MU-RTS frame and a BSRP frame.

It can be learned that in this solution, a condition for switching back to the listening operation by the non-AP MLD is added from a perspective of the trigger frame, which helps improve the SM PS rule.

In a possible implementation of any one of the foregoing aspects, the preset condition set further includes one or more of the following preset conditions:

the non-AP MLD receives a frame of another basic service set on the first link;

the non-AP MLD receives a high efficiency multi-user physical layer protocol data unit (High Efficiency Multi-User PPDU, HE MU PPDU) on the first link, where a basic service set (basic service set, BSS) color (color) carried in the HE MU PPDU is the same as a BSS color of a BSS to which a station that is in the non-AP MLD and that operates on the first link belongs, the HE MU PPDU does not include a station identifier field of any resource unit (resource unit, RU) that identifies the station that is in the non-AP MLD and that operates on the first link as a recipient or one of recipients of the RU, and a value of a BSS color disabled field carried in an HE operation element most recently received by the non-AP MLD from the first AP is 0; and

a carrier sensing mechanism indicates that a channel corresponding to the first link is idle at a transmission (transmission, Tx) point coordination function interframe space (Point coordination function Interframe Space, PIFS) slot boundary (TxPIFS slot boundary).

According to a third aspect, this application provides a communication method. The method includes: A non-AP MLD receives a first frame from a first AP when performing a listening operation (Listening Operation) on a first link. The non-AP MLD switches (some or all of) spatial streams/antennas on each link (or another link) of the non-AP MLD to the first link to perform a frame exchange with the first AP. When determining that any preset condition in a preset condition set is met, the non-AP MLD switches some spatial streams/antennas on the first link back to each link (or the another link) to perform the listening operation. The non-AP MLD supports an EML mode. The preset condition set includes a second preset condition, and the second preset condition is that the non-AP MLD receives a unicast frame on the first link, where a destination address of the unicast frame is another station, the unicast frame is not a unicast control frame, and the another station is a station other than a station that is in the non-AP MLD and that operates on the first link.

Correspondingly, the first AP sends the first frame on the first link.

It can be learned that in this solution, an existing SM PS rule is modified, to be specific, some uplink unicast control frames are excluded, to resolve a problem that the existing SM PS rule is not applicable to EMLSR and/or EMLMR. In other words, when an AP serves an EMLSR/EMLMR non-AP STA, EMLSR/EMLMR non-AP STA does not switch back to a listening operation because the EMLSR/EMLMR non-AP STA receives these frames. In addition, the rule enables the AP to serve other STAs while serving a STA in the EMLSR mode, to perform multi-user communication, thereby further improving communication efficiency.

According to a fourth aspect, this application provides a communication apparatus. The communication apparatus may be a non-AP MLD or a chip in the non-AP MLD, for example, a Wi-Fi chip. The communication apparatus includes: a transceiver unit, configured to: when performing a listening operation on a first link, receive a first frame sent by a first AP; and a switching unit, configured to: after the first frame sent by the first AP is received when the listening operation is performed on the first link, switch a spatial stream on each link to the first link to perform a frame exchange with the first AP, where the non-AP MLD supports an EML. The switching unit is further configured to: when the non-AP MLD meets any preset condition in a preset condition set, switch the spatial stream on the first link back to each link to perform the listening operation. The preset condition set includes a second preset condition, and the second preset condition is that the non-AP MLD receives a unicast frame on the first link, where a destination address of the unicast frame is another station, the unicast frame is not a unicast control frame, and the another station is a station other than a station that is in the non-AP MLD and that operates on the first link.

In a possible implementation of the third aspect or the fourth aspect, the unicast control frame includes a BAR frame.

In a possible implementation of the third aspect or the fourth aspect, the unicast control frame includes one or more of the following: an ACK frame, a BFRP frame, and an NDPA frame.

In a possible implementation of the third aspect or the fourth aspect, the unicast control frame further includes a unicast trigger frame. The unicast trigger frame includes one or more of the following: an MU-BAR frame, a BSRP frame, a beamforming report poll BFRP frame, an MU-RTS frame, a BQRP frame, and an NFRP frame.

In a possible implementation of the third aspect or the fourth aspect, the non-AP MLD supports EMLSR, or the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

In a possible implementation of the third aspect or the fourth aspect, the preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink OFDMA-based random access does not exist in the trigger frame.

Optionally, the trigger frame includes one or both of the following: an MU-RTS frame and a BSRP frame.

In a possible implementation of the third aspect or the fourth aspect, the preset condition set further includes one or more of the following preset conditions:

the non-AP MLD receives a frame of another basic service set on the first link;

the non-AP MLD receives an HE MU PPDU on the first link, where a BSS color (color) carried in the HE MU PPDU is the same as a BSS color of a BSS to which a station that is in the non-AP MLD and that operates on the first link belongs, the HE MU PPDU does not include a station identifier field of any RU that identifies the station that is in the non-AP MLD and that operates on the first link as a recipient or one of recipients of the RU, and a value of a BSS color disabled field carried in an HE operation element most recently received by the non-AP MLD from the first AP is 0; and

a carrier sensing mechanism indicates that a channel corresponding to the first link is idle at a TxPIFS slot boundary (TxPIFS slot boundary).

According to a fifth aspect, this application provides a communication method. The method includes: A non-AP MLD receives a first frame from a first AP when performing a listening operation (Listening Operation) on a first link. The non-AP MLD switches (some or all of) spatial streams/antennas on each link (or another link) of the non-AP MLD to the first link to perform a frame exchange with the first AP. When determining that any preset condition in a preset condition set is met, the non-AP MLD switches some spatial streams/antennas on the first link back to each link (or the another link) to perform the listening operation. The non-AP MLD supports an EML mode. The preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink OFDMA-based random access does not exist in the trigger frame.

Correspondingly, the first AP sends the first frame on the first link.

It can be learned that in this solution, a condition for switching back to the listening operation by the non-AP MLD is added from a perspective of the trigger frame, which helps improve the SM PS rule.

According to a sixth aspect, this application provides a communication apparatus. The communication apparatus may be a non-AP MLD or a chip in the non-AP MLD, for example, a Wi-Fi chip. The communication apparatus includes: a transceiver unit, configured to: when performing a listening operation on a first link, receive a first frame sent by a first AP; and a switching unit, configured to: after the first frame sent by the first AP is received when the listening operation is performed on the first link, switch a spatial stream on each link to the first link to perform a frame exchange with the first AP, where the non-AP MLD supports an EML. The switching unit is further configured to: when the non-AP MLD meets any preset condition in a preset condition set, switch the spatial stream on the first link back to each link to perform the listening operation. The preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink OFDMA-based random access does not exist in the trigger frame.

In a possible implementation of the fifth aspect or the sixth aspect, the non-AP MLD supports EMLSR, or the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

In a possible implementation of the fifth aspect or the sixth aspect, the unicast control frame includes one or both of the following: an MU-RTS frame and a BSRP frame.

In a possible implementation of the fifth aspect or the sixth aspect, the preset condition set further includes one or more of the following preset conditions:

the non-AP MLD receives a frame of another basic service set on the first link;

the non-AP MLD receives an HE MU PPDU on the first link, where a BSS color (color) carried in the HE MU PPDU is the same as a BSS color of a BSS to which a station that is in the non-AP MLD and that operates on the first link belongs, the HE MU PPDU does not include a station identifier field of any RU that identifies the station that is in the non-AP MLD and that operates on the first link as a recipient or one of recipients of the RU, and a value of a BSS color disabled field carried in an HE operation element most recently received by the non-AP MLD from the first AP is 0; and

a carrier sensing mechanism indicates that a channel corresponding to the first link is idle at a TxPIFS slot boundary (TxPIFS slot boundary).

According to a seventh aspect, this application provides a communication method. The method includes: after a non-AP MLD successfully receives a first frame when performing a listening operation on a first link, and before end of a frame exchange between the non-AP MLD and a first AP associated with a first station in the non-AP MLD, the non-AP MLD receives a first-type physical layer protocol data unit (physical layer protocol data unit, PPDU) on the first link by using a plurality of spatial streams. When determining that any preset condition in a preset condition set is met, the non-AP MLD switches some spatial streams/antennas on the first link back to each link to perform a listening operation. The first-type PPDU is an MU PPDU, or a PPDU including a broadcast frame or a multicast frame. A receiving address carried in the broadcast frame is a broadcast address, and a receiving address carried in the multicast frame is a multicast address. The first-type PPDU carries indication information, and the indication information indicates that a station on the first link is used as a recipient. The first frame indicates the non-AP MLD to switch the spatial stream on each link to the first link for a frame exchange. The preset condition set includes a first preset condition, and the first preset condition is that the non-AP MLD receives a radio frame on the first link, where a transmitting address of the radio frame is different from a transmitting address of a frame that initiates a current TXOP; the radio frame is not an uplink unicast control frame, or the radio frame is neither an uplink unicast control frame nor a frame used for reporting; and the uplink unicast control frame includes a BA frame. The non-AP MLD supports an EML.

It can be learned that in this solution, both an AP and a station are restricted to use the first-type PPDU in a frame exchange process, and an SM PS rule is modified, for example, some exceptional frames are excluded from the existing SM PS rule, to resolve a problem that the existing SM PS rule is not applicable to EMLSR/EMLMR. In addition, the rule enables the AP to serve other STAs while serving a STA in the EMLSR mode, to perform multi-user communication, thereby further improving communication efficiency.

With reference to the seventh aspect, in a possible implementation, the first-type PPDU includes a triggering frame, and the triggering frame is used to schedule the non-AP MLD to send a trigger based physical layer protocol data unit (trigger based PPDU, TB PPDU). After the non-AP MLD receives the first-type PPDU on the first link by using the plurality of spatial streams, the method further includes: The non-AP MLD sends the TB PPDU on the first link by using the plurality of spatial streams.

It can be learned that in this solution, the triggering frame is carried in the first-type PPDU, so that the station replies to the AP by using a frame in a TB PPDU format, and the existing SM PS rule is adapted to the EMLSR or the EMLMR.

According to an eighth aspect, this application provides a communication apparatus. The communication apparatus may be a non-AP MLD or a chip in the non-AP MLD, for example, a Wi-Fi chip. The communication apparatus includes: a transceiver unit, configured to receive a first frame when performing a listening operation on a first link, where the transceiver unit is further configured to receive a first-type PPDU on the first link by using a plurality of spatial streams after successfully receiving the first frame when performing the listening operation on the first link, and before end of a frame exchange between the non-AP MLD and a first AP associated with a first station in the non-AP MLD, where the first-type PPDU is an MU PPDU, or a PPDU including a broadcast frame or a multicast frame; and a switching unit, configured to: when the non-AP MLD meets any preset condition in a preset condition set, switch a spatial stream on the first link back to each link to perform the listening operation. A receiving address carried in the broadcast frame is a broadcast address, and a receiving address carried in the multicast frame is a multicast address. The first-type PPDU carries indication information, and the indication information indicates that a station on the first link is used as a recipient. The first frame indicates the non-AP MLD to switch the spatial stream on each link to the first link for a frame exchange. The preset condition set includes a first preset condition, and the first preset condition is that the non-AP MLD receives a radio frame on the first link, where a transmitting address of the radio frame is different from a transmitting address of a frame that initiates a current TXOP; the radio frame is not an uplink unicast control frame, or the radio frame is neither an uplink unicast control frame nor a frame used for reporting; and the uplink unicast control frame includes a BA frame. The non-AP MLD supports an EML.

With reference to the seventh aspect, in a possible implementation, the first-type PPDU includes a triggering frame, and the triggering frame is used to schedule the non-AP MLD to send a TB PPDU. The transceiver unit is further configured to send the TB PPDU on the first link by using the plurality of spatial streams.

In a possible implementation of the seventh aspect or the eighth aspect, the non-AP MLD supports EMLSR, or the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

In a possible implementation of the seventh aspect or the eighth aspect, the unicast control frame further includes a PS-Poll frame.

In a possible implementation of the seventh aspect or the eighth aspect, the frame used for reporting includes one or more of the following: a compressed beamforming/CQI frame, a frame including a BFR, a frame including a BSR, a frame including a BQR, and a frame including an NFR.

In a possible implementation of the seventh aspect or the eighth aspect, the preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink OFDMA-based random access does not exist in the trigger frame.

Optionally, the trigger frame includes one or both of the following: an MU-RTS frame and a BSRP frame.

In a possible implementation of the seventh aspect or the eighth aspect, the preset condition set further includes one or more of the following preset conditions:

the non-AP MLD receives a unicast frame on the first link, where a destination address of the unicast frame is another station;

the non-AP MLD receives a frame of another basic service set on the first link;

the non-AP MLD receives an HE MU PPDU on the first link, where a BSS color (color) carried in the HE MU PPDU is the same as a BSS color of a BSS to which a station that is in the non-AP MLD and that operates on the first link belongs, the HE MU PPDU does not include a station identifier field of any RU that identifies the station that is in the non-AP MLD and that operates on the first link as a recipient or one of recipients of the RU, and a value of a BSS color disabled field carried in an HE operation element most recently received by the non-AP MLD from the first AP is 0; and

a carrier sensing mechanism indicates that a channel corresponding to the first link is idle at a TxPIFS slot boundary (TxPIFS slot boundary).

In a possible implementation of the seventh aspect or the eighth aspect, that the indication information indicates that a station on the first link is used as a recipient includes: the indication information indicates that the station on the first link is used as one of recipients. Optionally, the indication information is a station identifier.

According to a ninth aspect, this application provides a communication method. The method includes: After a first AP successfully sends a first frame on a first link and before end of frame exchanges with N stations associated with the first AP, the first AP uses first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; and the first-type PPDU carries indication information, and the indication information indicates that a station on the first link is used as a recipient.

It can be learned that in this solution, both an AP and a station are restricted to use the first-type PPDU in a frame exchange process, and an SM PS rule is modified, for example, some exceptional frames are excluded from the existing SM PS rule, to resolve a problem that the existing SM PS rule is not applicable to EMLSR/EMLMR. In addition, the rule enables the AP to serve other STAs while serving a STA in the EMLSR mode, to perform multi-user communication, thereby further improving communication efficiency.

According to a tenth aspect, this application provides a communication apparatus. The communication apparatus may be a first AP or a chip in the first AP, for example, a Wi-Fi chip. The communication apparatus includes: a first unit, configured to: after successfully sending a first frame on a first link and before end of frame exchanges with N stations associated with the first AP, use first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; and the first-type PPDU carries indication information, and the indication information indicates that a station on the first link is used as a recipient. It should be understood that the first unit is configured to implement a transceiver function, and the first unit may also be referred to as a transceiver unit.

Optionally, the communication apparatus may further include a processing unit, configured to generate the first-type PPDU.

In a possible implementation of the ninth aspect or the tenth aspect, if the non-AP MLD to which the at least one station belongs supports EMLSR, the first frame is an initial control frame. Alternatively, if the non-AP MLD to which the at least one station belongs supports EMLMR, the first frame is an initial frame.

In a possible implementation of the ninth aspect or the tenth aspect, the first-type PPDU includes a triggering frame, and the triggering frame is used to schedule a station to send a TB PPDU.

In a possible implementation of the ninth aspect or the tenth aspect, that the indication information indicates that a station on the first link is used as a recipient includes: the indication information indicates that the station on the first link is used as one of recipients. Optionally, the indication information is a station identifier.

According to an eleventh aspect, this application provides a communication method. The method includes: After a non-AP MLD receives, on a first link, a first frame sent by a first AP and switches a spatial stream/antenna on each link (or another link) to the first link, if the non-AP MLD determines that an exchange of the first frame fails, the non-AP MLD switches the spatial stream on the first link back to each link to perform a listening operation. The non-AP MLD supports an EML.

It can be learned that this solution provides a method for switching back to a listening operation after exchange of an initial frame/initial control frame fails. A condition that a station side determines an exchange failure is designed, so that the initial frame/initial control frame can be switched back to the listening operation in time after the exchange fails. This improves a working mechanism of EMLSR and/or EMLMR, and can further improve working efficiency and switching efficiency of the EMLSR and/or the EMLMR.

With reference to the eleventh aspect, in a possible implementation, the method further includes: If the non-AP MLD meets any preset condition in a preset condition set within a first duration starting from a moment at which the first frame is received, the non-AP MLD determines that the exchange of the first frame fails.

It can be learned that this solution provides the condition that the station side determines the exchange failure, so that the initial frame/initial control frame can be switched back to the listening operation in time after the exchange fails.

According to a twelfth aspect, this application provides a communication apparatus. The communication apparatus may be a non-AP MLD or a chip in the non-AP MLD, for example, a Wi-Fi chip. The communication apparatus includes: a transceiver unit, configured to receive, on a first link, a first frame sent by a first AP; and a switching unit, configured to switch a spatial stream on each link to the first link. The switching unit is further configured to: after the first frame sent by the first AP is received on the first link and the spatial stream on each link is switched to the first link, if the non-AP MLD determines that an exchange of the first frame fails, switch the spatial stream on the first link back to each link to perform a listening operation. The non-AP MLD supports an EML.

With reference to the twelfth aspect, in a possible implementation, the communication apparatus may further include a determining unit, configured to: when the non-AP MLD meets any preset condition in a preset condition set within a first duration starting from a moment at which the first frame is received, determine that the exchange of the first frame fails.

In a possible implementation of the eleventh aspect or the twelfth aspect, the non-AP MLD supports EMLSR, or the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

In a possible implementation of the eleventh aspect or the twelfth aspect, the preset condition set includes one or more of the following preset conditions:

a station that is in the non-AP MLD and that operates on the first link does not receive a PPDU within the first duration;
a first PPDU received within the first duration by the station that is in the non-AP MLD and that operates on the first link is a PPDU of another BSS;
the first PPDU received within the first duration by the station that is in the non-AP MLD and that operates on the first link is an uplink PPDU;
the first PPDU received within the first duration by the station that is in the non-AP MLD and that operates on the first link is a downlink PPDU in a BSS to which the station that is in the non-AP MLD and that operates on the first link belongs, and a recipient indicated by a station identifier field in the downlink PPDU is not the station that is in the non-AP MLD and that operates on the first link; and
the first PPDU received within the first duration by the station that is in the non-AP MLD and that operates on the first link includes a frame that has a unicast address, and a receiving address of the frame is not the station that is in the non-AP MLD and that operates on the first link; or the first PPDU includes a trigger frame, and an association identifier in any user information field in the trigger frame is inconsistent with an association identifier of the station that is in the non-AP MLD and that operates on the first link; or an association identifier indicating uplink OFDMA-based random access does not exist in the trigger frame.

It should be understood that, once any preset condition in the preset condition set is determined within the first duration, an operation of switching the spatial stream/an antenna on the first link back to each link to perform the listening operation may be immediately performed, in other words, switching does not need to be performed at a moment $\Delta T$.

It can be learned that in this solution, a condition that a station side determines an exchange failure is used, and when any one of the conditions is met, a switching is performed.

In a possible implementation of the eleventh aspect or the twelfth aspect, the first duration is determined based on a minimum time value, and the minimum time value is one of the following:

$$\Delta T_{min} = t_{cts} + 2t_{SIFS} + t_{preamble} + t_{MPDU};$$

$$\Delta T_{min} = t_{cts} + 2t_{SIFS} + t_{preamble}; \text{ and}$$

$$\Delta T_{min} = t_{cts} + t_{SIFS} + t_{PIFS} + t_{aSlotTime},$$

where

$\Delta T$ represents the first duration, $\Delta T_{min}$ represents a minimum value of the first duration, $t_{cts}$ represents a transmission duration of a clear to send (clear to send, CTS) frame, $t_{SIFS}$ represents a duration of a short interframe space, $T_{preamble}$ represents a receiving duration of a preamble, $t_{MPDU}$ represents a transmission duration of a medium access control (medium access control, MAC) protocol data unit (MAC Protocol Data Unit, MPDU), $t_{PIFS}$ represents a duration of a point coordination function interframe space PIFS, and $t_{aSlotTime}$ represents a duration of one slot.

According to a thirteenth aspect, this application provides a communication method, which can provide a basis for the non-AP MLD to determine whether an exchange of the first frame fails in the twelfth aspect. The method includes: A first AP sends the first frame on a first link, where the first frame indicates the non-AP MLD to switch a spatial stream on each link to the first link for a frame exchange. After receiving a response frame (for example, an ACK frame) of the first frame, the first AP sends a PPDU, where the PPDU includes a unicast frame, and a receiving address of the unicast frame indicates a station that is in the non-AP MLD and that operates on the first link; or the PPDU includes a trigger frame, and the trigger frame is used to schedule a station that is in the non-AP MLD and that operates on the first link to perform uplink transmission. In addition, the first AP cannot send the first frame to the non-AP MLD on a second link within a time range after sending the first frame. The second link herein is a link in the non-AP MLD other than the first link. The time range herein is a sum of a duration (SwitchDelay) in which the non-AP MLD switches the spatial stream on the first link back to each link to perform a listening operation and first duration (denoted as $\Delta T$).

It can be learned that in this solution, behavior of an AP is restricted, and a first PPDU sent by the AP after the AP receives a response frame of an initial control frame/initial frame needs to meet a requirement. In this way, if a station side does not receive a corresponding PPDU within the first duration, it indicates that an exchange of the first frame fails. In this way, a basis is laid for the station side to determine whether the exchange of the first frame fails.

According to a fourteenth aspect, this application provides a communication apparatus. The communication apparatus may be a first AP or a chip in the first AP, for example, a Wi-Fi chip. The communication apparatus includes: a first unit, configured to send a first frame on a first link, where the first frame indicates a non-AP MLD to switch a spatial stream on each link to the first link for a frame exchange. The first unit is further configured to send a PPDU after receiving a response frame (for example, an ACK frame) of the first frame, where the PPDU includes a unicast frame, and a receiving address of the unicast frame indicates a station that is in the non-AP MLD and that operates on the first link; or the PPDU includes a trigger frame, and the trigger frame is used to schedule a station that is in the non-AP MLD and that operates on the first link to perform uplink transmission. In addition, the first AP cannot send the first frame to the non-AP MLD on a second link within a time range after sending the first frame. The second link herein is a link in the non-AP MLD other than the first link. The time range herein is a sum of a duration (SwitchDelay) in which the non-AP MLD switches the spatial stream on the first link back to each link to perform a listening operation and first duration (denoted as $\Delta T$).

Optionally, the communication apparatus further includes a processing unit, configured to generate the first frame and the PPDU.

In a possible implementation of the thirteenth aspect or the fourteenth aspect, the first duration ($\Delta T$) may be specified in a standard, or broadcast by the AP in a beacon frame or the like. The first duration may be greater than or equal to a time minimum value. Herein, the time minimum value (namely, a minimum value of the first duration) may be one of the following:

$$\Delta T_{min} = t_{cts} + 2t_{SIFS} + t_{preamble} + t_{MPDU};$$

$$\Delta T_{min} = t_{cts} + 2t_{SIFS} + t_{preamble};$$

and

$$\Delta T_{min} = t_{cts} + t_{SIFS} + t_{PIFS} + t_{aSlotTime},$$

where

$\Delta T$ represents the first duration, $\Delta T_{min}$ represents the minimum value of the first duration (namely, the minimum time value), $t_{cts}$ represents a transmission duration of a CTS frame, $t_{SIFS}$ represents a duration of a short interframe space, $T_{preamble}$ represents a receiving duration of a preamble, $t_{MPDU}$ represents a transmission duration of an MPDU, $t_{PIFS}$ represents a duration of a PIFS, and $t_{aSlotTime}$ represents a duration of one slot (slot).

According to a fifteenth aspect, this application provides a communication method. The method includes: A first AP sends a first frame on a first link, where the first frame carries one or more second durations, and the first frame may further carry a duration (duration) field. If the first frame carries one second duration, the second duration may be a duration individually allocated to a first non-AP MLD, and a start moment of the second duration is an end moment at which the first non-AP MLD receives the first frame. Alternatively, the second duration may be a total duration allocated by the first AP to all non-AP MLDs (including the first non-AP MLD) that support EMLSR/EMLMR and that are scheduled by the first AP. In this case, a start moment of the second duration is an end moment at which each non-AP MLD receives the first frame. If the first frame carries a plurality of second durations, and the plurality of second durations include a second duration allocated to a first non-AP MLD, a start moment of the second duration allocated to the first non-AP MLD is a start moment at which the first non-AP MLD receives the first frame. The first non-AP MLD supports EMLSR or EMLMR.

Optionally, the first frame indicates the non-AP MLDs (including the first non-AP MLD) to switch a spatial stream on each link to the first link to perform a frame exchange with the first AP. The second duration is used to enable the non-AP MLDs (including the first non-AP MLD) to switch the spatial stream on the first link back to each link to perform a listening operation after the second duration.

It can be learned that in this solution, the second duration of the first non-AP MLD is carried in the first frame, so that the first non-AP MLD switches the spatial stream on the first link back to each link to perform the listening operation after the second duration. Therefore, a working mechanism of the EMLSR and/or the EMLMR is simplified, and logic running complexity and implementation complexity can be reduced.

According to a sixteenth aspect, this application provides a communication apparatus. The communication apparatus may be a first AP or a chip in the first AP, for example, a Wi-Fi chip. The communication apparatus includes: a first unit, configured to send a first frame on a first link, where the first frame carries one or more second durations, and the first frame may further carry a duration field. If the first frame carries one second duration, the second duration may be a duration individually allocated to a first non-AP MLD, and a start moment of the second duration is an end moment at which the first non-AP MLD receives the first frame. Alternatively, the second duration may be a total duration allocated by the first AP to all non-AP MLDs (including the first non-AP MLD) that support EMLSR/EMLMR and that are scheduled by the first AP. In this case, a start moment of the second duration is an end moment at which each non-AP MLD receives the first frame. If the first frame carries a plurality of second durations, and the plurality of second durations include a second duration allocated to a first non-AP MLD, a start moment of the second duration allocated to the first non-AP MLD is a start moment at which the first non-AP MLD receives the first frame. The first non-AP MLD supports EMLSR or EMLMR.

Optionally, the communication apparatus further includes a processing unit, configured to generate the first frame.

Optionally, the first frame indicates the non-AP MLDs (including the first non-AP MLD) to switch a spatial stream on each link to the first link to perform a frame exchange with the first AP. The second duration is used to enable the non-AP MLDs (including the first non-AP MLD) to switch the spatial stream on the first link back to each link to perform a listening operation after the second duration.

In a possible implementation of the fifteenth aspect or the sixteenth aspect, the second duration is located in a common information field or a user information field of the first frame.

In a possible implementation of the fifteenth aspect or the sixteenth aspect, the second duration is less than or equal to a TXOP duration of the first AP on the first link.

According to a seventeenth aspect, this application provides a communication method. The method includes: A first non-AP MLD receives, on a first link, a first frame sent by a first AP, where the first frame carries a second duration, a start moment of the second duration is an end moment at which the first non-AP MLD receives the first frame, and the first frame indicates the first non-AP MLD to switch a spatial stream on each link to the first link to perform a frame exchange with the first AP. After the second duration, the first non-AP MLD switches the spatial stream on the first link back to each link to perform a listening operation. The first non-AP MLD supports an EML.

It can be learned that in this solution, a frame exchange duration determined by an AP is carried in an initial control frame or an initial frame, and after the frame exchange duration, a listening operation is directly switched back to. Therefore, a working mechanism of EMLSR and/or EMLMR is simplified, and logic running complexity and implementation complexity can be reduced.

According to an eighteenth aspect, this application provides a communication apparatus. The communication apparatus is a first non-AP MLD or a chip in the first non-AP MLD, for example, a Wi-Fi chip. The communication apparatus includes: a transceiver unit, configured to receive, on a first link, a first frame sent by a first AP, where the first frame carries a second duration, a start moment of the second duration is an end moment at which the first non-AP MLD receives the first frame, the first non-AP MLD supports an EML, and the first frame indicates the first non-AP MLD to switch a spatial stream on each link to the first link to perform a frame exchange with the first AP; and a switching unit, configured to: after the second duration, switch the spatial stream on the first link back to each link to perform a listening operation.

It should be understood that although the first frame carries one or more second durations, for a non-AP MLD, only a second duration of the non-AP MLD is concerned. Therefore, on a station side, the first non-AP MLD is used as an example for description in this application. The second duration in the seventeenth aspect and the eighteenth aspect of this application may specifically refer to a second duration of the first non-AP MLD. In other words, the second duration in the seventeenth aspect and the eighteenth aspect of this application is a total duration allocated by the first AP to all non-AP MLDs (including the first non-AP MLD) that support EMLSR/EMLMR and that are scheduled by the first AP, or a duration individually allocated by the first AP to the first non-AP MLD.

In a possible implementation of the seventeenth aspect or the eighteenth aspect, the first non-AP MLD supports the EMLSR, or the first non-AP MLD supports the EMLMR. Further, the first non-AP MLD supports multi-user EMLSR/EMLMR, and the first non-AP MLD may further support single-user EMLSR/EMLMR. If the first non-AP MLD supports the EMLSR, the first frame is an initial control frame. If the first non-AP MLD supports the EMLMR, the first frame is an initial frame.

In a possible implementation of the seventeenth aspect or the eighteenth aspect, the second duration includes a duration in which the first AP performs a frame exchange with the first non-AP MLD. Alternatively, the second duration includes a duration in which the first AP performs a frame exchange with the first non-AP MLD, and a duration in which the first non-AP MLD switches the spatial stream on each link to the first link.

It can be learned that in this solution, an AP can allocate different durations to different STAs, and flexibility is higher.

In a possible implementation of the seventeenth aspect or the eighteenth aspect, the second duration includes a duration in which the first AP performs frame exchanges with a plurality of non-AP MLDs. Alternatively, the second duration includes a duration in which the first AP performs frame exchanges with a plurality of non-AP MLDs, and a duration in which each of the plurality of non-AP MLDs switches a spatial stream on another link to the first link. The plurality of non-AP MLDs include the first non-AP MLD.

It can be learned that in this solution, a working mechanism of the EMLSR/EMLMR can be further simplified by using a fixed duration, and implementation complexity is lower.

In a possible implementation of the seventeenth aspect or the eighteenth aspect, the second duration is located in a common information field or a user information field of the first frame.

In a possible implementation of the seventeenth aspect or the eighteenth aspect, the second duration is less than or equal to a TXOP duration of the first AP on the first link.

According to a nineteenth aspect, this application provides a communication method. The method includes: A non-AP MLD receives, on a first link, a first frame sent by a first AP, starts timing, and switches a spatial stream/antenna on each link (or another link) to the first link to perform a frame exchange with the first AP. If a fourth frame is received in a process in which the non-AP MLD performs a frame exchange with the first AP, and a TXOP end time indicated by a duration field in the fourth frame is later than a TXOP end time indicated by a duration field in the first frame, the non-AP MLD updates the TXOP end time indicated by the duration field in the fourth frame by using an end time of the timing. When timing reaches 0, the non-AP MLD switches some spatial streams/antennas on the first link back to each link to perform a listening operation. The non-AP MLD supports an EML.

Correspondingly, the first AP sends the first frame on the first link, the fourth frame is sent in the process in which the non-AP MLD performs a frame exchange with the first AP, and the TXOP end time indicated by the duration field in the fourth frame is later than the TXOP end time indicated by the duration field in the first frame.

It can be learned that in this solution, a plurality of stations (a plurality of stations that operate on a same link as an AP and belong to different non-AP MLDs) are restricted to jointly maintain one timer (timer). When any station receives TXOP end time update information in the frame exchange process, an end time of the timer is updated to a latest TXOP end time. When the timer reaches 0, a listening operation is switched back to. Therefore, in this embodiment of this application, each station does not need to maintain a timer of the station. Therefore, a working mechanism of EMLSR and/or EMLMR is simplified, and logic running complexity and implementation complexity can be reduced. In addition, in this embodiment of this application, an initial control frame or an initial frame does not need to carry an additional specified duration, so that the non-AP MLD completes a frame exchange with the AP within this duration, thereby reducing signaling overheads.

According to a twentieth aspect, this application provides a communication apparatus. The communication apparatus is a non-AP MLD or a chip in the non-AP MLD, for example, a Wi-Fi chip. The communication apparatus includes: a transceiver unit, configured to receive, on a first link, a first frame sent by a first AP; a timing unit, configured to perform timing; a switching unit, configured to switch a spatial stream/antenna on each link (or another link) to the first link to perform a frame exchange with the first AP; and an updating unit, configured to: when a fourth frame is received in a process in which the non-AP MLD performs a frame exchange with the first AP, and a TXOP end time indicated by a duration field in the fourth frame is later than a TXOP end time indicated by a duration field in the first frame, update the TXOP end time indicated by the duration field in the fourth frame by using an end time of timing. The switching unit is further configured to: when timing reaches 0, switch some spatial streams/antennas on the first link back to each link to perform a listening operation. The non-AP MLD supports an EML.

According to a twenty-first aspect, this application provides a communication method. The method includes: A first non-AP MLD receives, on a first link, a first frame sent by a first AP, and switches a spatial stream on each link to the first link to perform a frame exchange with the first AP. The first non-AP MLD receives a second frame on the first link by using a plurality of spatial streams, where the second frame includes a more data subfield. If a value of the more data (more data) subfield in the second frame is 0, the first non-AP MLD switches the spatial stream on the first link back to each link to perform a listening operation. The first non-AP MLD supports an EML.

Correspondingly, the first AP sends the first frame on the first link, where the first frame indicates the first non-AP MLD to switch the spatial stream on each link to the first link to perform a frame exchange with the first AP. The first AP sends the second frame on the first link, where the second frame includes the more data subfield.

It can be learned that in this solution, behavior of a non-AP MLD is restricted, to simplify a working mechanism of EMLSR/EMLMR, and a signaling indication of an existing more data subfield may be completely reused, without changing a value and a meaning of the more data subfield.

With reference to the twenty-first aspect, in a possible implementation, the first frame carries second duration, and a start moment of the second duration is an end moment at which the first non-AP MLD receives the first frame. After the first non-AP MLD receives, on the first link, the first frame sent by the first AP, the method further includes: The first non-AP MLD starts timing. If timing reaches the second duration, the first non-AP MLD switches the spatial stream on the first link back to each link to perform the listening operation.

It should be understood that although the first frame carries one or more second durations, for a non-AP MLD, only a second duration of the non-AP MLD is concerned. Therefore, on a station side, the first non-AP MLD is used as an example for description in this application. The second duration in the twenty-first aspect and a twenty-second aspect of this application may specifically refer to a second duration of the first non-AP MLD. In other words, the second duration in the twenty-first aspect and the twenty-second aspect of this application is a total duration allocated by the first AP to all non-AP MLDs (including the first non-AP MLD) that support the EMLSR/EMLMR and that are scheduled by the first AP, or a duration individually allocated by the first AP to the first non-AP MLD.

According to a twenty-second aspect, this application provides a communication apparatus. The communication apparatus is a first non-AP MLD or a chip in the first non-AP MLD, for example, a Wi-Fi chip. The communication apparatus includes: a transceiver unit, configured to receive, on a first link, a first frame sent by a first AP; and a switching unit, configured to switch a spatial stream on each link to the first link to perform a frame exchange with the first AP, where the first non-AP MLD supports an EML. The transceiver unit is further configured to receive a second frame on the first link by using a plurality of spatial streams, where the second frame includes a more data subfield. The switching unit is further configured to: when a value of the more data subfield in the second frame is 0, switch the spatial stream on the first link back to each link to perform a listening operation.

With reference to the twenty-second aspect, in a possible implementation, the first frame carries second duration, and a start moment of the second duration is an end moment at which the first non-AP MLD receives the first frame. The communication apparatus further includes a timing unit, configured to start timing after the first frame sent by the first AP is received on the first link. The switching unit is further configured to: when the timing reaches the second duration, switch the spatial stream on the first link back to each link to perform the listening operation.

In a possible implementation of the twenty-first aspect or the twenty-second aspect, when the value of the more data subfield is 0, it indicates that the first non-AP MLD switches the spatial stream on the first link back to each link to perform the listening operation. Optionally, when the value of the more data subfield is 0, it indicates that the first non-AP MLD keeps receiving on the first link by using the plurality of spatial streams.

In a possible implementation of the twenty-first aspect or the twenty-second aspect, the first non-AP MLD supports EMLSR, or the first non-AP MLD supports EMLMR. Further, the first non-AP MLD supports multi-user EMLSR/EMLMR, and the first non-AP MLD may further support single-user EMLSR/EMLMR. If the first non-AP MLD supports the EMLSR, the first frame is an initial control frame. If the first non-AP MLD supports the EMLMR, the first frame is an initial frame.

In a possible implementation of the twenty-first aspect or the twenty-second aspect, the second duration includes a duration in which the first AP performs a frame exchange with the first non-AP MLD. Alternatively, the second duration includes a duration in which the first AP performs a frame exchange with the first non-AP MLD, and a duration in which the first non-AP MLD switches the spatial stream on each link to the first link.

In a possible implementation of the twenty-first aspect or the twenty-second aspect, the second duration includes a duration in which the first AP performs frame exchanges with a plurality of non-AP MLDs. Alternatively, the second duration includes a duration in which the first AP performs frame exchanges with a plurality of non-AP MLDs, and a duration in which each of the plurality of non-AP MLDs switches a spatial stream on another link to the first link. The plurality of non-AP MLDs include the first non-AP MLD.

In a possible implementation of the twenty-first aspect or the twenty-second aspect, the second duration is located in a common information field or a user information field of the first frame.

In a possible implementation of the twenty-first aspect or the twenty-second aspect, the second duration is less than or equal to a TXOP duration of the first AP on the first link.

According to a twenty-third aspect, this application provides a communication method. The method includes: A first AP sends a first frame on a first link, where the first frame indicates a first non-AP MLD to switch a spatial stream on each link to the first link to perform a frame exchange with the first AP. The first AP sends a second frame on the first link, where the second frame includes a more data subfield. When a value of the more data subfield is 0, it indicates that the first non-AP MLD switches the spatial stream on the first link back to each link to perform a listening operation.

It can be learned that in this solution, a new meaning (which may be an implicit indication) is added to the more data subfield, to simplify a working mechanism of EMLSR/EMLMR. In addition, the meaning is clear and clear, which facilitates parsing on a station side.

According to a twenty-fourth aspect, this application provides a communication apparatus. The communication apparatus is a first AP or a chip in the first AP, for example, a Wi-Fi chip. The communication apparatus includes: a first unit, configured to send a first frame on a first link, where the first frame indicates a first non-AP MLD to switch a spatial stream on each link to the first link to perform a frame exchange with the first AP. The first unit is further configured to send a second frame on the first link, where the second frame includes a more data subfield. When a value of the more data subfield is 0, it indicates that the first non-AP MLD switches the spatial stream on the first link back to each link to perform a listening operation.

Optionally, the communication apparatus further includes a processing unit, configured to generate the first frame and the second frame.

In a possible implementation of the twenty-third aspect or the twenty-fourth aspect, the first frame carries second duration, and a start moment of the second duration is an end moment at which the first non-AP MLD receives the first frame. The second duration herein specifically refers to a second duration of the first non-AP MLD.

In a possible implementation of the twenty-third aspect or the twenty-fourth aspect, the second duration includes a duration in which the first AP performs a frame exchange with the first non-AP MLD. Alternatively, the second duration includes a duration in which the first AP performs a frame exchange with the first non-AP MLD, and a duration in which the first non-AP MLD switches the spatial stream on each link to the first link.

In a possible implementation of the twenty-third aspect or the twenty-fourth aspect, the second duration includes a duration in which the first AP performs frame exchanges with a plurality of non-AP MLDs. Alternatively, the second duration includes a duration in which the first AP performs frame exchanges with a plurality of non-AP MLDs, and a duration in which each of the plurality of non-AP MLDs switches a spatial stream on another link to the first link. The plurality of non-AP MLDs include the first non-AP MLD.

In a possible implementation of the twenty-third aspect or the twenty-fourth aspect, the second duration is located in a common information field or a user information field of the first frame.

In a possible implementation of the twenty-third aspect or the twenty-fourth aspect, the second duration is less than or equal to a TXOP duration of the first AP on the first link.

In a possible implementation of the twenty-third aspect or the twenty-fourth aspect, the first non-AP MLD supports EMLSR, or the first non-AP MLD supports EMLMR. Further, the first non-AP MLD supports multi-user EMLSR/EMLMR, and the first non-AP MLD may further support single-user EMLSR/EMLMR. If the first non-AP MLD supports the EMLSR, the first frame is an initial control frame. If the first non-AP MLD supports the EMLMR, the first frame is an initial frame.

According to a twenty-fifth aspect, this application provides a communication method. The method includes: A first non-AP MLD receives, on a first link, a first frame sent by a first AP, and switches a spatial stream on each link to the first link to perform a frame exchange with the first AP. The first non-AP MLD receives a third frame on the first link, where the third frame includes an end of service period (End of Service Period, EOSP) subfield, and the EOSP subfield is set to 1. The first non-AP MLD switches the spatial stream on the first link back to each link to perform a listening operation.

Correspondingly, the first AP sends the first frame on the first link, where the first frame indicates the first non-AP MLD to switch the spatial stream on each link to the first link to perform a frame exchange with the first AP. The first AP sends the third frame on the first link, where the third frame includes the EOSP subfield, and the EOSP subfield is set to 1.

It can be learned that in this solution, switching of a non-AP MLD is controlled by using an EOSP subfield sent by an AP, and a station in the non-AP MLD is not required to maintain a timer, thereby simplifying an operation on a station side. In addition, in this implementation, a signaling indication of an existing EOSP subfield may be completely reused, without changing a value and a meaning of the EOSP subfield.

With reference to the twenty-fifth aspect, in a possible implementation, the first frame carries second duration, and a start moment of the second duration is an end moment at which the first non-AP MLD receives the first frame. After the first non-AP MLD receives, on the first link, the first frame sent by the first AP, the method further includes: The first non-AP MLD starts timing. If timing reaches the second duration, the first non-AP MLD switches the spatial stream on the first link back to each link to perform the listening operation.

According to a twenty-sixth aspect, this application provides a communication apparatus. The communication apparatus is a first non-AP MLD or a chip in the first non-AP MLD, for example, a Wi-Fi chip. The communication apparatus includes: a transceiver unit, configured to receive, on a first link, a first frame sent by a first AP; and a switching unit, configured to switch a spatial stream on each link to the first link to perform a frame exchange with the first AP. The transceiver unit is further configured to receive a third frame on the first link, where the third frame includes an end of service period (End of Service Period, EOSP) subfield, and the EOSP subfield is set to 1. The switching unit is further configured to switch the spatial stream on the first link back to each link to perform a listening operation.

With reference to the twenty-sixth aspect, in a possible implementation, the first frame carries second duration, and a start moment of the second duration is an end moment at which the first non-AP MLD receives the first frame. The communication apparatus further includes a timing unit, configured to start timing after the first frame sent by the first AP is received on the first link. The switching unit is further configured to: when the timing reaches the second duration, switch the spatial stream on the first link back to each link to perform the listening operation.

In a possible implementation of the twenty-fifth aspect or the twenty-sixth aspect, the second frame is a quality of service data frame or a quality of service null frame.

In a possible implementation of the twenty-fifth aspect or the twenty-sixth aspect, when the value of the EOSP subfield is 1, it indicates that the first non-AP MLD switches the spatial stream on the first link back to each link to perform the listening operation. Optionally, when the EOSP subfield is set to 0, it indicates that the first non-AP MLD keeps receiving on the first link by using a plurality of spatial streams.

In a possible implementation of the twenty-fifth aspect or the twenty-sixth aspect, the first non-AP MLD supports EMLSR, or the first non-AP MLD supports EMLMR. Further, the first non-AP MLD supports multi-user EMLSR/EMLMR, and the first non-AP MLD may further support single-user EMLSR/EMLMR. If the first non-AP MLD supports the EMLSR, the first frame is an initial control frame. If the first non-AP MLD supports the EMLMR, the first frame is an initial frame.

In a possible implementation of the twenty-fifth aspect or the twenty-sixth aspect, the second duration includes a duration in which the first AP performs a frame exchange with the first non-AP MLD. Alternatively, the second duration includes a duration in which the first AP performs a frame exchange with the first non-AP MLD, and a duration in which the first non-AP MLD switches the spatial stream on each link to the first link.

In a possible implementation of the twenty-fifth aspect or the twenty-sixth aspect, the second duration includes a duration in which the first AP performs frame exchanges with a plurality of non-AP MLDs. Alternatively, the second duration includes a duration in which the first AP performs frame exchanges with a plurality of non-AP MLDs, and a duration in which each of the plurality of non-AP MLDs switches a spatial stream on another link to the first link. The plurality of non-AP MLDs include the first non-AP MLD.

In a possible implementation of the twenty-fifth aspect or the twenty-sixth aspect, the second duration is located in a common information field or a user information field of the first frame.

In a possible implementation of the twenty-fifth aspect or the twenty-sixth aspect, the second duration is less than or equal to a TXOP duration of the first AP on the first link.

According to a twenty-seventh aspect, this application provides a communication method. The method includes: A first AP sends a first frame on a first link, where the first frame indicates a first non-AP MLD to switch a spatial stream on each link to the first link to perform a frame exchange with the first AP. The first AP sends a third frame on the first link, where the third frame includes an EOSP subfield. When the EOSP subfield is set to 1, it indicates that the first non-AP MLD switches the spatial stream on the first link back to each link to perform a listening operation.

According to a twenty-eighth aspect, this application provides a communication apparatus. The communication apparatus is a first AP or a chip in the first AP, for example, a Wi-Fi chip. The communication apparatus includes: a first unit, configured to send a first frame on a first link, where the first frame indicates a first non-AP MLD to switch a spatial stream on each link to the first link to perform a frame exchange with the first AP. The first unit is further configured to send a third frame on the first link, where the third frame includes an EOSP subfield. When the EOSP subfield is set to 1, it indicates that the first non-AP MLD switches the spatial stream on the first link back to each link to perform a listening operation.

Optionally, the communication apparatus further includes a processing unit, configured to generate the first frame and the third frame.

In a possible implementation of the twenty-seventh aspect or the twenty-eighth aspect, the second frame is a quality of service data frame or a quality of service null frame.

In a possible implementation of the twenty-seventh aspect or the twenty-eighth aspect, the first frame carries second duration, and a start moment of the second duration is an end moment at which the first non-AP MLD receives the first frame. The second duration herein specifically refers to a second duration of the first non-AP MLD.

In a possible implementation of the twenty-seventh aspect or the twenty-eighth aspect, the second duration includes a duration in which the first AP performs a frame exchange with the first non-AP MLD. Alternatively, the second duration includes a duration in which the first AP performs a frame exchange with the first non-AP MLD, and a duration in which the first non-AP MLD switches the spatial stream on each link to the first link.

In a possible implementation of the twenty-seventh aspect or the twenty-eighth aspect, the second duration includes a duration in which the first AP performs frame exchanges with a plurality of non-AP MLDs. Alternatively, the second duration includes a duration in which the first AP performs frame exchanges with a plurality of non-AP MLDs, and a duration in which each of the plurality of non-AP MLDs switches a spatial stream on another link to the first link. The plurality of non-AP MLDs include the first non-AP MLD.

In a possible implementation of the twenty-seventh aspect or the twenty-eighth aspect, the second duration is located in a common information field or a user information field of the first frame.

In a possible implementation of the twenty-seventh aspect or the twenty-eighth aspect, the second duration is less than or equal to a TXOP duration of the first AP on the first link.

In a possible implementation of the twenty-seventh aspect or the twenty-eighth aspect, the first non-AP MLD supports EMLSR, or the first non-AP MLD supports EMLMR. Further, the first non-AP MLD supports multi-user EMLSR/EMLMR, and the first non-AP MLD may further support single-user EMLSR/EMLMR. If the first non-AP MLD supports the EMLSR, the first frame is an initial control frame. If the first non-AP MLD supports the EMLMR, the first frame is an initial frame.

According to a twenty-ninth aspect, this application provides a communication apparatus, including a processor and a communication interface. The communication interface is configured to send/receive information or a frame, and the processor is configured to communicate with another apparatus through the communication interface, so that the communication apparatus performs the communication method in any one of the foregoing aspects.

According to a thirtieth aspect, this application provides an apparatus. The apparatus is implemented in a product form of a chip, and includes an input/output interface and a processing circuit. The input/output interface is configured to receive/send information or a frame, and the processing circuit is configured to execute program instructions, so that the apparatus performs the communication method in any one of the foregoing aspects.

According to a thirty-first aspect, this application provides a computer-readable storage medium, where the computer-readable storage medium stores program instructions. When the program instructions are run on a computer, the computer is enabled to perform the communication method according to any one of the foregoing aspects.

According to a thirty-second aspect, this application provides a computer program product including program instructions. When the computer program product runs on a computer, the computer is enabled to perform the communication method according to any one of the foregoing aspects.

According to embodiments of this application. SM PS and EMLSR may be combined for communication, to resolve the problem that end of a frame exchange is defined by directly reusing the existing SM PS rule is not applicable to the EMLSR, and further enable the AP to serve the other STAs while serving the STA in the EMLSR mode, to perform multi-user communication, thereby further improving communication efficiency.

## BRIEF DESCRIPTION OF DRAWINGS

To describe technical solutions in embodiments of this application more clearly, the following briefly describes accompanying drawings used for describing embodiments.

FIG. 1 is a schematic diagram of an architecture of a wireless communication system according to an embodiment of this application;

FIG. 2a is a schematic diagram of a structure of a multi-link device according to an embodiment of this application;

FIG. 2b is a schematic diagram of another structure of a multi-link device according to an embodiment of this application;

FIG. 3 is a schematic diagram of multi-link communication according to an embodiment of this application;

FIG. 4 is a schematic diagram of EMLSR;

FIG. 5 is a schematic diagram of a working mechanism of EMLSR;

FIG. 6 is a schematic diagram of directly reusing an SM PS rule in EMLSR;

FIG. 7 is a first schematic flowchart of a communication method according to an embodiment of this application;

FIG. 8 is a second schematic flowchart of a communication method according to an embodiment of this application;

FIG. 9 is a third schematic flowchart of a communication method according to an embodiment of this application;

FIG. 10 is a fourth schematic flowchart of a communication method according to an embodiment of this application;

FIG. 11a is a first schematic diagram of a preset condition according to an embodiment of this application;

FIG. 11b is a second schematic diagram of a preset condition according to an embodiment of this application;

FIG. 11c is a third schematic diagram of a preset condition according to an embodiment of this application;

FIG. 11d is a fourth schematic diagram of a preset condition according to an embodiment of this application;

FIG. 12 is a fifth schematic flowchart of a communication method according to an embodiment of this application;

FIG. 13 is a schematic diagram of an exchange between an AP and a non-AP MLD that supports EMLSR according to an embodiment of this application;

FIG. 14 is another schematic diagram of an exchange between an AP and a non-AP MLD that supports EMLSR according to an embodiment of this application;

FIG. 15 is a sixth schematic flowchart of a communication method according to an embodiment of this application;

FIG. 16 is a schematic diagram of working of EMLSR based on a TXOP duration according to an embodiment of this application;

FIG. 17 is a seventh schematic flowchart of a communication method according to an embodiment of this application;

FIG. 18 is a schematic diagram of working of EMLSR based on a more data subfield according to an embodiment of this application;

FIG. 19 is a schematic diagram of working of EMLSR based on a combination of a more data subfield and a duration according to an embodiment of this application;

FIG. 20 is an eighth schematic flowchart of a communication method according to an embodiment of this application;

FIG. 21 is a schematic flowchart of an information exchange method according to an embodiment of this application;

FIG. 22 is another schematic flowchart of an information exchange method according to an embodiment of this application;

FIG. 23 is a ninth schematic flowchart of a communication method according to an embodiment of this application;

FIG. 24 is a tenth schematic flowchart of a communication method according to an embodiment of this application;

FIG. 25 is a schematic diagram in which a hidden node exists when an AP communicates with a plurality of stations according to an embodiment of this application;

FIG. 26 is a schematic diagram of continuing communication between an AP and an EMLSR station when a hidden node exists according to an embodiment of this application;

FIG. 27 is a schematic diagram of a structure of a communication apparatus 1 according to an embodiment of this application;

FIG. 28 is a schematic diagram of a structure of a communication apparatus 2 according to an embodiment of this application; and

FIG. 29 is a schematic diagram of a structure of a communication apparatus 1000 according to an embodiment of this application.

## DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design scheme described as "example", "such as" or "for example" in this application should not be explained as having more advantages than another embodiment or design scheme. Exactly, use of the word "example", "such as", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It should be understood that in embodiments of this application, "B corresponding to A" indicates that B is associated with A, and B may be determined based on A. However, it should further be understood that determining A based on B does not mean that B is determined based on A only; that is, B may alternatively be determined based on A and/or other information.

For ease of understanding methods provided in embodiments of this application, the following describes a system architecture of the methods provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions provided in this application may be applied to a wireless communication system, for example, a wireless local area network system. The technical solutions provided in this application may be implemented by a communication device in the wireless communication system or a chip or processor in the communication device. The communication device may be a wireless communication device that supports parallel transmission on a plurality of links. For example, the communication device may be referred to as a multi-link device (multi-link device, MLD) or a multi-band device. Compared with a communication device that supports only single-link transmission, the multi-link device has higher transmission efficiency and a larger throughput.

In this application, a next-generation 802.11 standard station device that simultaneously supports a plurality of links is referred to as a multi-link device, and an internal entity responsible for any one link is referred to as a station (STA). If all STAs in an MLD are APs, the MLD may be further referred to as an AP MLD. If all STAs in an MLD are non-AP STAs, the MLD may be further referred to as a non-AP MLD. In other words, the multi-link device includes one or more affiliated stations (affiliated STAs). The affiliated station is a logical station and may operate on a link, a band, or a channel. The affiliated station may be an access point (access point, AP) or a non-access point station (non-access point station, non-AP STA). In 802.11be, a multi-link device whose affiliated station is an AP is referred to as an AP multi-link device (AP multi-link device, AP MLD), and a multi-link device whose affiliated station is a non-AP STA is referred to as a non-AP multi-link device (non-AP multi-link device, non-AP MLD).

Optionally, one multi-link device may include a plurality of logical stations. Each logical station operates on a link, but the plurality of logical stations are allowed to operate on a same link. During data transmission between an AP MLD and a non-AP MLD, a link identifier may be used to identify a link or a station on a link. Before communication, the AP MLD and the non-AP MLD may first negotiate or communicate for a correspondence between the link identifier and the link or the station on the link. Therefore, during data transmission, the link identifier is carried without transmitting a large amount of signaling information to indicate the link or the station on the link. This reduces signaling overheads and improves transmission efficiency.

In an example, a management frame, such as a beacon (beacon) frame or an association request frame, sent when the AP MLD establishes a basic service set (basic service set, BSS) carries one element, and the element includes a plurality of link identifier information fields. One link identifier information field may indicate a correspondence between one link identifier and a station that operates on a link corresponding to the link identifier. One link identifier information field includes a link identifier, and further includes one or more pieces of the following information: a medium access control (medium access control, MAC) address, an operating class, and a channel number. One or more of the MAC address, the operating class, and the channel number may indicate one link. For an AP, a MAC address of the AP is a basic service set identifier (basic service set identifier, BSSID) of the AP. In another example, in an association process between multi-link devices, an AP MLD and a non-AP MLD negotiate for a plurality of link identifier information fields. Multi-link association refers to one association between an AP of the AP MLD and a STA of the non-AP MLD. The association may facilitate separate association between a plurality of STAs of the non-AP MLD and a plurality of APs of the AP MLD, where one STA is associated with one AP. One or more STAs in the non-AP MLD may establish an association relationship with and then communicate with one or more APs in the AP MLD.

Optionally, the multi-link device may implement wireless communication in compliance with the IEEE 802.11 series protocols. For example, a station in compliance with the extremely high throughput, or a station in compliance with IEEE 802.11be or is compatible with IEEE 802.11be implements communication with another device. Certainly, the another device may be a multi-link device, or may not be a multi-link device.

The technical solutions provided in this application may be applied to a scenario in which one node communicates with one or more nodes, a scenario of single-user uplink/downlink communication or a scenario of multi-user uplink/downlink communication, or a scenario of device-to-device (device-to-device, D2D) communication. In embodiments of this application, the term "communication" may also be described as "data transmission", "information transmission", or "transmission". The term "transmission" may generally refer to sending and receiving.

Any one of the foregoing nodes may be an AP MLD, or may be a non-AP MLD. Optionally, one of the foregoing nodes may be a multi-link device, and the other nodes may be multi-link devices, or may not be multi-link devices. For example, a communication method in EMLSR is applied to a scenario in which a non-AP MLD communicates with an AP MLD, or is applied to a scenario in which a non-AP MLD communicates with a single-link AP. This is not limited in embodiments of this application. A single-link device may be an AP.

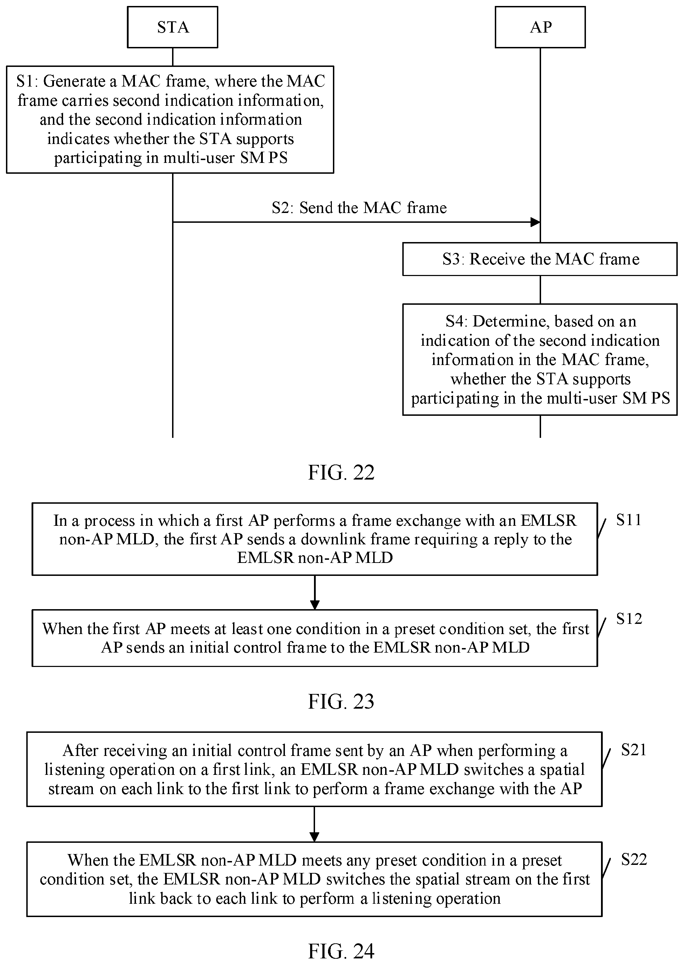

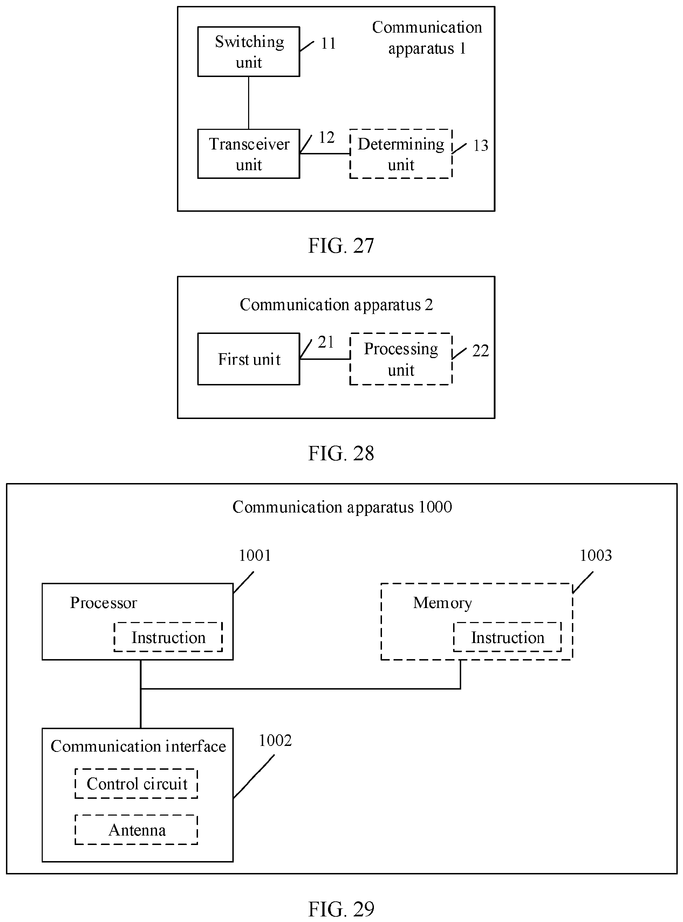

For ease of description, a scenario in which a non-AP MLD communicates with an AP is used as an example below to describe the system architecture of this application. It may be understood that the AP herein is in a broad sense, and refers to an AP side. The AP may be a single-link AP, or may be an AP in the AP MLD. The claimed invention corresponds to fig. 23, 27 and to the related text in the description. The remaining figures and the text of the description are intended to better explain the invention.

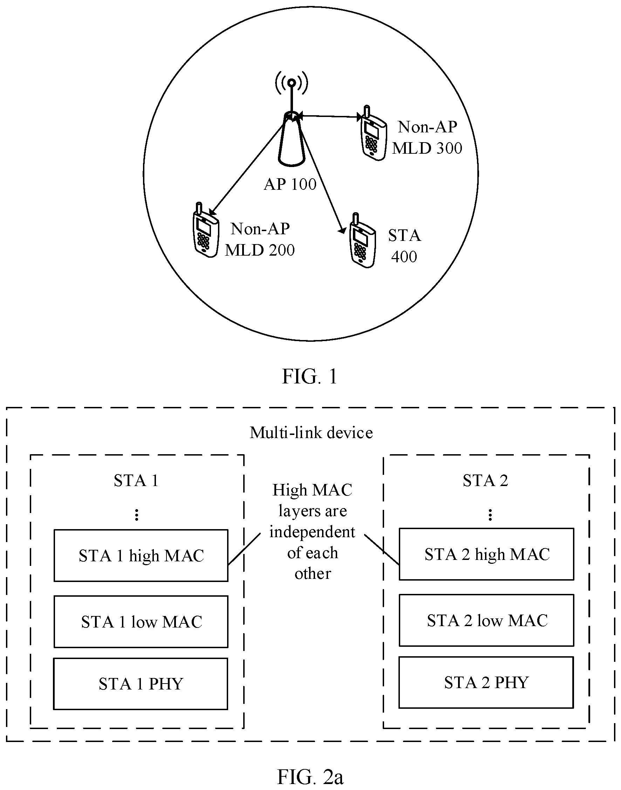

FIG. 1 is a schematic diagram of an architecture of a wireless communication system according to an embodiment of this application. As shown in FIG. 1, the wireless communication system includes at least one AP (for example, an AP 100 in FIG. 1) and at least one non-AP MLD (a non-AP MLD 200 and a non-AP MLD 300 in FIG. 1). Optionally, FIG. 1 further includes a legacy station that supports transmission only on a single link (a single-link non-AP STA 400 in FIG. 1 is also referred to as a STA 400). The AP 100 herein may be a single-link AP, or may be an AP in an AP MLD. This is not limited in this embodiment of this application. The AP is a device that provides a service for the non-AP MLD, and the non-AP MLD may communicate with the AP MLD by using a plurality of links, to improve a throughput. A STA in the non-AP MLD may alternatively communicate with an AP in the AP MLD or a single-link AP by using one link. It may be understood that quantities of APs and non-AP MLDs in FIG. 1 are merely examples.

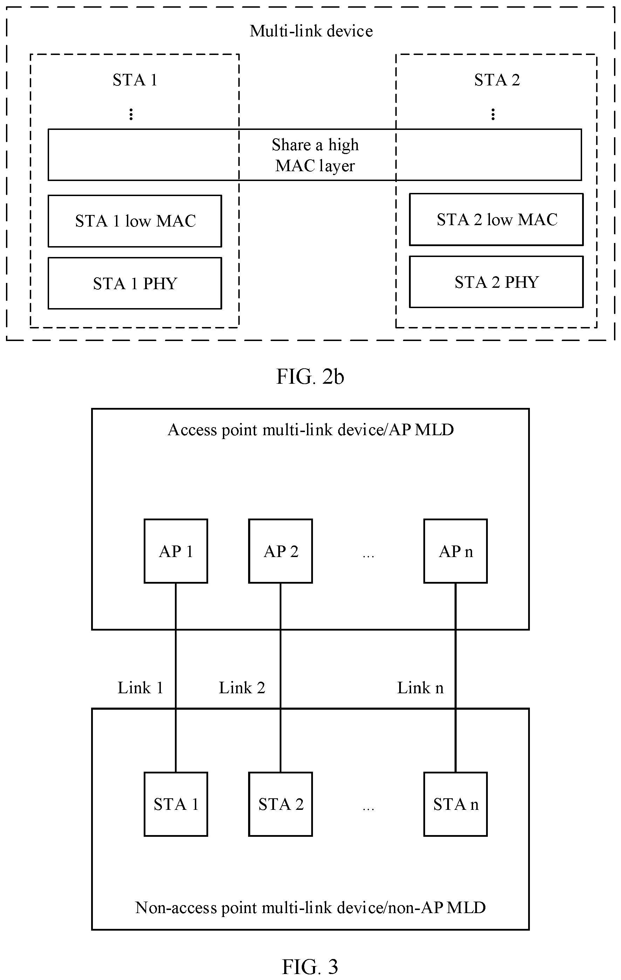

Optionally, refer to FIG. 2a. FIG. 2a is a schematic diagram of a structure of a multi-link device according to an embodiment of this application. The 802.11 standard focuses on an 802.11 physical layer (physical layer, PHY) part and a medium access control (medium access control, MAC) layer part in a multi-link device. As shown in FIG. 2a, a plurality of STAs included in the multi-link device are independent of each other at a low MAC (low MAC) layer and a PHY layer, and are also independent of each other at a high MAC (high MAC) layer. FIG. 2b is a schematic diagram of another structure of a multi-link device according to an embodiment of this application. As shown in FIG. 2b, a plurality of STAs included in the multi-link device are independent of each other at a low MAC (low MAC) layer and a PHY layer, and share a high MAC (high MAC) layer. Certainly, in a multi-link communication process, a non-AP MLD may use a structure with high MAC layers independent of each other, and an AP MLD may use a structure with a shared high MAC layer. Alternatively, the non-AP MLD may use the structure with the shared high MAC layer, and the AP MLD may use the structure with high MAC layers independent of each other. Alternatively, the non-AP MLD and the AP MLD each may use the structure with the shared high MAC layer. Alternatively, the non-AP MLD and the AP MLD each may use the structure with high MAC layers independent of each other. A schematic diagram of an internal structure of the multi-link device is not limited in embodiments of this application. FIG. 2a and FIG. 2b are merely examples for description. For example, the high MAC layer or the low MAC layer may be implemented by one processor in a chip system of the multi-link device, or may be implemented by different processing modules in the chip system.

For example, the multi-link device in this embodiment of this application may be a single-antenna device, or may be a multi-antenna device. For example, the multi-link device may be a device with more than two antennas. The quantity of antennas included in the multi-link device is not limited in embodiments of this application.

Optionally, refer to FIG. 3. FIG. 3 is a schematic diagram of multi-link communication according to an embodiment of this application. As shown in FIG. 3, an AP MLD includes n stations, which are an AP 1, an AP 2, ..., and an AP n. A non-AP MLD also includes n stations, which are a STA 1, a STA 2, ..., and a STA n. The AP MLD and the non-AP MLD may perform parallel communication on a link 1, a link 2, ..., and a link n. An AP in the AP MLD may establish an association relationship with a STA in the non-AP MLD. For example, the STA 1 in the non-AP MLD establishes an association relationship with the AP 1 in the AP MLD, the STA 2 in the non-AP MLD establishes an association relationship with the AP 2 in the AP MLD, and the STA n in the non-AP MLD establishes an association relationship with the AP n in the AP MLD.

For example, the multi-link device is an apparatus having a wireless communication function. The apparatus may be a device of an entire system, or may be a chip, a processing system, or the like installed in the device of the entire system. The device on which the chip or the processing system is installed may be controlled by the chip or the processing system, to implement the methods and the functions in embodiments of this application. For example, the non-AP MLD in embodiments of this application has the wireless transceiver function, may support the 802.11 series protocols, and may communicate with a single-link AP, an AP MLD, or another non-AP MLD. For example, the non-AP MLD is any user communication device that allows a user to communicate with an AP and communicate with a WLAN. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone. The non-AP MLD may be an internet of things node in the internet of things, a vehicle-mounted communication apparatus in the internet of vehicles, or the like. The non-AP MLD may alternatively be a chip or a processing system in each of foregoing terminals. The AP in embodiments of this application may provide a service apparatus for the non-AP MLD, and may support the 802.11 series protocols. For example, the AP may be a communication entity such as a communication server, a router, a switch, or a bridge. Alternatively, the AP may include various forms of macro base stations, micro base stations, relay stations, and the like. Certainly, the AP may alternatively be chips and processing systems in these various forms of devices, to implement the methods and the functions in embodiments of this application.

It may be understood that the multi-link device may support high-rate and low-latency transmission. With continuous evolution of application scenarios of the wireless local area network, the multi-link device may be further applied to more scenarios, for example, a sensor node (for example, a smart meter, a smart electricity meter, or a smart air detection node) in smart city, a smart device (for example, a smart camera, a projector, a display, a television, a stereo, a refrigerator, or a washing machine) in smart home, a node in the internet of things, an entertainment terminal (for example, AR, VR, or another wearable device), a smart device (for example, a printer or a projector) in smart office, an internet of vehicles device in the internet of vehicles, and some infrastructures (such as a vending machine, a self-service navigation station of a supermarket, a self-service cash register device, and a self-service ordering machine) in daily life scenarios. Specific forms of the non-AP MLD and the AP are not limited in embodiments of this application, and are merely examples for description herein. The 802.11 protocol may be a protocol that supports 802.11be or is compatible with 802.11be.

The foregoing descriptions briefly describe the system structure in embodiments of this application. For better understanding of the technical solutions of this application, the following briefly describes content related to this application.

1. Multi-Link Operation (Multi-Link Operation, MLO)

To achieve a technical objective of an extremely high throughput (Extremely High Throughput, EHT), a next-generation standard such as 802.11be (also referred to as EHT or Wi-Fi7) uses the multi-link operation (Multi-Link Operation, MLO) as one of key technologies. A core idea of the multi-link operation is that a wireless local area network (Wireless Local Area Network, WLAN) device that supports the next-generation 802.11 standard has multi-band (multi-band) sending and receiving capabilities, to use a wider bandwidth (for example, 320 MHz) for data transmission, thereby significantly improving a throughput. The multi-band includes but is not limited to a 2.4 GHz Wi-Fi band, a 5 GHz Wi-Fi band, and a 6 GHz Wi-Fi band. Access and transmission performed on each band are referred to as one link, or access and transmission performed in a frequency range on a same band are referred to as one link. Therefore, access and transmission formed by a plurality of links are referred to as the MLO.

2. Spatial stream (spatial stream) and antenna

A radio sends a plurality of signals at a same time, and each signal is referred to as a spatial stream. In a multiple-input multiple-output (multiple input multiple output, MIMO) system, a quantity of spatial streams is usually less than or equal to a quantity of antennas. If a quantity of antennas at a transmit end is different from that at a receive end, the quantity of spatial streams is less than or equal to a minimum quantity of antennas at the transmit end or the receive end. For example, a 4x4 (four transmit antennas and four receive antennas, also referred to as four inputs and four outputs) MIMO system may be used to transmit four or less spatial streams, and a 3x2 (three transmit antennas and two receive antennas) MIMO system may transmit two or less spatial streams.

Optionally, a relationship between an antenna and a spatial stream in a MIMO system may still be used in this application. In some embodiments, the "spatial stream" and the "antenna" may be used alternately.

3. Enhanced multi-link single radio (Enhanced Multi-link Single Radio, EMLSR) and enhanced multi-link multi-radio (Enhanced Multi-link Multi-Radio, EMLMR)

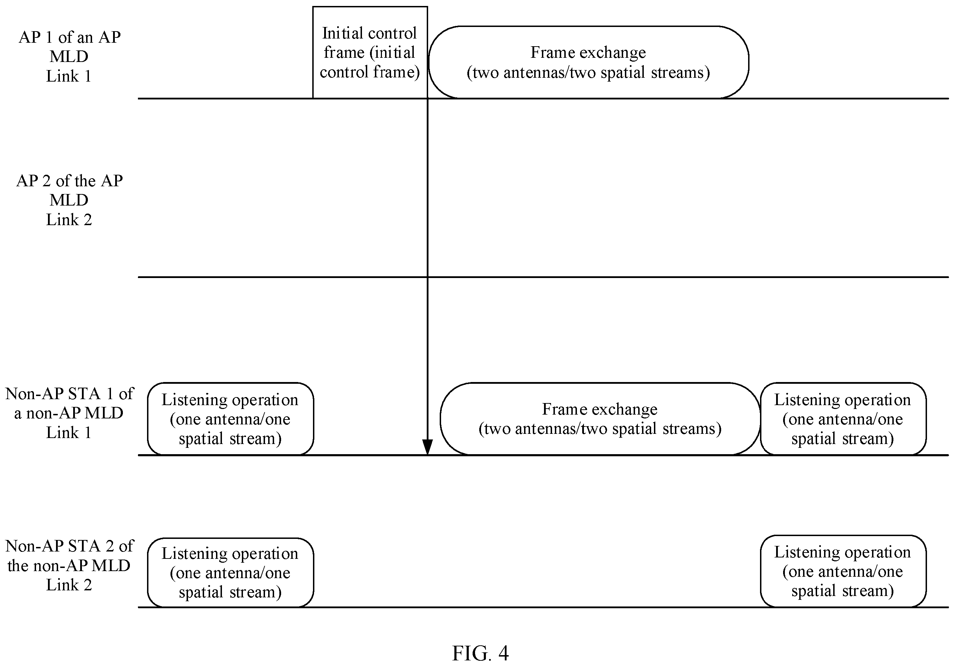

One non-AP MLD has only single radio (Single radio) receiving and sending capabilities. To enable the non-AP MLD to enjoy advantages of a plurality of links, an EMLSR capability is introduced in 802.11be. FIG. 4 is a schematic diagram of EMLSR. As shown in FIG. 4, two links between a non-AP MLD and an AP MLD are used as an example. The non-AP MLD that supports the EMLSR can perform listening operations (Listening Operations) on a plurality of links (for example, a link 1 and a link 2 in FIG. 4) at the same time. In the listening operation, the non-AP MLD performs reception on each link by using a single antenna (one antenna is used as an example herein). After the AP MLD successfully sends an initial control frame (Initial Control Frame) to the non-AP MLD on any link (for example, the link 1 in FIG. 4), the non-AP MLD may switch all spatial streams on each link (for example, the link 2 in FIG. 4) to the link (for example, the link 1 in FIG. 4) to perform a frame exchange with the AP MLD. In this case, there are a plurality of spatial streams/antennas on the link 1. After end of the frame exchange, the non-AP MLD switches the spatial stream on the link 1 back to each link to perform the listening operation, in other words, the non-AP MLD switches the spatial stream switched from the link 2 on the link 1 back to the link 2 to perform the listening operation. In this case, each of the link 1 and the link 2 has one spatial stream/antenna.

One non-AP MLD has multi-radio sending and receiving capabilities, and a non-AP MLD that supports the EMLMR can perform listening operations on a plurality of links at the same time. In the listening operation, the non-AP MLD can perform reception on each link by using a plurality of spatial streams. After an AP MLD successfully sends an initial frame to the non-AP MLD on any link, for example, a link i, the non-AP MLD may switch all or some of spatial streams on each link to the link i to perform a frame exchange with the AP MLD. After end of the frame exchange, the spatial streams on the link i are switched back to each link.

4. Working mechanism of EMLSR

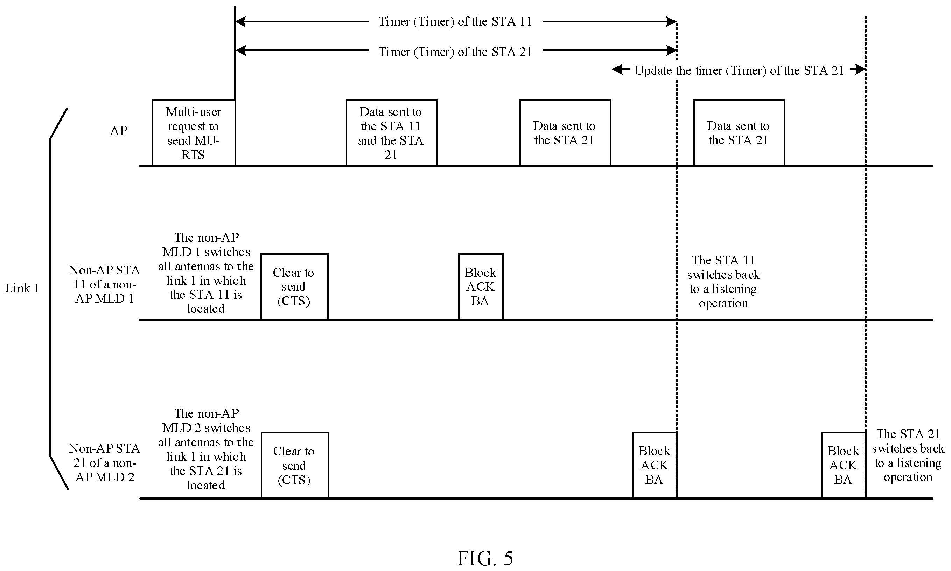

FIG. 5 is a schematic diagram of a working mechanism of EMLSR. In FIG. 5, an AP, a STA 11 of a non-AP MLD 1, and a STA 21 of a non-AP MLD 2 all operate on (operate on) a link 1. The AP in FIG. 5 may be an AP that is in an AP MLD and that operates on (operates on) the link 1. Both the non-AP MLD 1 and the non-AP MLD 2 in FIG. 5 support the EMLSR.

When any non-AP STA in the non-AP MLD that supports the EMLSR receives an initial control frame from the AP when performing a listening operation, the non-AP STA needs to start a timer (Timer). A timing length of the timer is set to a duration indicated by a duration (duration) field in the initial control frame. The non-AP MLD that supports the EMLSR further needs to switch a spatial stream/antenna on another link to a link on which the non-AP STA operates, to perform a frame exchange with the AP. For ease of description, an example in which the initial control frame is a multi-user request to send (Multi-user Request to Send, MU-RTS) frame is used for description in this specification. Certainly, the initial control frame may alternatively be a buffer status report poll (Buffer Status Report Poll, BSRP) frame, or another frame. This is not limited in this application. As shown in FIG. 5, a timer is started after the STA 11 and the STA 21 successfully receive MU-RTS frames, where a timing length of the timer is a duration indicated by a duration field of the MU-RTS frame, and the non-AP MLD 1 to which the STA 11 belongs switches a spatial stream/antenna on another link (namely, a link other than the link 1 in the non-AP MLD 1) back to the link 1 on which the STA 11 is located, and the non-AP MLD 2 to which the STA 21 belongs switches a spatial stream/antenna on another link (namely, a link other than the link 1 in the non-AP MLD 2) back to the link 1 on which the STA 21 is located. The duration (duration) field indicates the duration, a start moment of the duration is an end moment at which the frame that carries the duration field is received, and the end moment may be determined based on the start moment and the duration.

When the AP sends a frame (denoted as a frame A) to a non-AP STA that successfully receives an initial control frame, where the frame requires the non-AP STA to make a reply, and an end time indicated by a duration (Duration) field carried in the frame (namely, the frame A) is later than a timing end time indicated by a current timer of the non-AP STA, after the non-AP STA makes the reply to the AP, if a physical layer indicates to start receiving the frame within a preset wait (wait) time length, the non-AP STA needs to update a value of the timer. A timing length of the timer is set based on the duration field of the frame A sent by the AP. A start moment of timing is an end moment at which the frame A is successfully received, and an end moment of the timing is an end moment indicated by the duration field of the frame A. For example, as shown in FIG. 5, a data frame sent by the AP to the STA 21 requires the STA 21 to return a block acknowledgment (block acknowledgment, BA). After the STA 21 returns the BA, a timer of the STA 21 is updated to a duration indicated by a duration field in the data frame. To be specific, a start point of timing is updated to an end moment at which the data frame is received, and an end point of the timing may be updated based on the start moment and the duration of the duration field in the data frame.

When a timer of any non-AP STA expires, if the non-AP STA is receiving a frame whose destination address is the non-AP STA, the non-AP STA continues operating on a link (in other words, a spatial stream/antenna is not temporarily switched back to each link to perform a listening operation) until the non-AP STA returns an acknowledgment frame or until a duration indicated by a duration field of the frame expires.

When the non-AP MLD meets one of the following cases, the non-AP MLD to which the non-AP STA belongs needs to immediately switch the spatial stream/antenna back to each link to perform the listening operation (in the following cases, the non-AP STA belongs to the non-AP MLD, and the AP belongs to the AP MLD associated with the non-AP MLD):

- the timer (of the non-AP STA) expires, and the non-AP STA does not receive, within a period of time after a last frame, an indication that the physical layer (physical layer, PHY) starts to receive a packet. The period of time is equal to a sum of a short interframe space (Short interframe space, SIFS), a duration of one slot (slot), and a receive (receive, Rx) physical layer (PHY) start (start) delay (delay), that is, SIFS Time + Slot Time + RxPHY Start Delay;
- the timer (of the non-AP STA) expires, and the non-AP STA receives a unicast frame but a receiving address (Receiving Address, RA) of the unicast frame is not the non-AP STA, or receives a trigger frame (Trigger Frame, TF) but none of user information (User Info) fields in the trigger frame matches the non-AP STA, with exception of a CTS-to-Self frame of the AP; and
- (the non-AP STA) receives a contention-free end (Contention-Free End, CF-END) frame sent by the AP.

It can be learned that the foregoing working mechanism of the EMLSR is complex, and implementation complexity is high.

5. Spatial Multiplexing Power Save (Spatial Multiplexing Power Save, SM PS)

The 802.11ax standard has a spatial multiplexing power save (SM PS) function. For details, refer to the section 11.2.6 in the 802.11ax standard. Herein is only a brief explanation.

The SM PS allows one non-AP STA to retain only one active receive chain (receive chain), and to receive a signal usually by using one antenna. It should be understood that the SM PS function is applicable to a single-link device, and one link may have a plurality of receive chains. After the non-AP STA receives an initial frame sent by an AP, another receive chain of the non-AP STA is opened, and a frame exchange with the AP is performed by using a plurality of antennas. After end of the frame exchange, the non-AP STA switches back to a single receive chain mode.

When determining that any one of the following conditions is met, the STA may immediately switch back to the single receive chain mode (The STA can determine the end of the frame exchange sequence through any of the following):

- it (which refers to the STA) receives a unicast frame, and a destination address of the unicast frame is another STA. (It receives an individually addressed frame addressed to another STA.)
- it (which refers to the STA) receives a frame, but a transmitting address (Transmitting Address, TA) of the frame is inconsistent with a TA of a frame that initiates a current transmission opportunity (Transmission Opportunity, TXOP). (It receives a frame with a TA that differs from the TA of the frame that started the TXOP.)
- it (which refers to the STA) receives a frame from another basic service set (inter-BSS). (It receives a PPDU and classifies the PPDU as inter-BSS PPDU (see 26.2.2 (Intra-BSS and inter-BSS PPDU classification)).)
- it (which refers to the STA) receives a high efficiency multi-user PPDU (High Efficiency Multi-User PPDU, HE MU PPDU), where a basic service set (Basic Service Set, BSS) color (Color) carried in the PPDU is consistent with a BSS color of a BSS in which the STA is associated, the PPDU does not include a station identifier (STA-ID) field of any resource unit (Resource unit, RU) that identifies the STA as a recipient or one of recipients of the RU, and a value of a BSS color disabled (Disabled) field carried in a most recently received HE operation element (operation element) sent by the AP is 0. (It receives an HE MU PPDU where the RXVECTOR parameter BSS_COLOR is the BSS color of the BSS in which the STA is associated, the RXVECTOR parameter does not have any STA_ID of an RU that identifies the STA as the recipient or one of the recipients of the RU (see 26.11.1 (STA_ID)), and the BSS Color Disabled subfield in the most recently received HE Operation element from the AP with which the STA is associated is 0.)

- a carrier sensing (Carrier Sensing, CS) mechanism indicates that a channel is idle at a transmission (transmission, Tx) point coordination function interframe space (Point coordination function Interframe Space, PIFS) slot boundary (TxPIFS slot boundary). (The CS mechanism (see 10.3.2.1 (CS mechanism)) indicates that the medium is idle at the TxPIFS slot boundary (defined in 10.3.7 (DCF timing relations)).)

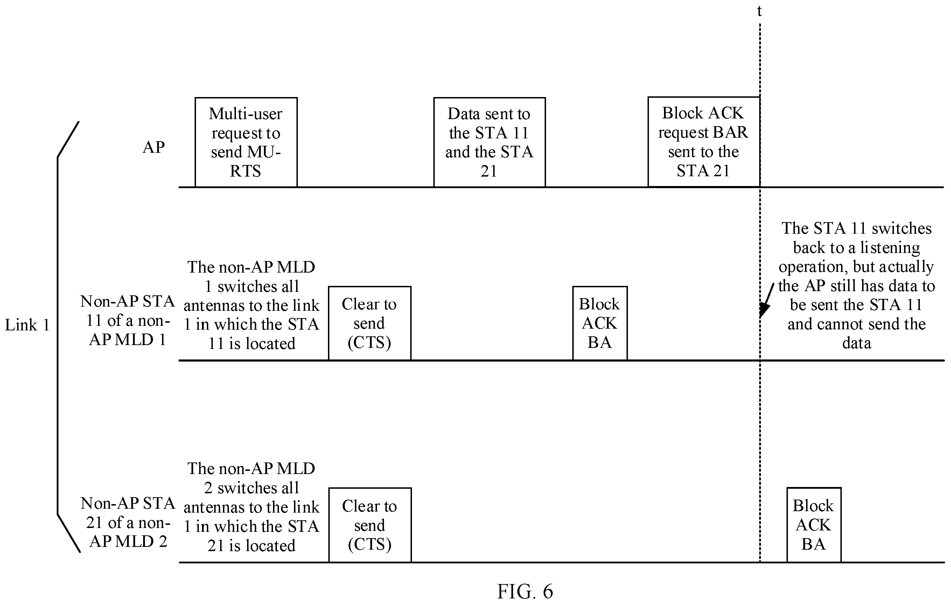

To further determine a rule of performing spatial stream switching after end of a frame exchange, considering that an SM PS function is reused in EMLSR, it can be learned that from the foregoing descriptions (namely, a working mechanism of the EMLSR and the SM PS function), if an SM PS rule is directly reused in the EMLSR, some cases that are not applicable to the EMLSR may occur. The following provides description with reference to FIG. 6. FIG. 6 is a schematic diagram of directly reusing an SM PS rule in EMLSR. An AP sends initial control frames, for example, MU-RTS frames in FIG. 6. In FIG. 6, an example in which the initial control frame is the MU-RTS frame is used for description. Certainly, the initial control frame may alternatively be a BSRP frame or another frame. This is not limited in this application. After a STA 11 and a STA 21 successfully receive the initial control frames, a non-AP MLD 1 (an MLD to which the STA 11 belongs) switches all spatial streams/antennas to a link 1 on which the STA 11 is located, and a non-AP MLD 2 (an MLD to which the STA21 belongs) switches all spatial streams/antennas to the link 1 on which the STA21 is located. In processes of performing frame exchanges between the AP and the STA 11 and the STA 21, the AP may need to send a frame to the STA21 in a unicast form, for example, a block acknowledgement request (Block ACK Request, BAR) frame in FIG. 6. Then, the STA 21 returns a block acknowledgment (Block ACK, BA) frame to the AP in the unicast form. According to the SM PS rule described above, the STA 11 receives a unicast frame (which refers to a BAR frame), and a destination address of the unicast frame is another station. Therefore, the non-AP MLD 1 to which the STA 11 belongs needs to immediately switch the spatial stream/antenna on the link 1 back to each link to perform a listening operation. However, actually, the AP may not complete serving the STA 11, in other words, the AP may still have data that needs to be sent to the STA 11. However, because the AP needs to send the unicast BAR frame to the STA 11, the AP cannot continue serving the STA 11.

In addition, if the AP simultaneously serves a STA 1 and a STA 2 that are both in an SM PS mode in one service period (Service Period, SP), an existing single-user SM PS rule in the 802.11ax standard is no longer applicable. This is because if the AP needs to send a unicast BAR frame to one station (for example, the STA 1), the other station (for example, the STA 2) immediately switches back to a single receive chain mode. Actually, the AP may still have data sent to the other station (for example, the STA 2). In this scenario, the AP cannot continue serving the other station (for example, the STA 2).

Therefore, an embodiment of this application provides a communication method, to resolve a problem that an existing SM PS rule is not applicable to EMLSR and/or EMLMR in a manner such as modifying the SM PS rule or restricting an AP behavior. In this way, a spatial stream switching rule in the EMLSR and/or the EMLMR is determined, so that the AP may serve other STAs while serving a STA in the EMLSR/EMLMR mode to perform multi-user communication, thereby further improving communication efficiency. This application further provides a communication method, and specifically provides a method for switching back to a listening operation after an exchange of an initial frame/initial control frame fails, to improve a working mechanism of EMLSR and/or EMLMR, and improve working efficiency and switching efficiency of the EMLSR and/or the EMLMR. The method supporting switching back to the listening operation after the exchange of the initial frame/initial control frame fails. This application further provides a communication method. A frame exchange duration is set, and/or a signaling field in an existing standard is used to simplify a working mechanism of EMLSR and/or EMLMR. This can reduce logic running complexity and facilitate implementation.

The following describes in detail the technical solutions provided in this application with reference to more accompanying drawings.

The technical solutions provided in this application are described by using a plurality of embodiments. For details, refer to the following descriptions. It may be understood that the technical solutions described in embodiments of this application may be combined to form a new embodiment, and parts that have a same or similar concept or solution may be mutually referenced or combined. The following separately describes embodiments in detail.

Optionally, a non-AP MLD in this application may be the non-AP MLD shown in FIG. 1, for example, the non-AP MLD 200. In some embodiments, a station in this application may be a single-link device, or may be a station in the non-AP MLD. This is not limited in embodiments of this application. In some embodiments, an AP in this application may be a single-link device, or may be an AP in an AP MLD. This is not limited in embodiments of this application. The station, the AP, the non-AP MLD, and the like in this application all support the 802.11be protocol, and may further support other WLAN communication protocols such as 802.11ax and 802.11ac protocols. It should be understood that the station, the AP, the non-AP MLD, and the like in this application may further support a next-protocol of 802.11be. In other words, the methods provided in this application are applicable to the 802.11be protocol, and the next-generation protocol of 802.11be.

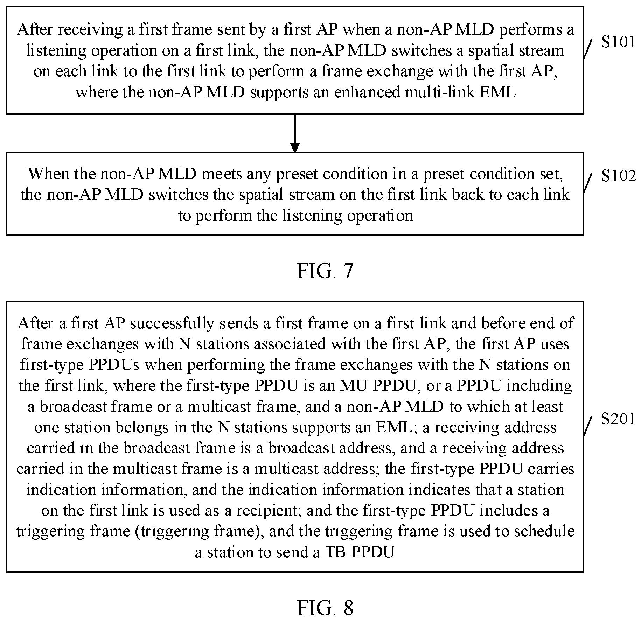

FIG. 7 is a first schematic flowchart of a communication method according to an embodiment of this application. The method describes how to further restrict an existing SM PS rule to adapt to EMLSR or EMLMR. A first AP may be a single-link AP, or may be an AP in an AP MLD. This is not limited in this embodiment of this application. As shown in FIG. 7, the communication method includes but is not limited to the following steps.

S101: After receiving a first frame sent by the first AP when a non-AP MLD performs a listening operation on a first link, the non-AP MLD switches a spatial stream on each link to the first link to perform a frame exchange with the first AP, where the non-AP MLD supports an enhanced multi-link EML.

S102: When the non-AP MLD meets any preset condition in a preset condition set, the non-AP MLD switches the spatial stream on the first link back to each link to perform a listening operation.

Optionally, before step S101, the non-AP MLD may notify the first AP of the enhanced multi-link (Enhanced Multi-link, EML) mode supported by the non-AP MLD. In an implementation, the non-AP MLD supports the EMLSR. In another implementation, the non-AP MLD supports the EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

Optionally, for example, there are two links between the non-AP MLD and the first AP: a first link and a second link. When the non-AP MLD performs a listening operation (listening operation) on each of the first link and the second link, the initial control frame or the initial frame from the first AP is received on the first link, and the non-AP MLD switches a spatial stream on the second link to the first link to perform a frame exchange with the first AP. After switching, there are a plurality of spatial streams on the first link. The first AP operates on (operates on) the first link. When the non-AP MLD determines that any preset condition in the preset condition set is met, the non-AP MLD switches some spatial streams/antennas on the first link back to the second link, and performs the listening operation on each of the first link and the second link. Optionally, when the non-AP MLD determines that any preset condition in the preset condition set is met, the non-AP MLD shall (shall) switch back to the listening operation (switch back to the listening operation) after an EMLSR transition delay (EMLSR Transition Delay) or EMLMR Transition Delay (EMLMR Transition Delay) duration. It should be understood that, if the non-AP MLD supports the EMLSR, the non-AP MLD switches back to the listening operation after the EMLSR switching delay duration. If the non-AP MLD supports the EMLMR, the non-AP MLD switches back to the listening operation after the EMLMR transition delay duration.

Optionally, the preset condition set includes one or more of the following preset conditions: a first preset condition, a second preset condition, and a third preset condition. The first preset condition, the second preset condition, and the third preset condition are separately described in detail below.

The first preset condition is that the non-AP MLD receives a radio frame on the first link, where a transmitting address (Transmitting Address, TA) of the radio frame is different from a TA of a frame that initiates a current TXOP; the radio frame is not an uplink unicast control frame, or the radio frame is neither an uplink unicast control frame nor a frame used for reporting; and the uplink unicast control frame includes a BA frame. Optionally, the uplink unicast control frame further includes a power saving-poll (Power Saving-Poll, PS-Poll) frame.

Optionally, the frame used for reporting includes one or more of the following: a compressed beamforming (Compressed Beamforming/CQI, refer to the section 9.6.31.2 in the standard document) frame, a frame including a beamforming report (Beamforming Report, BFR), a frame including a buffer status report (Buffer Status Report, BSR, refer to the section 26.5.5 in the standard document), a frame including a bandwidth query report (Bandwidth Query Report, BQR, refer to the section 26.5.6 in the standard document), and a frame including a null data packet feedback report (NDP Feedback Report, NFR, refer to the section 26.5.7 in the standard document).

It should be understood that one non-AP MLD includes a plurality of stations, and one station of the non-AP MLD operates on one link (an affiliated STA (if any) of the non-AP MLD that operates on a link). In this case, "the non-AP MLD receives a radio frame on the first link" is equivalent to "a station that is in the non-AP MLD and that operates on the first link receives one radio frame", which is similar in the following, and details are not described again.

In other words, the foregoing first preset condition is that it (which refers to the station that is in the non-AP MLD and that operates on the first link) receives a frame, but a TA of the frame is different from the TA of the frame that initiates the current TXOP. Some unicast control frames sent to the AP are excluded, including one or both of the following frames: the BA frame and the PS-Poll frame. Some frames or reports (Reports) sent to the AP are further excluded, including some or all of the following frames: the CQI frame, the BFR, the BSR, the BQR, the NFR, and the like.

The second preset condition is that the non-AP MLD receives a unicast frame on the first link, where a destination address of the unicast frame is another station, and the unicast frame is not a unicast control frame. The another station herein is a station other than the station that is in the non-AP MLD and that operates on (operates on) the first link. In other words, the another station includes a station that is in the non-AP MLD and that does not operate on the first link, another non-AP MLD, another single-link device, or the like. Optionally, the unicast control frame includes a BAR frame.

Optionally, the unicast control frame further includes one or more of the following: an acknowledgment (acknowledgment, ACK) frame, a beamforming report poll (Beamforming Report Poll, BFRP) frame, and a null data packet announcement (Null Data Packet Announcement, NDPA) frame.

Optionally, the unicast control frame further includes a unicast trigger frame. The unicast trigger frame includes one or more of the following: a MU-BAR frame, a buffer status report poll (Buffer Status Report Poll, BSRP) frame, a beamforming report poll BFRP frame, a multi-user request to send (Multi-User request to send, MU-RTS) frame, a bandwidth query report poll (Bandwidth Query Report Poll, BQRP) frame, and a null data packet feedback report poll (NDP Feedback Report Poll, NFRP) frame.

In other words, the second preset condition is that it (which refers to the station that is in the non-AP MLD and that operates on the first link) receives the one unicast frame, and the destination address of the frame is the another STA. Some unicast control frames are excluded, including some or all of the following frames: the BAR frame, the ACK frame, the BFRP frame, and the NDPA frame. Some unicast trigger frames are further excluded: the MU-BAR frame, the BSRP frame, the BFRP frame of the trigger type, the MU-RTS frame, the BQRP frame, and the NFRP frame.

It can be learned that the foregoing first preset condition and the foregoing second preset condition resolve the problem that the existing SM PS rule is not applicable to the EMLSR and/or the EMLMR by excluding some frames. In other words, when an AP serves an EMLSR/EMLMR non-AP STA, the EMLSR non-AP STA does not switch back to a listening operation because the EMLSR non-AP STA receives these frames, so that a frame exchange end rule can be determined. In addition, the rule enables the AP to serve other STAs while serving a STA in the EMLSR mode, to perform multi-user communication, thereby further improving communication efficiency.

The third preset condition is that the non-AP MLD receives, on the first link, one trigger frame sent by a TXOP holder, where a user information field of the non-AP MLD does not exist in the trigger frame, or an association identifier indicating uplink orthogonal frequency division multiple access (Orthogonal Frequency Division Multiple Access, OFDMA)-based random access does not exist in the trigger frame. Optionally, the trigger frame herein may include one or both of the following: the MU-RTS frame and the BSRP frame.

In other words, the third preset condition is that it (which refers to the station that is in the non-AP MLD and that operates on the first link) receives the trigger frame (trigger frame) from the TXOP holder (holder), including some or all types of trigger frames, for example, the MU-RTS frame and the BSRP frame. In addition, a value of an association identifier 12 (AID12) subfield in the user information (User Info) field is not equal to least significant 12 bits of an AID of the station that is in the non-AP MLD and that operates on the first link, or an AID indicating uplink OFDMA-based random access (Uplink OFDMA-based Random Access, UORA) does not exist.

It can be learned that, a condition for switching back to the listening operation by the non-AP MLD is added in the third preset condition from a perspective of the trigger frame, which helps improve the SM PS rule.

Optionally, the preset condition set further includes one or more of the following preset conditions: The non-AP MLD receives, on the first link, a frame of another basic service set; the non-AP MLD receives an HE MU PPDU on the first link, where a basic service set BSS color carried in the HE MU PPDU is the same as a BSS color of a BSS to which the station that is in the non-AP MLD and that operates on the first link belongs, the HE MU PPDU does not include a station identifier field of any RU that identifies the station that is in the non-AP MLD and that operates on the first link as a recipient or one of recipients of the RU, and a value of a BSS color disabled field carried in an HE operation element most recently received by the non-AP MLD from the first AP is 0; and a carrier sensing mechanism indicates that a channel corresponding to the first link is idle at a TxPIFS slot boundary.

The EMLSR/EMLMR is used as an example for description in this embodiment of this application. Similarly, the preset condition set provided in this embodiment of this application is still applicable to multi-user SM PS, provided that the non-AP MLD is replaced with a STA. "When the non-AP MLD meets any preset condition in the preset condition set, the non-AP MLD switches the spatial stream on the first link back to each link to perform the listening operation" is replaced with "When the STA determines that any preset condition in the preset condition set is met, the STA switches back to a single receive chain mode immediately.

It can be learned that in this embodiment of this application, the SM PS rule is modified, for example, some exceptional frames are excluded from the existing SM PS rule, to resolve the problem that the existing SM PS rule is not applicable to the EMLSR/EMLMR, so that the frame exchange end rule can be determined. In addition, the rule enables the AP to serve the other STAs while serving the STA in the EMLSR mode, to perform multi-user communication, thereby further improving communication efficiency.

FIG. 8 is a second schematic flowchart of a communication method according to an embodiment of this application. The method describes how to restrict behavior of an AP to adapt an existing SM PS rule to EMLSR or EMLMR. A first AP may be a single-link AP, or may be an AP in an AP MLD. This is not limited in this embodiment of this application. As shown in FIG. 8, the communication method includes but is not limited to the following steps.

S201: After the first AP successfully sends a first frame on a first link and before end of frame exchanges with N stations associated with the first AP, the first AP uses first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; the first-type PPDU carries indication information, and the indication information indicates that a station on the first link is used as a recipient; and the first-type PPDU includes a triggering frame (triggering frame), and the triggering frame is used to schedule a station to send a TB PPDU.

Optionally, the N stations may include a single-link station, or may include a station in the non-AP MLD. The N stations all operate on the first link. If the N stations include the station in the non-AP MLD, at least one of these non-AP MLDs supports the EMLSR or the EMLMR. Further, at least one of these non-AP MLDs supports multi-user EMLSR/EMLMR, and at least one of these non-AP MLDs further supports single-user EMLSR/EMLMR. If at least one of these non-AP MLDs supports the EMLSR, the first frame is an initial control frame. If at least one of these non-AP MLDs supports the EMLMR, the first frame is an initial frame.

Optionally, after the first AP successfully sends the first frame on the first link, and before the end of the frame exchanges (before the end of the frame exchanges) with the N stations associated with the first AP, the first AP uses the first-type PPDUs (the first-type PPDU is the MU PPDU, or the PPDU including the broadcast frame or the multicast frame) when performing the frame exchanges with the N stations on the first link to interact with the N stations, and information indicating that the station on the first link is used as the recipient (or one of recipients) needs to be carried during the exchange, for example, a station identifier STA_ID. For example, in the MU PPDU sent by the AP, an RXVECTOR (RXVECTOR) parameter includes a station identifier (STA_ID) (which may be the STA_ID of the station or a STA_ID of another type, for example, an STA_ID indicating broadcast, which is not limited herein) field of an RU that identifies the station on the first link as a recipient or one of recipients of the RU. In addition, the first AP needs to schedule uplink multi-user transmission. In other words, the first-type PPDU includes the triggering frame, and the triggering frame is used to schedule the station to send the trigger based PPDU (trigger based PPDU, TB PPDU). N is a positive integer. The triggering frame is a trigger frame, or a frame that carries a TRS (triggered response scheduling, triggered response scheduling) control subfield.

Correspondingly, a first station in the N stations is used as an example. After the first station successfully receives the first frame when performing a listening operation on the first link and before end of a frame exchange between the first station and the first AP associated with the first station, the first station receives a first-type PPDU on the first link by using a plurality of spatial streams. After receiving the first-type PPDU, the first station sends a frame in a TB PPDU format to the AP.

The behavior of the AP provided in this embodiment of this application is still applicable to multi-user SM PS. When this embodiment of this application is applied to the multi-user SM PS, all the N stations are single-link stations.

It can be learned that in this embodiment of this application, both the AP and the station are restricted to use the first-type PPDUs in a frame exchange process, so that the station replies to the AP by using the frame in the TB PPDU format. In this way, the existing SM PS rule is adapted to the EMLSR or the EMLMR, and a frame exchange end rule is determined. In addition, the rule enables the AP to serve other STAs while serving a STA in the EMLSR mode, to perform multi-user communication, thereby further improving communication efficiency.

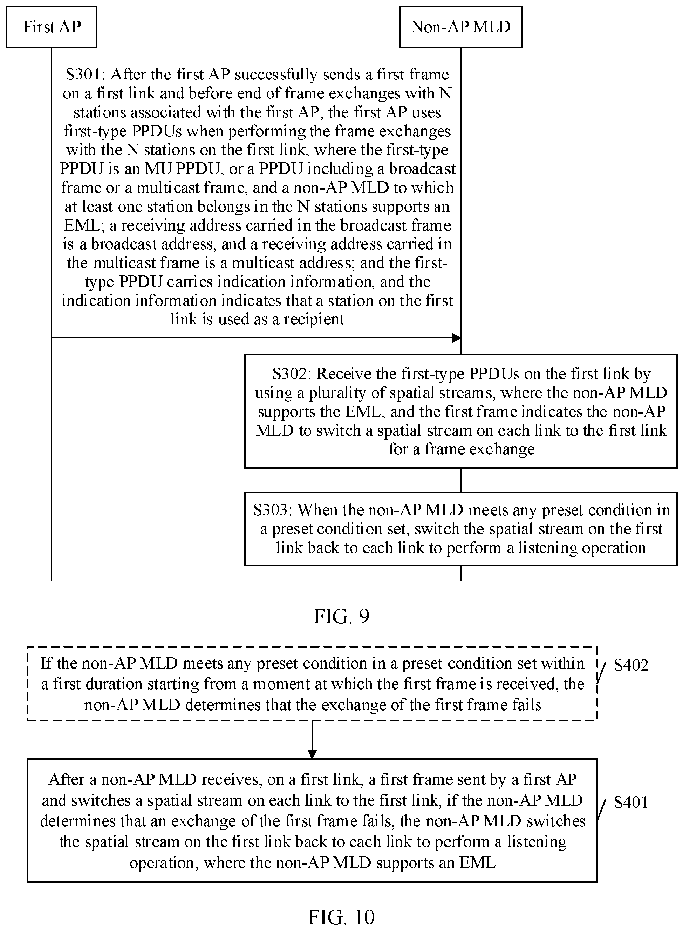

FIG. 9 is a third schematic flowchart of a communication method according to an embodiment of this application. The method describes a manner of restricting behavior of an AP and modifying an existing SM PS rule, to solve a problem that the existing SM PS rule is not applicable to EMLSR and/or EMLMR. A first AP may be a single-link AP, or may be an AP in an AP MLD. This is not limited in this embodiment of this application. As shown in FIG. 9, the communication method includes but is not limited to the following steps.

S301: After the first AP successfully sends a first frame on a first link and before end of frame exchanges with N stations associated with the first AP, the first AP uses first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; and the first-type PPDU carries indication information, and the indication information indicates that a station on the first link is used as a recipient.

Optionally, the N stations may include a single-link station, or may include a station in the non-AP MLD. The N stations all operate on the first link. If the N stations include the station in the non-AP MLD, at least one of these non-AP MLDs supports the EMLSR or the EMLMR. Further, at least one of these non-AP MLDs supports multi-user EMLSR/EMLMR, and at least one of these non-AP MLDs further supports single-user EMLSR/EMLMR. If at least one of these non-AP MLDs supports the EMLSR, the first frame is an initial control frame. If at least one of these non-AP MLDs supports the EMLMR, the first frame is an initial frame.

Optionally, after the first AP successfully sends the first frame on the first link, and before the end of the frame exchanges (before the end of the frame exchanges) with the N stations associated with the first AP, the first AP uses the first-type PPDUs (the first-type PPDU is the MU PPDU, or the PPDU including the broadcast frame or the multicast frame) when performing the frame exchanges with the N stations on the first link to interact with the N stations. The first-type PPDU carries the indication information indicating that the station on the first link is used as the recipient (or one of recipients). For example, the indication information is a station identifier STA_ID. The receiving address carried in the broadcast frame is the broadcast address, and the receiving address carried in the multicast frame is the multicast address.

Optionally, the first-type PPDU includes a triggering frame (triggering frame), and the triggering frame is used to schedule a station to send a TB PPDU. The triggering frame is a trigger frame, or a frame that carries a TRS control subfield.

S302: The non-AP MLD receives the first-type PPDUs on the first link by using a plurality of spatial streams, where the non-AP MLD supports the EML, and the first frame indicates the non-AP MLD to switch a spatial stream on each link to the first link for a frame exchange.

S303: When the non-AP MLD meets any preset condition in a preset condition set, the non-AP MLD switches the spatial stream on the first link back to each link to perform a listening operation.

Optionally, the non-AP MLD supports the EMLSR or the EMLMR. After the non-AP MLD successfully receives the initial frame or the initial control frame from the first AP when performing the listening operation on the first link, and before the end of the frame exchange between the non-AP MLD and the first AP associated with the first station in the non-AP MLD, the non-AP MLD receives the first-type PPDU on the first link by using the plurality of spatial streams. The initial frame or the initial control frame indicates the non-AP MLD to switch the spatial stream on each link to the first link for the frame exchange. The first-type PPDU is the MU PPDU, or the PPDU including the broadcast frame or the multicast frame. The first-type PPDU carries the indication information indicating that the station on the first link is used as the recipient (or one of the recipients). It should be understood that the indication information herein needs to indicate that the first station is used as the recipient (or one of the recipients). When the non-AP MLD meets any preset condition in the preset condition set, the non-AP MLD switches some spatial streams/antennas on the first link back to each link to perform the listening operation.

Optionally, the preset condition set includes one or more of the following preset conditions: a first preset condition, a second preset condition, and a third preset condition. For descriptions of the first preset condition and the third preset condition, refer to the corresponding descriptions in the embodiment shown in FIG. 7. Details are not described herein again.

Optionally, the preset condition set further includes one or more of the following preset conditions: The non-AP MLD receives a unicast frame on the first link, where a destination address of the unicast frame is another station; the non-AP MLD receives a frame of another basic service set on the first link; the non-AP MLD receives an HE MU PPDU on the first link, where a BSS color (color) carried in the HE MU PPDU is the same as a BSS color of a BSS to which a first station that is in the non-AP MLD and that operates on the first link belongs, the HE MU PPDU does not include a station identifier field of any RU that identifies the first station that is in the non-AP MLD and that operates on the first link as a recipient or one of recipients of the RU, and a value of a BSS color disabled field carried in an HE operation element most recently received by the non-AP MLD from the first AP is 0; and a carrier sensing mechanism indicates that a channel corresponding to the first link is idle at a TxPIFS slot boundary.

Optionally, the first-type PPDU includes the triggering frame, and the triggering frame is used to schedule the non-AP MLD to send the TB PPDU. After the non-AP MLD receives the first-type PPDU on the first link by using the plurality of spatial streams, the non-AP MLD sends the TB PPDU on the first link by using the plurality of spatial streams.

The behavior of the AP and the preset condition set provided in this embodiment of this application is still applicable to multi-user SM PS, provided that the non-AP MLD is replaced with a STA. "When the non-AP MLD meets any preset condition in a preset condition set, the non-AP MLD switches a spatial stream on the first link back to each link to perform a listening operation" is replaced with "When the STA determines that any preset condition in the preset condition set is met, the STA switches back to a single receive chain mode immediately".

It can be learned that in this embodiment of this application, both the AP and the station are restricted to use the first-type PPDUs in a frame exchange process, and the SM PS rule is modified, for example, some exceptional frames are excluded from the existing SM PS rule, to resolve the problem that the existing SM PS rule is not applicable to the EMLSR/EMLMR, so that a frame exchange end rule can be determined. In addition, the rule enables the AP to serve other STAs while serving a STA in the EMLSR mode, to perform multi-user communication, thereby further improving communication efficiency.

FIG. 10 is a fourth schematic flowchart of a communication method according to an embodiment of this application. A method for switching back to a listening operation after an exchange with an initial frame/initial control frame fails is described. A first AP may be a single-link AP, or may be an AP in an AP MLD. This is not limited in this embodiment of this application. As shown in FIG. 10, the communication method includes but is not limited to the following steps.

S401: After a non-AP MLD receives, on a first link, a first frame sent by the first AP and switches a spatial stream on each link to the first link, if the non-AP MLD determines that an exchange of the first frame fails, the non-AP MLD switches the spatial stream on the first link back to each link to perform a listening operation, where the non-AP MLD supports an EML.

Optionally, before step S401, the non-AP MLD may notify the first AP of the EML mode supported by the non-AP MLD. In an implementation, the non-AP MLD supports EMLSR. In another implementation, the non-AP MLD supports EMLMR. Further, the non-AP MLD supports multi-user EMLSR/EMLMR, and the non-AP MLD may further support single-user EMLSR/EMLMR. If the non-AP MLD supports the EMLSR, the first frame is an initial control frame. If the non-AP MLD supports the EMLMR, the first frame is an initial frame.

Optionally, the communication method further includes the following step.

S402: If the non-AP MLD meets any preset condition in a preset condition set within a first duration starting from a moment at which the first frame is received, the non-AP MLD determines that the exchange of the first frame fails.

Optionally, after the non-AP MLD receives, on the first link, the initial control frame or the initial frame sent by the first AP and switches the spatial stream on each link to the first link, if the non-AP MLD meets any preset condition in the preset condition set within the first duration (namely, $\Delta T$) starting from the moment at which the initial control frame or the initial frame is received, the non-AP MLD determines that the exchange with the initial control frame or the initial frame fails. In this case, the non-AP MLD immediately switches some spatial streams/antennas on the first link back to each link to perform the listening operation.

Optionally, the preset condition set includes one or more of the following preset conditions:

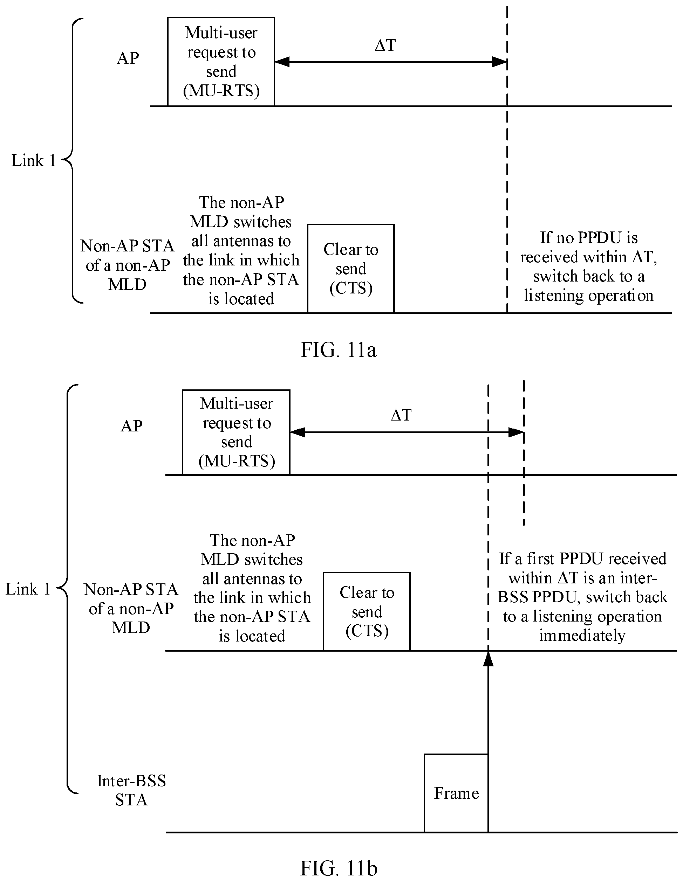

(1) A station that is in the non-AP MLD and that operates on the first link does not receive a PPDU within the first duration ($\Delta T$). FIG. 11a is a first schematic diagram of a preset condition according to an embodiment of this application. As shown in FIG. 11a, after an AP sends an MU-RTS frame, if a STA that is in a non-AP MLD and that operates on a link 1 does not receive a PPDU within a first duration ($\Delta T$) after receiving the MU-RTS frame, the non-AP MLD immediately switches some spatial streams/antennas on the link 1 back to each link to perform a listening operation.

(2) A first PPDU received within the first duration ($\Delta T$) by the station that is in the non-AP MLD and that operates on the first link is a PPDU of another BSS. FIG. 11b is a second schematic diagram of a preset condition according to an embodiment of this application. As shown in FIG. 11b, after an AP sends an MU-RTS frame, if a first PPDU received by a STA that is in a non-AP MLD and that operates on a link 1 within a first duration ($\Delta T$) after receiving the MU-RTS frame is from an inter-BSS (another BSS), the non-AP MLD immediately switches some spatial streams/antennas on the link 1 back to each link to perform a listening operation.

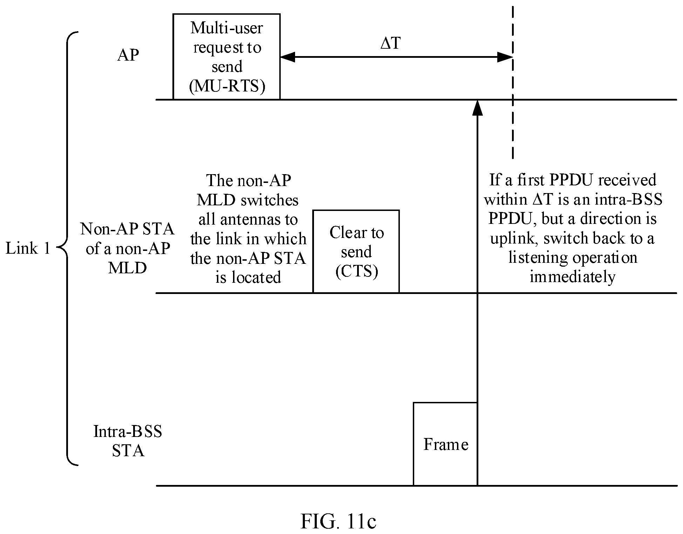

(3) The first PPDU received within the first duration ($\Delta T$) by the station that is in the non-AP MLD and that operates on the first link is an uplink PPDU of an intra-BSS (intra-BSS). FIG. 11c is a third schematic diagram of a preset condition according to an embodiment of this application. As shown in FIG. 11c, after an AP sends an MU-RTS frame, if a first PPDU received by a STA that is in a non-AP MLD and that operates on a link 1 within a first duration ($\Delta T$) after receiving the MU-RTS frame is from an intra-BSS (intra-BSS), but is uplink in a direction, the non-AP MLD immediately switches some spatial streams/antennas on the link 1 back to each link to perform a listening operation.

(4) The first PPDU received within the first duration ($\Delta T$) by the station that is in the non-AP MLD and that operates on the first link is a downlink PPDU in a BSS to which the station that is in the non-AP MLD and that operates on the first link belongs, and a recipient indicated by a station identifier field in the downlink PPDU is not the station that is in the non-AP MLD and that operates on the first link. In other words, the first PPDU received within the first duration ($\Delta T$) by the station that is in the non-AP MLD and that operates on the first link is an intra-BSS (intra-BSS) PPDU, but a STA-ID field indicates that the station is not the recipient.

(5) The first PPDU received within the first duration ($\Delta T$) by the station that is in the non-AP MLD and that operates on the first link includes a frame that has a unicast address, and a receiving address of the frame is not the station that is in the non-AP MLD and that operates on the first link; or the first PPDU includes a trigger frame, and an association identifier in any user information field in the trigger frame is inconsistent with an association identifier of the station that is in the non-AP MLD and that operates on the first link; or an association identifier indicating uplink OFDMA-based random access does not exist in the trigger frame. In other words, the first PPDU received within the first duration ($\Delta T$) by the station that is in the non-AP MLD and that operates on the first link includes the frame that has the unicast address, and the receive address is not the station that is in the non-AP MLD and that operates on the first link; or the first received PPDU includes the trigger frame, but an AID 12 in the any user information field is inconsistent with the AID of the station that is in the non-AP MLD and that operates on the first link; or the AID indicating uplink OFDMA-based random access does not exist.

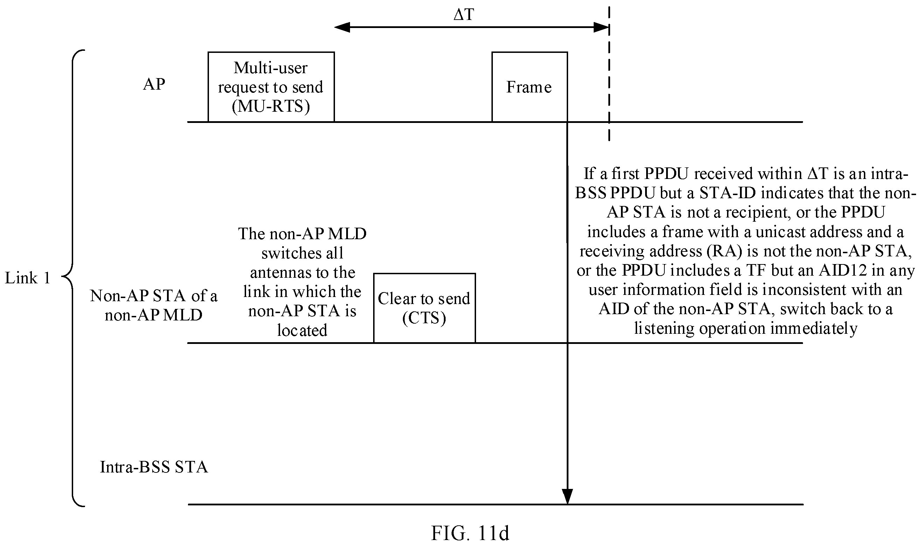

FIG. 11d is a fourth schematic diagram of a preset condition according to an embodiment of this application. As shown in FIG. 11d, after an AP sends an MU-RTS frame, if a STA that is in a non-AP MLD and that operates on a link 1 meets the foregoing condition (4) or (5) within a first duration ($\Delta T$) after receiving the MU-RTS frame, the non-AP MLD immediately switches some spatial streams/antennas on the link 1 back to each link to perform a listening operation.

It should be understood that, once any preset condition in the preset condition set is determined within $\Delta T$, an operation of switching some spatial streams/antennas on the first link back to each link to perform the listening operation may be immediately performed, in other words, switching does not need to be performed at the moment $\Delta T$.

Correspondingly, behavior of an AP further needs to be restricted to provide a basis for a non-AP MLD to determine whether an exchange with an initial control frame or an initial frame succeeds. Specifically, the first AP sends the first frame (the initial control frame or the initial frame) on the first link, where the first frame indicates the non-AP MLD to switch the spatial stream on each link to the first link for a frame exchange. After receiving a response frame (for example, an ACK frame) of the first frame, the first AP sends the PPDU. The PPDU includes a unicast frame, and a receiving address of the unicast frame indicates the station that is in the non-AP MLD and that operates on the first link. Alternatively, the PPDU includes a trigger frame, and the trigger frame is used to schedule the station that is in the non-AP MLD and that operates on the first link to perform uplink transmission. In addition, the first AP cannot send the first frame to the non-AP MLD on a second link within a time range after sending the first frame. The second link herein is a link in the non-AP MLD other than the first link. The time range herein is a sum of a duration (SwitchDelay) in which the non-AP MLD switches the spatial stream on the first link back to each link to perform the listening operation and the first duration (denoted as ΔT). In other words, it is assumed that a link through which the AP sends the initial control frame/initial frame is a link i, and after the AP receives the response frame of the initial control frame/initial frame, a first sent PPDU needs to include a unicast frame with a station that is in the non-AP MLD and that operates on the link i as a receiving, or needs to include a trigger frame for explicit scheduling the station that is in the non-AP MLD and that operates on the link i. In addition, the AP is not allowed to retransmit the initial control frame/initial frame to the non-AP MLD on any other link j (j≠i) within a time range of ΔT+SwitchDelay after sending the initial control frame/initial frame.

It can be learned that in this embodiment of this application, the behavior of the AP is restricted, and the first PPDU sent by the AP after the AP receives the response frame of the initial control frame/initial frame needs to meet a requirement. In this way, if a station side does not receive a corresponding PPDU within the first duration, it indicates that the exchange of the first frame fails.

Optionally, the first duration (ΔT) may be specified in a standard, or may be broadcast by the AP in a beacon frame or the like. The first duration may be greater than or equal to a time minimum value. Herein, the time minimum value (namely, a minimum value of the first duration) may be one of the following:

$$\Delta T_{min} = t_{cts} + 2t_{SIFS} + t_{preamble} + t_{MPDU};$$

$$\Delta T_{min} = t_{cts} + 2t_{SIFS} + t_{preamble};$$

and

$$\Delta T_{min} = t_{cts} + t_{SIFS} + t_{PIFS} + t_{aSlotTime},$$

where
ΔT represents the first duration, $\Delta T_{min}$ represents the minimum value of the first duration (namely, the minimum time value), $t_{cts}$ represents a transmission duration of a (clear to send, CTS) frame, $t_{SIFS}$ represents a duration of a short interframe space (SIFS), $T_{preamble}$ represents a receiving duration of a preamble, $t_{MPDU}$ represents a transmission duration of a medium access control (medium access control, MAC) protocol data unit (MAC Protocol Data Unit, MPDU), $t_{PIFS}$ represents a duration of a point coordination function interframe space (Point coordination function Interframe Space, PIFS), and $t_{aSlotTime}$ represents a duration of one slot (slot).

It should be understood that the technical solution provided in this embodiment of this application is still applicable to multi-user SM PS, provided that the non-AP MLD is replaced with a STA and the "first frame" is replaced with the "initial frame". "The non-AP MLD switches a spatial stream on the first link back to each link to perform a listening operation" is replaced with "The STA switches back to a single receive chain mode immediately". It should be further understood that this embodiment of this application may be implemented independently, or may be implemented together with any one of the foregoing embodiments. This is not limited in this application.

It can be learned that in this embodiment of this application, the behavior of the AP is restricted to provide a basis for the station side to determine whether the exchange with the initial control frame or the initial frame succeeds. A condition that the station side determines an exchange failure is designed, so that the initial frame/initial control frame can be switched back to the listening operation in time after the exchange fails. This improves a working mechanism of the EMLSR and/or the EMLMR, and can further improve working efficiency and switching efficiency of the EMLSR and/or the EMLMR.

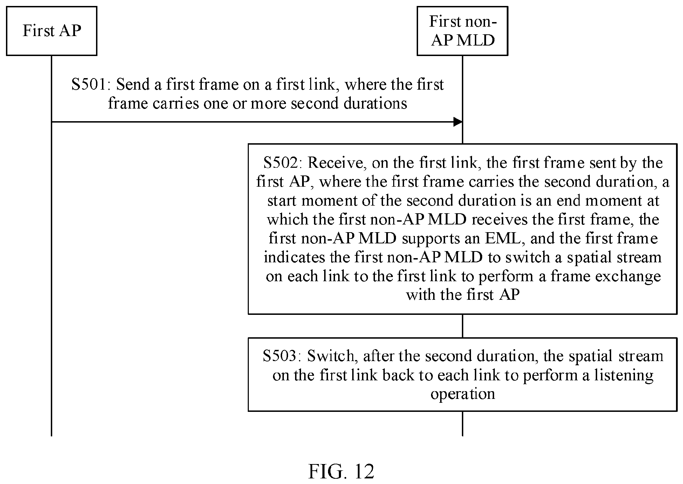

FIG. 12 is a fifth schematic flowchart of a communication method according to an embodiment of this application. The method describes how to simplify a working mechanism of EMLSR and/or EMLMR by setting a frame exchange duration. A first AP may be a single-link AP, or may be an AP in an AP MLD. This is not limited in this embodiment of this application. As shown in FIG. 12, the communication method includes but is not limited to the following steps.

S501: The first AP sends a first frame on a first link, where the first frame carries one or more second durations.

Optionally, the first frame may be an initial control frame, or may be an initial frame. The first frame carries the one or more second durations, and the first frame may further carry a duration field. If the first frame carries one second duration, the second duration may be a duration individually allocated to a first non-AP MLD, and a start moment of the second duration is an end moment at which the first non-AP MLD receives the first frame. Alternatively, the second duration may be a total duration allocated by the first AP to all non-AP MLDs (including the first non-AP MLD) that support the EMLSR/EMLMR and that are scheduled by the first AP. In this case, a start moment of the second duration is an end moment at which each non-AP MLD receives the first frame. If the first frame carries a plurality of second durations, and the plurality of second durations include a second duration allocated to a first non-AP MLD, a start moment of the second duration allocated to the first non-AP MLD is a start moment at which the first non-AP MLD receives the first frame. The first non-AP MLD supports the EMLSR or the EMLMR.

Optionally, the first frame indicates the non-AP MLDs (including the first non-AP MLD) to switch a spatial stream on each link to the first link to perform a frame exchange with the first AP. The second duration is used to enable the non-AP MLDs (including the first non-AP MLD) to switch some spatial streams/antennas on the first link back to each link to perform a listening operation after the second duration.

S502: The first non-AP MLD receives, on the first link, the first frame sent by the first AP, where the first frame carries the second duration, the start moment of the second duration is the end moment at which the first non-AP MLD receives the first frame, the first non-AP MLD supports an EML, and the first frame indicates the first non-AP MLD to switch the spatial stream on each link to the first link to perform the frame exchange with the first AP.

S503: The first non-AP MLD switches, after the second duration, the spatial stream on the first link back to each link to perform the listening operation.

Optionally, before step S501, the first non-AP MLD may notify the first AP of the EML mode supported by the first non-AP MLD. In an implementation, the first non-AP MLD supports the EMLSR. In another implementation, the first non-AP MLD supports the EMLMR. Further, the first non-AP MLD supports multi-user EMLSR/EMLMR, or the first non-AP MLD supports single-user EMLSR/EMLMR. Alternatively, the first non-AP MLD supports both multi-user EMLSR/EMLMR and single-user EMLSR/EMLMR. If the non-AP MLD supports the EMLSR, the first frame is the initial control frame. If the non-AP MLD supports the EMLMR, the first frame is the initial frame.

Optionally, the first non-AP MLD receives, on the first link, the first frame (namely, the initial control frame or the initial frame) sent by the first AP, where the first frame carries the second duration. The second duration may be the duration individually allocated by the first AP to the first non-AP MLD, or may be the total duration allocated by the first AP to all the non-AP MLDs that support the EMLSR/EMLMR and that are scheduled by the first AP. The start moment of the second duration is the end moment at which the first non-AP MLD receives the first frame. After the first non-AP MLD receives the first frame, the first non-AP MLD switches some spatial streams/antennas on each link to the first link to perform the frame exchange with the first AP. The first non-AP MLD switches, after the second duration, the spatial stream on the first link back to each link to perform the listening operation.

In an implementation, if the second duration is the duration (denoted as T1) individually allocated by the first AP to the first non-AP MLD, the second duration may include a duration in which the first AP performs a frame exchange with the first non-AP MLD. Optionally, the second duration may further include a duration in which the first non-AP MLD switches the spatial stream on each link to the first link.

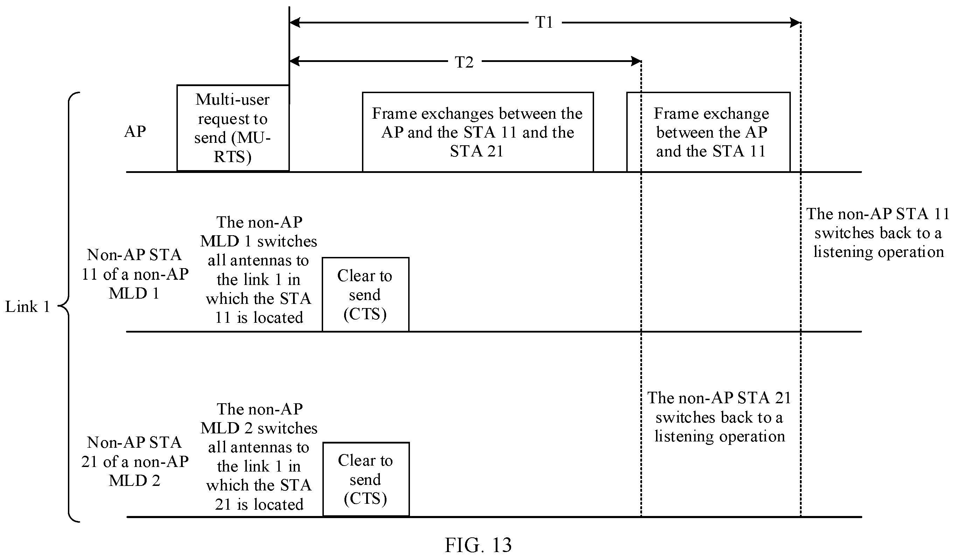

For example, refer to FIG. 13. FIG. 13 is a schematic diagram of an exchange between an AP and a non-AP MLD that supports EMLSR according to an embodiment of this application. As shown in FIG. 13, the AP indicates, in an MU-RTS frame, one frame exchange duration (namely, a second duration) for each STA that is in each non-AP MLD and that operates on a link 1. Therefore, frame exchange durations of STAs that are in different non-AP MLDs and that operate on the link 1 may be different. In FIG. 13, a frame exchange duration of a non-AP STA 11 that is in a non-AP MLD 1 and that operates on the link 1 is T1, and a frame exchange duration of a non-AP STA 21 that is in a non-AP MLD 2 and that operates on the link 1 is T2. After receiving the MU-RTS frame, the non-AP MLD that supports EMLSR completes spatial stream/antenna switching on the link 1, and performs a frame exchange with the AP within a frame exchange duration of the non-AP MLD that supports EMLSR from a moment at which the MU-RTS frame is successfully sent/received. The non-AP MLD that supports EMLSR switches the spatial stream/antenna on the link 1 back to each link to perform a listening operation when the frame exchange duration of the non-AP MLD that supports EMLSR expires. Optionally, the frame exchange duration (namely, a second duration) may be set to TXOP durations allocated by the AP to different STAs, and may be determined by the AP based on experience and a channel condition, to complete frame exchanges with the corresponding STAs within this duration.

It can be learned that in this implementation, the AP can allocate different durations to different STAs, and flexibility is higher.

In another implementation, if the second duration is the total duration (denoted as T) allocated by the first AP to all the non-AP MLDs that support the EMLSR/EMLMR and that are scheduled by the first AP, the second duration may include a duration in which the first AP performs frame exchanges with a plurality of non-AP MLDs (namely, all the non-AP MLDs that support the EMLSR/EMLMR and that are scheduled by the first AP). Optionally, the second duration may further include a duration in which each of the plurality of non-AP MLDs switches a spatial stream on another link to the first link. The plurality of non-AP MLDs include the first non-AP MLD.

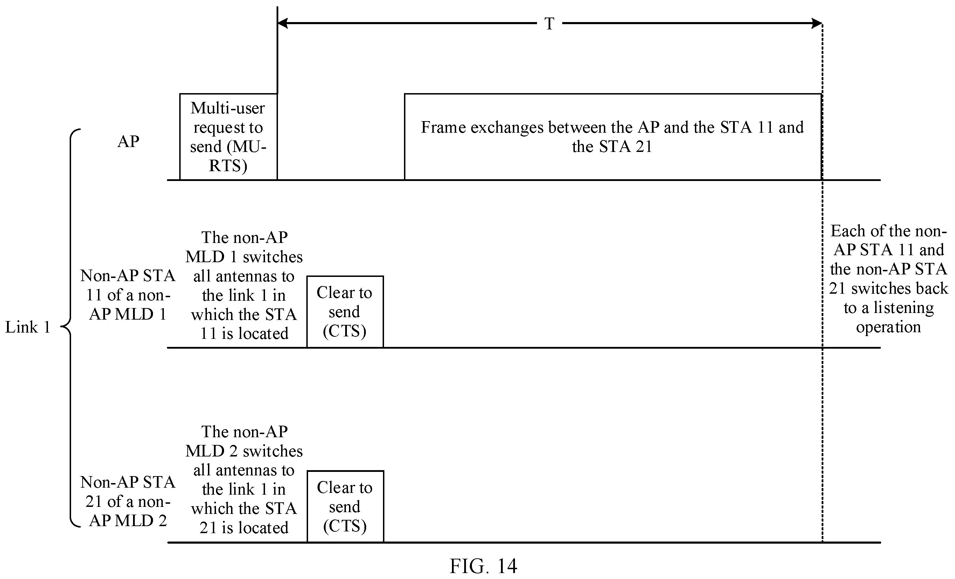

For example, refer to FIG. 14. FIG. 14 is a schematic diagram of another exchange between an AP and a non-AP MLD that supports EMLSR according to an embodiment of this application. As shown in FIG. 14, the AP carries a fixed duration T in an MU-RTS frame. After receiving the MU-RTS frame, the non-AP MLD (there may be a plurality of non-AP MLDs) that supports EMLSR completes spatial stream/antenna switching on a link 1, and performs a frame exchange with the AP within the duration T from a moment at which the MU-RTS frame is successfully sent/received. Each non-AP MLD that supports EMLSR switches a spatial stream/antenna on the link 1 back to each link to perform a listening operation when the duration T expires. Optionally, the duration T (namely, a second duration) may be set to a TXOP Duration of the AP on the link 1, or may be shorter. For example, the duration T is determined by the AP based on experience and a channel condition, to complete a frame exchange within the duration T.

It can be learned that in this implementation, the working mechanism of the EMLSR/EMLMR can be further simplified by using the fixed duration, and implementation complexity is lower.

It should be understood that the FIG. 13 and FIG. 14 are described by using only an example in which the non-AP MLD supports the EMLSR. The non-AP MLD supports the EMLMR in the same way as the non-AP MLD supports the EMLSR, provided that the "MU-RTS frame" is replaced with the "initial frame" and the "EMLSR" is replaced with the "EMLMR".

Optionally, the second duration may be located in a common information field or a user information field of the first frame. In an example, if the second duration is the total duration allocated by the first AP to all the non-AP MLDs that support the EMLSR/EMLMR and that are scheduled by the first AP, the second duration may be located in the common information field of the first frame. In another example, if the second duration is the duration individually allocated by the first AP to the first non-AP MLD, the second duration may be located in the user information field or the common information field of the first frame.

Optionally, the second duration is less than or equal to a TXOP duration (duration) of the first AP on the first link.

It should be understood that the technical solution provided in this embodiment of this application is still applicable to multi-user SM PS, provided that the non-AP MLD is replaced with a STA and the "first frame" is replaced with the "initial frame". "The first non-AP MLD switches, after the second duration, the spatial stream on the first link back to each link to perform the listening operation" is replaced with "The STA switches back to a single receive chain mode immediately after the second duration". Optionally, this embodiment of this application may be implemented independently, or may be implemented together with any one or more of the foregoing embodiments. This is not limited in this application.

It can be learned that in this embodiment of this application, the frame exchange duration determined by the AP is carried in the initial control frame or the initial frame, and after the frame exchange duration, the listening operation is directly switched back to. Therefore, the working mechanism of the EMLSR and/or EMLMR is simplified, and logic running complexity and the implementation complexity can be reduced.

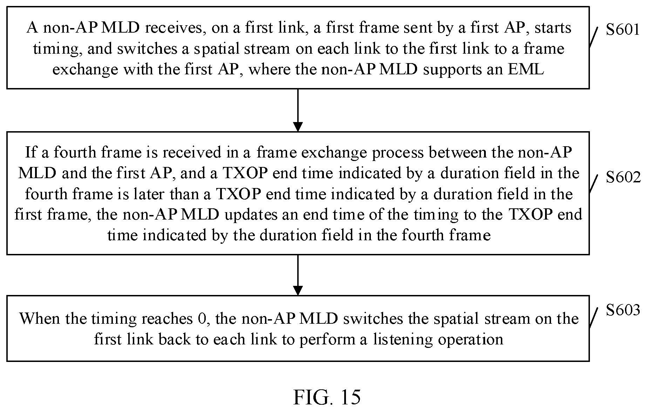

FIG. 15 is a sixth schematic flowchart of a communication method according to an embodiment of this application. The method provides description that a plurality of stations simplify a working mechanism of EMLSR and/or EMLMR by jointly maintaining one timer (timer). A first AP may be a single-link AP, or may be an AP in an AP MLD. This is not limited in this embodiment of this application. As shown in FIG. 15, the communication method includes but is not limited to the following steps.

S601: A non-AP MLD receives, on a first link, a first frame sent by the first AP, starts timing, and switches a spatial stream on each link to the first link to perform a frame exchange with the first AP, where the non-AP MLD supports an EML.

S602: If a fourth frame is received in a frame exchange process between the non-AP MLD and the first AP, and a TXOP end time indicated by a duration field in the fourth frame is later than a TXOP end time indicated by a duration field in the first frame, the non-AP MLD updates an end time of the timing to the TXOP end time indicated by the duration field in the fourth frame.

S603: When the timing reaches 0, the non-AP MLD switches the spatial stream on the first link back to each link to perform a listening operation.

Optionally, before step S601, the non-AP MLD may notify the first AP of the EML mode supported by the non-AP MLD. In an implementation, the non-AP MLD supports the EMLSR. In another implementation, the non-AP MLD supports the EMLMR. Further, the non-AP MLD supports multi-user EMLSR/EMLMR, or the non-AP MLD supports single-user EMLSR/EMLMR. Alternatively, the non-AP MLD supports both multi-user EMLSR/EMLMR and single-user EMLSR/EMLMR. If the non-AP MLD supports the EMLSR, the first frame is an initial control frame. If the non-AP MLD supports the EMLMR, the first frame is an initial frame.

Optionally, the first AP may send the first frame to a plurality of non-AP MLDs on the first link, and the plurality of non-AP MLDs support a same EML mode. For example, the plurality of non-AP MLDs all support the EMLSR, or the plurality of non-AP MLDs all support the EMLMR. Alternatively, the plurality of non-AP MLDs support both the EMLSR and the EMLMR. After receiving the first frame on the first link, each non-AP MLD starts timing, and switches a spatial stream/antenna on each link of the non-AP MLD to the first link to perform a frame exchange with the first AP. In other words, after receiving the first frame, the plurality of non-AP MLDs jointly maintain one timer (timer), and the timer is used to record a remaining TXOP duration of the first AP. During initialization (in other words, after the first frame is received), the timer is set to a duration indicated by the duration field in the first frame. If the fourth frame is received in a frame exchange process between a non-AP MLD in the plurality of non-AP MLDs and the first AP, and the TXOP end time indicated by the duration field in the fourth frame is later than the TXOP end time indicated by the duration field in the first frame, the non-AP MLD updates the end time of the timing to the TXOP end time indicated by the duration field in the fourth frame. In other words, the non-AP MLD modifies an end time of the timer (timer) jointly maintained by the plurality of non-AP MLDs to the TXOP end time indicated by the duration field in the fourth frame. When the timing reaches 0 (in other words, when the timer is 0), each non-AP MLD switches some spatial streams/antennas on a first link back to each link to perform a listening operation.

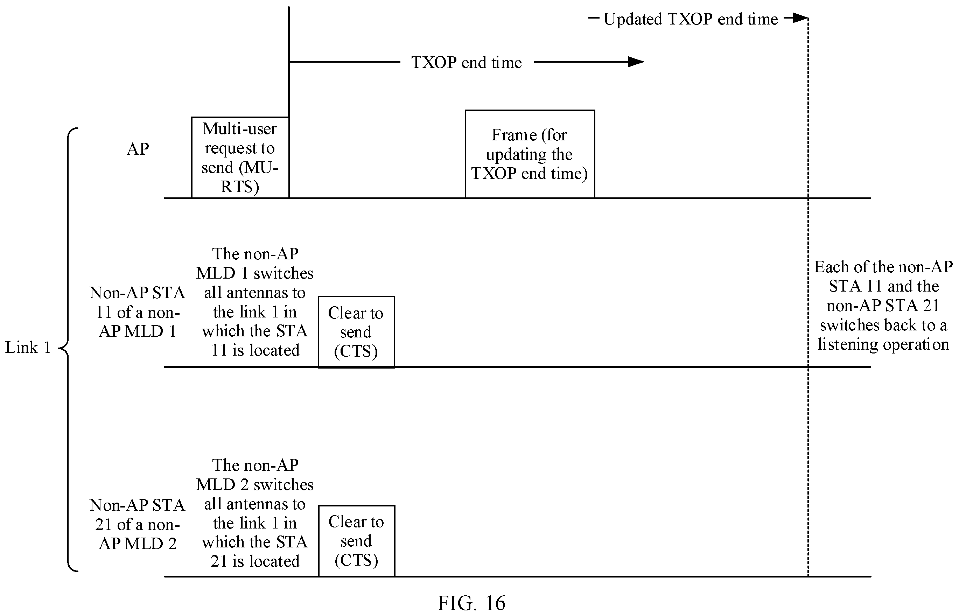

For example, refer to FIG. 16. FIG. 16 is a schematic diagram of working of EMLSR based on a TXOP duration according to an embodiment of this application. As shown in FIG. 16, an AP sends MU-RTS frames to a non-AP MLD 1 and a non-AP MLD 2 on a link 1. After the non-AP MLD 1 and the non-AP MLD 2 respectively receive the MU-RTS frames on the link 1, a STA 11 that is in the non-AP MLD 1 and that operates on the link 1 and a STA 21 that is in the non-AP MLD 2 and that operates on the link 1 jointly maintain one timer (timer). The timer is used to record a remaining TXOP duration of the AP. During initialization, the timer (timer) jointly maintained by the STA 11 and the STA 21 is set to a duration indicated by a duration field of the MU-RTS frame. In processes of performing frame exchanges between the AP and the STA 11 and the STA 21, if a TXOP end time is updated (that is, extended) by using a frame sent by the AP, the timer (timer) jointly maintained by the STA 11 and the STA21 also needs to be updated accordingly. To be specific, an end time of the timer is updated to an end time indicated by a duration field in the frame. When the timer reaches 0, each non-AP MLD switches a spatial stream/antenna on the link 1 back to each link to perform a listening operation.

It should be understood that only a working procedure of the EMLSR is used as an example for description in FIG. 16. A working procedure of the EMLMR is the same as the working procedure of the EMLSR, provided that the "MU-RTS frame" is replaced with the "initial frame" and the "EMLSR" is replaced with the "EMLMR".

It should be understood that the technical solution provided in this embodiment of this application is still applicable to multi-user SM PS, provided that the non-AP MLD is replaced with a STA and the "first frame" is replaced with the "initial frame". "When the timing reaches 0, the non-AP MLD switches a spatial stream on the first link back to each link to perform a listening operation" is replaced with "The STA switches back to a single receive chain mode immediately when the timing reaches 0". Optionally, this embodiment of this application may be implemented independently, or may be implemented together with any one or more of the foregoing embodiments. This is not limited in this application.

It can be learned that in this embodiment of this application, a plurality of stations (a plurality of stations that operate on a same link as an AP and belong to different non-AP MLDs) are restricted to jointly maintain one timer (timer). When any station receives TXOP end time update information in a frame exchange process, an end time of the timer is updated to a latest TXOP end time. When the timer reaches 0, a listening operation is switched back to. Therefore, in this embodiment of this application, each station does not need to maintain a timer of the station. Therefore, the working mechanism of the EMLSR and/or the EMLMR is simplified, and logic running complexity and implementation complexity can be reduced. In addition, in this embodiment of this application, an initial control frame or an initial frame does not need to carry an additional specified duration, so that a non-AP MLD completes a frame exchange with the AP within this duration, thereby reducing signaling overheads.

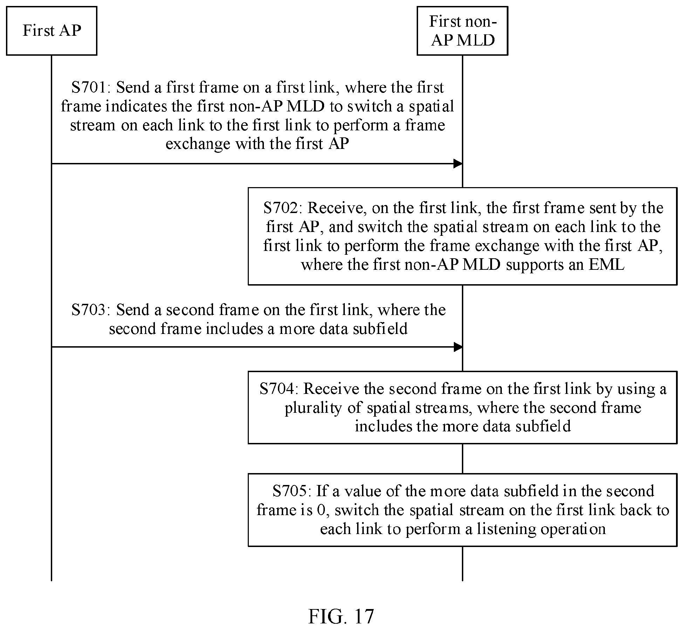

FIG. 17 is a seventh schematic flowchart of a communication method according to an embodiment of this application. The method provides description that a working mechanism of EMLSR and/or EMLMR is simplified by using an indication of an existing more data subfield. A first AP may be a single-link AP, or may be an AP in an AP MLD. This is not limited in this embodiment of this application. As shown in FIG. 17, the communication method includes but is not limited to the following steps.

S701: The first AP sends a first frame on a first link, where the first frame indicates a first non-AP MLD to switch a spatial stream on each link to the first link to perform a frame exchange with the first AP.

S702: The first non-AP MLD receives, on the first link, the first frame sent by the first AP, and switches the spatial stream on each link to the first link to perform the frame exchange with the first AP, where the first non-AP MLD supports an EML.

Optionally, before step S701, the first non-AP MLD may notify the first AP of the EML mode supported by the first non-AP MLD. In an implementation, the first non-AP MLD supports the EMLSR. In another implementation, the first non-AP MLD supports the EMLMR. Further, the first non-AP MLD supports multi-user EMLSR/EMLMR, or the first non-AP MLD supports single-user EMLSR/EMLMR. Alternatively, the first non-AP MLD supports both multi-user EMLSR/EMLMR and single-user EMLSR/EMLMR. If the first non-AP MLD supports the EMLSR, the first frame is an initial control frame. If the first non-AP MLD supports the EMLMR, the first frame is an initial frame.

Optionally, the first AP sends the initial control frame or the initial frame on the first link. The first non-AP MLD receives the initial control frame or the initial frame when performing a listening operation on the first link, and switches some spatial streams/antennas on each link to the first link to perform the frame exchange with the first AP.

S703: The first AP sends a second frame on the first link, where the second frame includes a more data subfield.

S704: The first non-AP MLD receives the second frame on the first link by using a plurality of spatial streams, where the second frame includes the more data subfield.

S705: If a value of the more data subfield in the second frame is 0, the first non-AP MLD switches the spatial stream on the first link back to each link to perform the listening operation.

In an implementation, in a process of performing the frame exchange between the first AP and the first non-AP MLD on the first link, the first AP sends the second frame on the first link, where the second frame includes the more data (more data) subfield. For details of the value and a meaning of the more data subfield, refer to the section 9.2.4.1.8 of the 802.11ax or 802.11be standard. Details are not described herein. Correspondingly, the first non-AP MLD receives the second frame on the first link by using the plurality of spatial streams. It should be understood that an AP may send a frame carrying a more data subfield of each station, for example, a data frame, to indicate whether the AP still has data for the STA in a next frame. If a value of the more data subfield is 1, it indicates that the AP still has the data for the STA in the next frame. If the value of the more data subfield is 0, it indicates that the AP does not have the data for the STA in the next frame. Herein, the second frame carries a more data (more data) subfield of a STA that is in the first non-AP MLD and that operates on the first link. If a value of the more data subfield in the second frame is 0, it indicates that the AP does not have, in a next frame, data for the STA that is in the first non-AP MLD and that operates on the first link. In this case, the first non-AP MLD switches the spatial stream on the first link back to each link to perform the listening operation. Optionally, if the value of the more data subfield in the second frame is 0, after sending of a response frame of the second frame is completed, the first non-AP MLD may switch the spatial stream on the first link back to each link to perform the listening operation. Certainly, if the value of the more data subfield in the second frame is 1, it indicates that the AP still has, in the next frame, the data for the STA that is in the first non-AP MLD and that operates on the first link. In this case, the first non-AP MLD keeps receiving on the first link by using the plurality of spatial streams.

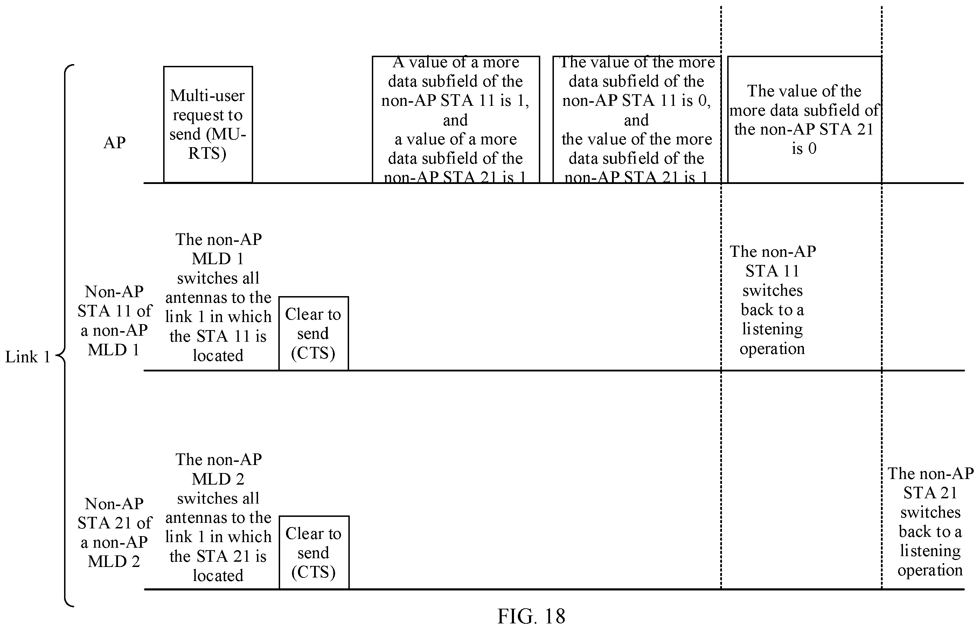

For example, refer to FIG. 18. FIG. 18 is a schematic diagram of working of EMLSR based on a more data subfield according to an embodiment of this application. As shown in FIG. 18, an AP sends an MU-RTS frame on a link 1. After receiving the MU-RTS frame, a non-AP MLD (there may be a plurality of non-AP MLDs) that support the EMLSR completes spatial stream/antenna switching on the link 1. In a process in which every STA (which refers to a STA 11 that is in a non-AP MLD 1 and that operates on the link 1, or a STA21 that is in a non-AP MLD 2 and that operates on the link 1 herein) receives a data packet of the AP, if the STA finds that a value of a more data subfield is 0, after the STA completes sending of a response frame, a non-AP MLD to which the STA belongs switches some spatial streams/antennas on the link 1 back to each link to perform a listening operation. On the contrary, if the value of the more data subfield is 1, the STA continues operating on this link (namely, the link 1) by using a plurality of spatial streams/antennas.

It should be understood that only a working procedure of the EMLSR is used as an example for description in FIG. 18. A working procedure of the EMLMR is the same as the working procedure of the EMLSR, provided that the "MU-RTS frame" is replaced with the "initial frame" and the "EMLSR" is replaced with the "EMLMR".

It can be learned that in this implementation, behavior of a non-AP MLD is restricted, to simplify the working mechanism of the EMLSR/EMLMR, and a signaling indication of the existing more data subfield may be completely reused, without changing a value and a meaning of the more data subfield.

In another implementation, in a process of performing the frame exchange between the first AP and the first non-AP MLD on the first link, the first AP sends the second frame on the first link, where the second frame includes the more data (more data) subfield. When the value of the more data subfield is 0, it indicates (which may be an implicit indication or an explicit indication) that the first non-AP MLD switches the spatial stream on the first link back to each link to perform the listening operation. When the value of the more data subfield is 1, it indicates (which may be an implicit indication or an explicit indication) that the first non-AP MLD keeps receiving on the first link by using the plurality of spatial streams. Correspondingly, the first non-AP MLD receives the second frame on the first link by using the plurality of spatial streams. If the value of the more data subfield in the second frame is 0, the first non-AP MLD switches the spatial stream on the first link back to each link based on an indication of the more data subfield to perform the listening operation. Optionally, if the value of the more data subfield in the second frame is 0, after sending of a response frame of the second frame is completed, the first non-AP MLD may switch, based on the indication of the more data subfield, the spatial stream on the first link back to each link to perform the listening operation. Certainly, if the value of the more data subfield in the second frame is 1, it indicates that the first non-AP MLD keeps receiving on the first link by using the plurality of spatial streams. In this case, the first non-AP MLD keeps receiving on the first link by using the plurality of spatial streams.

It can be learned that in this implementation, a new meaning (which may be the implicit indication) is added to the more data subfield, to simplify the working mechanism of the EMLSR/EMLMR. In addition, the meaning is clear and clear, which facilitates parsing on a station side.

In still another implementation, the first frame carries one or more second durations. For details, refer to the corresponding descriptions in the embodiment shown in FIG. 12. Details are not described herein again. For ease of description, one second duration is used as an example below, and the second duration may be used by the first non-AP MLD. In other words, the second duration is a total duration allocated by the first AP to all non-AP MLDs (including the first non-AP MLD) that support the EMLSR/EMLMR and that are scheduled by the first AP. Alternatively, the second duration is a duration individually allocated by the first AP to the first non-AP MLD. A start moment of the second duration is an end moment at which the first non-AP MLD receives the first frame. When the first non-AP MLD receives the first frame on the first link, the first non-AP MLD starts timing. Before the timing reaches the second duration, if the value of the more data subfield in the second frame received by the first non-AP MLD on the first link is 0, the first non-AP MLD switches the spatial stream on the first link back to each link to perform the listening operation. If the value of the more data subfield in the second frame received by the first non-AP MLD on the first link is 1, the first non-AP MLD keeps receiving on the first link by using the plurality of spatial streams. If the timing reaches the second duration, regardless of whether the value of the more data subfield in the second frame received by the first non-AP MLD on the first link is 1 or 0, the first non-AP MLD switches the spatial stream on the first link back to each link to perform the listening operation.

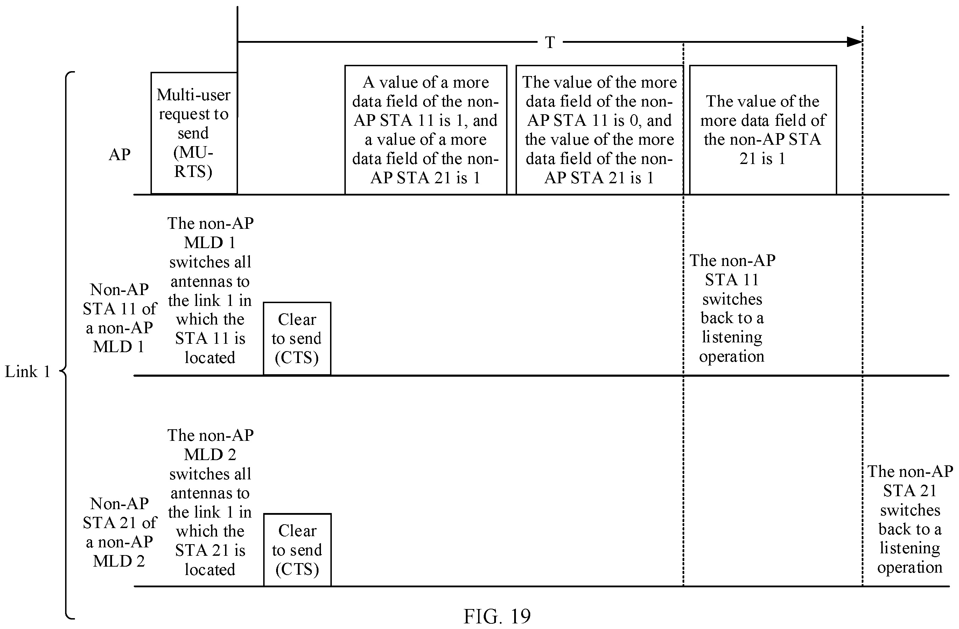

For example, refer to FIG. 19. FIG. 19 is a schematic diagram of working of EMLSR based on a combination of a more data subfield and a duration according to an embodiment of this application. As shown in FIG. 19, a fixed duration T is used as an example. An AP sends an MU-RTS frame carrying the fixed duration T. After receiving the MU-RTS frame, a non-AP MLD (there may be a plurality of non-AP MLDs) that supports the EMLSR completes spatial stream/antenna switching on a link 1, and performs a frame exchange with the AP within the duration T from a moment at which the MU-RTS frame is successfully sent/received. Before the duration T expires, in a process in which every STA (which refers to a STA 11 that is in a non-AP MLD 1 and that operates on the link 1, or a STA 21 that is in a non-AP MLD 2 and that operates on the link 1 herein) receives a data packet of the AP, if the STA finds that a value of a more data subfield is 0, after the non-AP STA completes sending of a response frame, a non-AP MLD to which the STA belongs switches a spatial stream/antenna on the link 1 back to each link to perform a listening operation. On the contrary, if the value of the more data subfield is 1, the STA continues operating on this link (namely, the link 1) by using a plurality of spatial streams/antennas. When the duration T expires, regardless of a value of a recent more data subfield, the non-AP MLD to which the STA belongs needs to switch the spatial stream/antenna on the link 1 back to each link to perform the listening operation.

It should be understood that only a working procedure of the EMLSR is used as an example for description in FIG. 19. A working procedure of the EMLMR is the same as the working procedure of the EMLSR, provided that the "MU-RTS frame" is replaced with the "initial frame" and the "EMLSR" is replaced with the "EMLMR". In addition, in FIG. 19, only the fixed duration T is used as an example for description. In some embodiments, the fixed duration T may alternatively be replaced with the duration T1 individually allocated by the first AP to the first non-AP MLD.

It can be learned that in this implementation, whether the non-AP MLD performs switching is determined by using the combination of the more data subfield and the duration, to resolve a problem that the non-AP MLD cannot switch back to the listening operation because the non-AP MLD incorrectly decodes the value 0 of the more data subfield to the value 1 of the more data subfield when the more data subfield is used independently.

It should be understood that, the technical solution provided in this embodiment of this application does not limit whether the STA that is in the non-AP MLD and that operates on the first link is in an energy saving (PS) mode or an active (Active) mode. In other words, the technical solution provided in this embodiment of this application may be applicable to both a STA in a PS mode and an STA in an active mode.

It should be further understood that the technical solution provided in this embodiment of this application is still applicable to multi-user SM PS, provided that the non-AP MLD is replaced with a STA and the "first frame" is replaced with the "initial frame". "The non-AP MLD switches a spatial stream on the first link back to each link to perform the listening operation" is replaced with "The STA switches back to a single receive chain mode immediately". Optionally, this embodiment of this application may be implemented independently, or may be implemented together with any one or more of the foregoing embodiments. This is not limited in this application.

It can be learned that in this embodiment of this application, an existing signaling indication is used and/or the behavior of the non-AP MLD is restricted, and a timer does not need to be maintained. Therefore, the working mechanism of the EMLSR and/or the EMLMR is simplified, and logic running complexity and implementation complexity can be reduced.

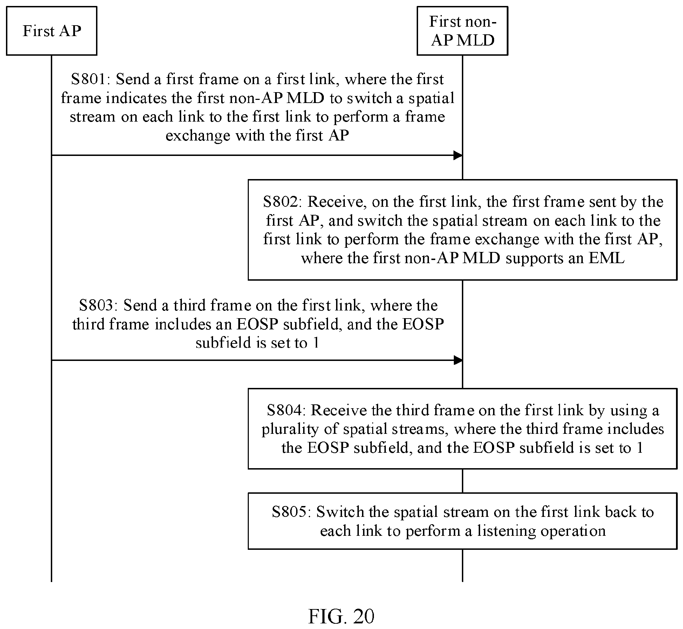

FIG. 20 is an eighth schematic flowchart of a communication method according to an embodiment of this application. The method provides description that a working mechanism of EMLSR and/or EMLMR is simplified by using an indication of an existing end of service period (End of Service Period, EOSP) subfield. A first AP may be a single-link AP, or may be an AP in an AP MLD. This is not limited in this embodiment of this application. As shown in FIG. 20, the communication method includes but is not limited to the following steps.

S801: The first AP sends a first frame on a first link, where the first frame indicates a first non-AP MLD to switch a spatial stream on each link to the first link to perform a frame exchange with the first AP.

S802: The first non-AP MLD receives, on the first link, the first frame sent by the first AP, and switches the spatial stream on each link to the first link to perform the frame exchange with the first AP, where the first non-AP MLD supports an EML.

Optionally, for implementations of step S801 and step S802 in this embodiment of this application, refer to implementations of step S701 and step S702 in the foregoing Embodiment 7. Details are not described herein again.

S803: The first AP sends a third frame on the first link, where the third frame includes an EOSP subfield, and the EOSP subfield is set to 1.

S804: The first non-AP MLD receives the third frame on the first link by using a plurality of spatial streams, where the third frame includes the EOSP subfield, and the EOSP subfield is set to 1.

S805: The first non-AP MLD switches the spatial stream on the first link back to each link to perform a listening operation.

Optionally, the third frame may be a quality of service (Quality of Service, QoS) data frame or a quality of service null (QoS Null) frame. The third frame carries the EOSP subfield, and the EOSP subfield is set to 1. For details of a value and a meaning of the EOSP subfield, refer to descriptions in the section 9.2.4.5.3 of the 802.11REVmd standard. Details are not described herein.

In an implementation, if the first AP intends to end the frame exchange with the first non-AP MLD, the first AP may send the third frame on the first link, where the third frame includes the EOSP subfield, and the EOSP subfield is set to 1. After receiving the third frame on the first link by using the plurality of spatial streams/a plurality of antennas, the first non-AP MLD switches some spatial streams/antennas on the first link back to each link to perform the listening operation. In other words, the first AP may send a frame, for example, a QoS data frame or a QoS null frame, to a STA that is in the first non-AP MLD and that operates on the first link, where the frame carries an EOSP subfield, and the EOSP subfield is set to 1. After the STA receives the frame, the first non-AP MLD switches the spatial stream/antenna on the first link back to each link to perform the listening operation. The first AP may send the third frame in a unicast manner, or may send the third frame in a multicast or broadcast manner. This is not limited in this embodiment of this application. If the first AP further needs to perform the frame exchange with the first non-AP MLD, the first AP may not send the third frame.

It can be learned that in this implementation, switching of a non-AP MLD is controlled by using an EOSP subfield sent by an AP, and a station in the non-AP MLD is not required to maintain a timer, thereby simplifying an operation on a station side. In addition, in this implementation, a signaling indication of the existing EOSP subfield may be completely reused, without changing a value and a meaning of the EOSP subfield.

In another implementation, if the first AP intends to end the frame exchange with the first non-AP MLD, the first AP may send the third frame on the first link, where the third frame includes the EOSP subfield. When the EOSP subfield is set to 1, it indicates that the first non-AP MLD switches the spatial stream/antenna on the first link back to each link to perform the listening operation. After receiving the third frame on the first link by using the plurality of spatial streams/a plurality of antennas, the first non-AP MLD switches the stream/antenna on the first link back to each link to perform the listening operation based on an indication of the EOSP subfield in the third frame. The first AP may send the third frame in a unicast manner, or may send the third frame in a multicast or broadcast manner. This is not limited in this embodiment of this application. If the first AP further needs to perform the frame exchange with the first non-AP MLD, the first AP may not send the third frame.

It can be learned that in this implementation, a new meaning (which may be an implicit indication) is added to the EOSP subfield, to simplify the working mechanism of the EMLSR/EMLMR. In addition, the meaning is clear and clear, which facilitates parsing on a station side.

In still another implementation, the first frame carries one or more second durations. For details, refer to the corresponding descriptions in the embodiment shown in FIG. 12. Details are not described herein again. For ease of description, one second duration is used as an example below, and the second duration may be used by the first non-AP MLD. In other words, the second duration is a total duration allocated by the first AP to all non-AP MLDs (including the first non-AP MLD) that support the EMLSR/EMLMR and that are scheduled by the first AP. Alternatively, the second duration is a duration individually allocated by the first AP to the first non-AP MLD. A start moment of the second duration is an end moment at which the first non-AP MLD receives the first frame. When the first non-AP MLD receives the first frame on the first link, the first non-AP MLD starts timing. Before the timing reaches the second duration, if the first non-AP MLD receives the third frame on the first link, where the third frame includes the EOSP subfield, and the EOSP subfield is set to 1, the first non-AP MLD switches the spatial stream on the first link back to each link to perform the listening operation. If the timing reaches the second duration, regardless of whether the first non-AP MLD receives the third frame on the first link, the first non-AP MLD switches the spatial stream on the first link back to each link to perform the listening operation.

It can be learned that in this implementation, whether the non-AP MLD performs switching is determined by using the combination of the EOSP subfield and the duration, to resolve a problem that the non-AP MLD cannot switch back to the listening operation because the non-AP MLD does not receive the EOSP subfield due to a reason such as channel quality.

It should be understood that, the technical solution provided in this embodiment of this application does not limit whether the STA that is in the non-AP MLD and that operates on the first link is in an energy saving (PS) mode or an active (Active) mode. In other words, the technical solution provided in this embodiment of this application may be applicable to both a STA in a PS mode and an STA in an active mode.

It should be further understood that the technical solution provided in this embodiment of this application is still applicable to multi-user SM PS, provided that the non-AP MLD is replaced with a STA and the "first frame" is replaced with the "initial frame". "The non-AP MLD switches a spatial stream on the first link back to each link to perform the listening operation" is replaced with "The STA switches back to a single receive chain mode immediately". Optionally, this embodiment of this application may be implemented independently, or may be implemented together with any one or more of the foregoing embodiments. This is not limited in this application.

It can be learned that in this embodiment of this application, when an AP intends to end a frame exchange with a non-AP MLD, the AP sends a frame, carries an EOSP subfield in the frame, and sets the EOSP subfield to 1, so that the non-AP MLD switches back to a listening operation after receiving the frame. There is no need to maintain a timer, thereby simplifying the working mechanism of the EMLSR and/or the EMLMR, and reducing logic running complexity and implementation complexity.

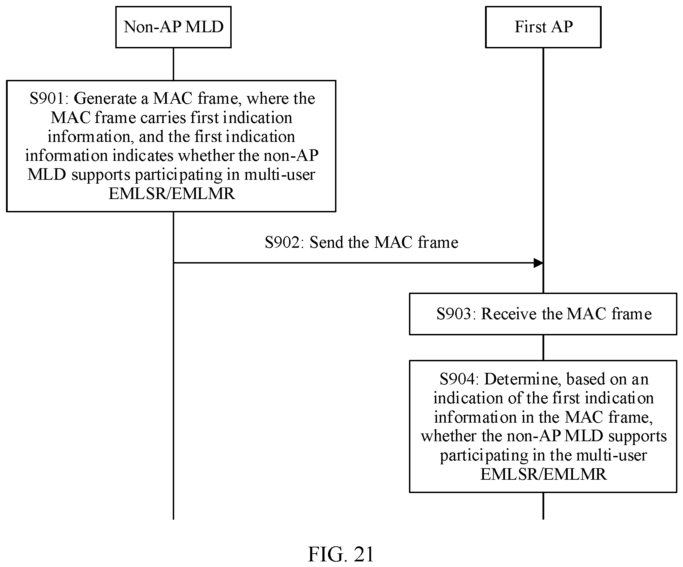

FIG. 21 is a schematic flowchart of an information exchange method according to an embodiment of this application. The method describes how to indicate whether a non-AP MLD supports participating in multi-user EMLSR/EMLMR. A first AP may be a single-link AP, or may be an AP in an AP MLD. This is not limited in this embodiment of this application. As shown in FIG. 21, the information exchange method includes but is not limited to the following steps.

S901: The non-AP MLD generates a MAC frame, where the MAC frame carries first indication information, and the first indication information indicates whether the non-AP MLD supports participating in the multi-user EMLSR/EMLMR.

S902: The non-AP MLD sends the MAC frame.

S903: The first AP receives the MAC frame.

S904: The first AP determines, based on an indication of the first indication information in the MAC frame, whether the non-AP MLD supports participating in the multi-user EMLSR/EMLMR.

Optionally, the MAC frame includes an enhanced multi-link capabilities field (EML Capabilities field) of a multi-link element (Multi-Link element), and the first indication information is located in the EML capabilities field of the MAC frame.

Optionally, the MAC frame is an enhanced multi-link operating mode notification/negotiation frame (EML Operating Mode Notification/Negotiation frame). The enhanced multi-link operating mode notification/negotiation frame indicates that the non-AP MLD is about to change an EML operation, for example, enable or disable the EML operation. The frame may be used for notification or negotiation. For example, the frame is an EHT action frame (EHT Action frame), and a corresponding value of an action field (EHT Action field) in the EHT action frame is shown in Table 1. When the value of the action field is 1, it indicates that the EHT action frame is an enhanced multi-link operating mode notification/negotiation frame.

**Table 1: Value of the EHT action field**

| Value | Meaning |
|---|---|
| 0 | EHT compressed beamforming/CQI (EHT compressed beamforming/CQI) |
| 1 | EHT operating mode notification (EHT operating mode notification) |
| 2 to 255 | Reserved (reserved) |

Optionally, a length of the first indication information is 1 bit. For example, when the bit is 0, it indicates that the non-AP MLD does not support participating in the multi-user EMLSR/EMLMR; and when the bit is 1, it indicates that the non-AP MLD supports participating in the multi-user EMLSR/EMLMR. Alternatively, when the bit is 1, it indicates that the non-AP MLD does not support participating in the multi-user EMLSR/EMLMR; and when the bit is 0, the non-AP MLD supports participating in the multi-user EMLSR/EMLMR. A correspondence between a value and a meaning of the first indication information is not limited in this embodiment of this application.

Optionally, a length of the first indication information is 2 bits. One of the 2 bits indicates that the non-AP MLD does not support participating in the multi-user EMLSR, and the other bit indicates that the non-AP MLD does not support participating in the multi-user EMLMR. For example, when the 2 bits are 00, it indicates that the non-AP MLD does not support participating in the multi-user EMLSR and EMLMR; and when the 2 bits are 01, it indicates that the non-AP MLD does not support participating in the multi-user EMLMR, but supports the multi-user EMLMR. Alternatively, when the two bits are 10, it indicates that the non-AP MLD supports participating in the multi-user EMLSR but does not support the multi-user EMLMR; and when the two bits are 11, it indicates that the two bits are reserved. It should be understood that a correspondence between the value and the meaning is merely an example. In practice, there may be another correspondence between the value and the meaning. A correspondence between a value and a meaning of the first indication information is not limited in this embodiment of this application.

Optionally, if the first indication information indicates that the non-AP MLD supports participating in the multi-user EMLSR/EMLMR, the first AP may communicate with the non-AP MLD by using the technical solution provided in any one of the foregoing embodiments. If the first indication information indicates that the non-AP MLD does not support participating in the multi-user EMLSR/EMLMR, the first AP may communicate with the non-AP MLD by reusing an existing SM PS rule.

Optionally, this embodiment of this application may be implemented independently, or may be implemented together with any one or more of the foregoing embodiments. This is not limited in this application.

It can be learned that this embodiment of this application provides signaling, which indicates whether the non-AP MLD supports participating in the multi-user EMLSR/EMLMR, to lay a foundation for multi-user EMLSR/EMLMR communication.

FIG. 22 is another schematic flowchart of an information exchange method according to an embodiment of this application. The method describes how to indicate whether a STA (which refers to a single-link station or a station in the 802.11ax standard and earlier versions herein) support participating in multi-user SM PS. Both an AP and the STA in FIG. 22 are single-link devices. As shown in FIG. 22, the information exchange method includes but is not limited to the following steps.

S1: The STA generates a MAC frame, where the MAC frame carries second indication information, and the second indication information indicates whether the STA supports participating in the multi-user SM PS.

S2: The STA sends the MAC frame.

S3: The AP receives the MAC frame.

S4: The AP determines, based on an indication of the second indication information in the MAC frame, whether the STA supports participating in the multi-user SM PS.

Optionally, the MAC frame includes an EHT capabilities element (EHT Capabilities element), and the second indication information is located in the EML capabilities element of the MAC frame.

Optionally, the MAC frame includes a link information field (Link Info field) of a multi-link element (Multi-Link Element), and the second indication information is located in the link information field of the MAC frame.

Optionally, a length of the second indication information is 1 bit. For example, when the bit is 0, it indicates that the STA does not support participating in the multi-user SM PS; and when the bit is 1, it indicates that the STA supports participating in the multi-user SM PS. Alternatively, when the bit is 1, it indicates that the STA does not support participating in the multi-user SM PS; and when the bit is 0, it indicates that the STA supports participating in the multi-user SM PS. A correspondence between a value and a meaning of the second indication information is not limited in this embodiment of this application.

Optionally, only when the second indication information indicates that the STA supports participating in the multi-user SM PS, the AP can allow the STA to participate in a multi-user SM PS operation. If the second indication information indicates that the STA does not support participating in the multi-user SM PS, the AP may communicate with the STA by using an existing SM PS rule.

Optionally, this embodiment of this application may be implemented independently, or may be implemented together with any one or more of the foregoing embodiments. This is not limited in this application.

It can be learned that this embodiment of this application provides signaling, which indicates whether the single-link STA supports participating in the multi-user SM PS, to lay a foundation for multi-user SM PS communication.

In this application, a non-AP MLD that supports EMLSR may also be referred to as an EMLSR non-AP MLD for short. If all or some stations in a non-AP MLD support the EMLSR/are in an EMLSR mode, the non-AP MLD is an EMLSR non-AP MLD. For ease of description, a non-AP STA in the EMLSR mode in the non-AP MLD is referred to as an EMLSR station below.

In some scenarios (including but not limited to the following scenario 1), when an AP communicates with one or more stations (the one or more stations include at least one station in the EMLSR mode, which is referred as an EMLSR station), an error may occur in frame sending or receiving of the AP. As a result, the AP cannot determine whether the EMLSR station has switched back to a listening mode, and the AP may fail to communicate with the EMLSR station.

Scenario 1: When the AP sends, to the one or more stations (including the EMLSR station), a downlink frame requiring a reply, for example, a unicast downlink data frame or a trigger frame, any of the following cases occurs: The AP fails to send the downlink frame, the AP does not receive the reply (for example, no replies from all the stations or no replies from some stations is received), or the AP receives the reply but an error occurs in receiving the reply (for example, an error occurs in receiving frames returned by all the stations, or an error occurs in receiving frames returned by some stations).

Therefore, to resolve the foregoing problem that the AP cannot determine whether one or more EMLSR stations have been switched back to a listening mode, an embodiment of this application provides a communication method. The method includes: If an AP cannot determine whether an EMLSR station (or EMLSR non-AP MLD) communicating with the AP has switched back to a listening mode, the AP sends an initial control frame to the EMLSR station (EMLSR non-AP MLD) again. The AP is associated with the EMLSR station. Optionally, a next frame sent by the AP to the EMLSR station is an initial control frame, so that communication can continue without interruption.

It may be understood that there are many cases in which the AP cannot determine whether the EMLSR station (or the EMLSR non-AP MLD) communicating with the AP has switched back to the listening mode. The following uses an example for description. It should be understood that the following example imposes no limitation on the technical solutions provided in embodiments of this application. In other words, in this embodiment of this application, the cases in which the AP cannot determine whether the EMLSR station (or the EMLSR non-AP MLD) communicating with the AP has switched back to the listening mode include but are not limited to the following example.

For example, refer to FIG. 23. FIG. 23 is a ninth schematic flowchart of a communication method according to an embodiment of this application. The method describes how to keep communication between an AP and one or more EMLSR stations uninterrupted when the AP cannot determine whether the one or more EMLSR stations communicating with the AP have switched back to a listening mode. A first AP may be a single-link AP, or may be an AP in an AP MLD. This is not limited in this embodiment of this application. The EMLSR station is a non-AP STA in an EMLSR mode in an EMLSR non-AP MLD. As shown in FIG. 23, the communication method includes but is not limited to the following steps.

S11: In a process in which the first AP performs a frame exchange with the EMLSR non-AP MLD, the first AP sends a downlink frame requiring a reply to the EMLSR non-AP MLD.

S12: When the first AP meets at least one condition in a preset condition set, the first AP sends an initial control frame to the EMLSR non-AP MLD.

The non-AP STA associated with the first AP in the EMLSR non-AP MLD is the EMLSR station.

Optionally, in the process in which the first AP performs the frame exchange with the EMLSR non-AP MLD, the first AP sends the downlink frame requiring the reply, such as a downlink data frame or a trigger frame, to the EMLSR non-AP MLD. When the first AP meets the at least one condition in the preset condition set, the first AP sends the initial control frame to the EMLSR non-AP MLD. Optionally, a next frame sent by the first AP to the EMLSR non-AP MLD on a first link is an initial control frame.

The preset condition set includes: The first AP fails to send the downlink frame, the first AP does not receive the reply, or the first AP receives the reply but an error occurs in receiving the reply. In other words, in the process in which the first AP performs the frame exchange with the EMLSR non-AP MLD, if the first AP sends the downlink frame requiring the reply to the EMLSR non-AP MLD, but the first AP fails to send the downlink frame, the first AP does not receive the reply, or the first AP receives the reply but the error occurs in receiving the reply, the first AP sends the initial control frame (initial control frame, such as an MU-RTS frame or a BSRP frame) to the EMLSR non-AP MLD.

Because the EMLSR station in the EMLSR non-AP MLD receives an initial control frame from the AP when performing a listening operation, the EMLSR non-AP MLD switches a spatial stream/antenna on another link to a link on which the EMLSR station operates, to perform the frame exchange with the AP. After switching, there are a plurality of spatial streams on the link on which the EMLSR station operates. In addition, when the AP sends the downlink frame requiring the reply to the EMLSR non-AP MLD, but the downlink frame fails to be sent, the AP does not receive the reply, or the AP receives the reply but the error occurs in receiving the reply, the AP cannot determine whether (the EMLSR station in) the EMLSR non-AP MLD switches back to a listening mode. Therefore, in this case, the AP sends an initial control frame to the EMLSR non-AP MLD again. If (the EMLSR station in) the EMLSR non-AP MLD has switched back to the listening mode at this time, when (the EMLSR station in) the EMLSR non-AP MLD receives the initial control frame again, the EMLSR non-AP MLD switches the spatial stream/antenna on the another link to the link on which the EMLSR station operates again, to perform the frame exchange with the AP. If (the EMLSR station in) the EMLSR non-AP MLD does not switch back to the listening mode at this time, when (the EMLSR station in) the EMLSR non-AP MLD receives the initial control frame again, the EMLSR non-AP MLD maintains the plurality of spatial streams on the link on which the EMLSR operates, in other words, prevents the EMLSR non-AP MLD from switching back to the listening mode.

Therefore, in some scenarios in which the AP cannot determine whether the one or more EMLSR stations have switched back to the listening mode, the AP is restricted to send the initial control frame again, so that communication can continue without interruption.

FIG. 24 is a tenth schematic flowchart of a communication method according to an embodiment of this application. A first AP may be a single-link AP, or may be an AP in an AP MLD. This is not limited in this embodiment of this application. An EMLSR station is a non-AP STA in an EMLSR mode in an EMLSR non-AP MLD. As shown in FIG. 24, the communication method includes but is not limited to the following steps.

S21: After receiving an initial control frame sent by an AP when performing a listening operation on a first link, the EMLSR non-AP MLD switches a spatial stream on each link to the first link to perform a frame exchange with the AP.

S22: When the EMLSR non-AP MLD meets any preset condition in a preset condition set, the EMLSR non-AP MLD switches the spatial stream on the first link back to each link to perform the listening operation.

Optionally, for example, there are two links between the EMLSR non-AP MLD and the AP: a first link and a second link, and a station that is in the EMLSR non-AP MLD and that operates on the first link is an EMLSR station. When the EMLSR non-AP MLD (or a non-AP MLD in the EMLSR mode) receives the initial control frame (such as an MU-RTS frame or a BSRP frame) from the AP on the first link when performing a listening operation (listening operation) on each of the first link and the second link, the non-AP MLD that supports the EMLSR switches a spatial stream/antenna on another link (which refers to the second link herein) to the first link, to perform the frame exchange with the AP. After switching, there are a plurality of spatial streams on the first link. When the EMLSR non-AP MLD determines that any preset condition in the preset condition set is met, the EMLSR non-AP MLD switches some spatial streams/antennas on the first link back to the second link, and performs the listening operation on each of the first link and the second link. Optionally, when the non-AP MLD determines that any preset condition in the preset condition set is met, the non-AP MLD shall (shall) switch back to the listening operation (switch back to the listening operation) after an EMLSR transition delay (EMLSR Transition Delay) duration. In other words, the non-AP MLD (or the EMLSR station) in the EMLSR mode switches back to a listening mode if any of the following conditions are met:

- a station that is in the non-AP MLD and that receives the initial control frame does not receive a PHY-RXSTART.indication primitive (PHY-RXSTART.indication primitive) within SIFS Time + Slot Time + RxPHY Start Delay duration. Time is calculated starting from at an end moment at which the station sends a PPDU returned to the AP in the associated AP MLD, where the PPDU is used to reply to a frame most recently received from the AP. Alternatively, time is calculated starting from an end moment at which the station receives a PPDU sent by the AP, where the PPDU does not require an immediate reply;
- the station that is in the non-AP MLD and that receives the initial control frame receives the PHY-RXSTART.indication primitive within the SIFS Time + Slot Time + RxPHY Start Delay duration. A time calculation rule is the same as the time calculation rule of the previous condition, and details are not described herein again. In addition, the PPDU is not a frame sent to the station in a unicast manner, a trigger frame indicated by a user information (User Info) field and sent to the station, a CTS-to-self frame sent by the AP (associated with the station), a multi-STA BlockAck (Multi-STA BlockAck) frame indicated by per association ID traffic ID Information (Per Association ID Traffic ID Information, Per AID TID Info) and sent to the station, a VHT/HE/EHT null data packet (null data packet, NDP) announcement (Announcement) frame indicated by a station information (STA Info) field and sent to the station, a BA frame sent (by another station) to the AP, or a unicast BAR frame sent by the AP; and
- the station that is in the non-AP MLD and that receives the initial control frame does not reply to the recently received frame, where the frame is sent by the AP in the associated AP MLD and requires the immediate reply after the SIFS.

It may be understood that the preset condition set in this embodiment of this application includes one or more of the foregoing conditions.

In this embodiment of this application, some constraint conditions for switching the EMLSR non-AP MLD back to the listening mode are provided, to reduce power consumption of the EMLSR non-AP MLD, and avoid repeated switching due to an unclear switching condition. In addition, scheduling flexibility of the AP is improved, and the AP can be prevented from continuously sending packets to the EMLSR non-AP MLD for testing because the AP is uncertain whether the EMLSR non-AP MLD is switched back to the listening mode. In other words, the AP continues to schedule the EMLSR non-AP MLD, and eliminates uncertainty.

However, in the foregoing EMLSR non-AP MLD switching rule (namely, the constraint condition for the EMLSR non-AP MLD to switch back to the listening mode), a problem may occur. For example, under the foregoing third condition (in other words, "the station that is in the non-AP MLD and that receives the initial control frame does not reply to the recently received frame, where the frame is sent by the AP in the associated AP MLD and requires the immediate reply after the SIPS"), if the AP in the AP MLD associated with the EMLSR non-AP MLD does not receive a reply from the EMLSR non-AP MLD, one possibility is that the AP assumes that the EMLSR non-AP MLD does not reply and has switched back to the listening mode, and the other possibility is that the EMLSR non-AP MLD replies to the recently received frame, but the reply fails (for example, the AP does not receive the reply due to a collision). In this case, the EMLSR non-AP MLD does not switch back to the listening mode. Therefore, in the foregoing third condition, the AP cannot determine whether the EMLSR non-AP MLD is switched back to the listening mode, which may cause a problem that the AP cannot continue communicating with the EMLSR station in the EMLSR non-AP MLD.

In addition, in some other scenarios, the AP cannot determine whether the one or more EMLSR stations switch back to the listening mode because an error occurs in sending or receiving the frame from the AP.

For example, when the AP sends a downlink frame requiring a reply to the one or more stations (including the EMLSR station), for example, a downlink data frame or a trigger frame, any of the following cases occurs: The AP fails to send the downlink frame, the AP does not receive the reply, or the AP receives the reply but an error occurs in receiving the reply (for example, an error occurs in receiving frames returned by all the stations, or an error occurs in receiving frames returned by some stations).

For another example, the AP sends the unicast BAR frame to a station. This is because when the AP communicates with the one or more stations (including the EMLSR station), a hidden node may exist. Therefore, when the AP sends the unicast BAR frame to the station (for example, a first station), no matter whether a BA returned by the station succeeds, the AP cannot determine whether the EMLSR station has switched back to the listening mode. Reasons why the AP cannot determine whether the EMLSR station has switched back to the listening mode include but are not limited to:

A possible reason why the BA returned by the station fails may be that the first station does not reply the BA. In this case, the EMLSR station (non-first station) switches back to the listening mode. Alternatively, a possible reason why the BA returned by the station fails may be that the first station replies the BA but the AP fails to receive the BA. In this case, there are still two cases: The EMLSR station does not switch back to the listening mode if the EMLSR station (non-first station) listens to the BA, or the EMLSR station switches back to the listening mode if the first station is a hidden node of the EMLSR station (non-first station) and does not listen to the BA.

When the BA returned by the station succeeds, the EMLSR station does not switch back to the listening mode if the EMLSR station (non-first station) listens to the BA, or the EMLSR station switches back to the listening mode if the first station is a hidden node of the EMLSR station (non-first station) and does not listen to the BA.

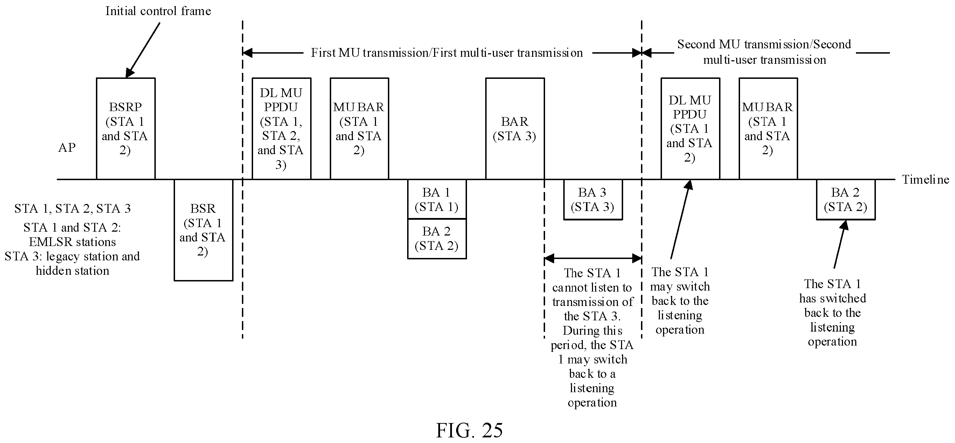

FIG. 25 is a schematic diagram in which a hidden node exists when an AP communicates with a plurality of stations according to an embodiment of this application. It is assumed that a STA 1 and a STA 2 are EMLSR stations, and a STA 3 is the hidden node (herein, it is assumed that the STA 3 is a legacy station, for example, a VHT station). In this case, the STA 1 cannot listen to transmission of the STA 3. As shown in FIG. 25, the AP sends BSRP frames to the STA 1 and the STA2, and the STA 1 and the STA 2 return BSR frames. Because the STA 1 and the STA 2 are the EMLSR stations, after the STA 1 receives the BSRP frame, an EMLSR non-AP MLD to which the STA 1 belongs switches a spatial stream/antenna on another link to a link on which the STA 1 operates, to perform a frame exchange with the AP. Similarly, after the STA 2 receives the BSRP frame, an EMLSR non-AP MLD to which the STA 2 belongs also switches a spatial stream/antenna on another link to the link on which the STA2 operates, to perform a frame exchange with the AP. In a first multi-user transmission process, the AP sends DL MU PPDUs to the STA 1, the STA2, and the STA 3, and then the AP sends MU BAR frames to the STA 1 and the STA2. After receiving the MU BAR frames, the STA 1 and the STA2 separately return BA frames (BA 1 and BA 2 in FIG. 25) to the AP. Because the STA 3 is the legacy station, the STA 3 cannot respond to an MU BAR frame. Therefore, the AP sends a unicast BAR frame to the STA 3. After receiving the BAR frame, the STA 3 returns a BA 3. In addition, because the STA 3 is the hidden node, the STA 1 cannot listen to the transmission of the STA3. Therefore, when the STA3 transmits the BA 3, the STA 1 cannot listen to the BA 3, and the STA 1 may switch back to a listening mode (this is because the STA 1 considers that a channel is idle. After the channel is idle for a period of time, the STA 1 switches back to the listening mode). However, the AP does not know whether the STA 1 can listen to the transmission of the STA 3, in other words, the AP does not know whether the STA 1 switches back to the listening mode. Therefore, in a second multi-user transmission process of the AP, the AP sends DL MU PPDUs to the STA 1, the STA 2, and another station. However, the STA 1 may have switched back to the listening mode, and therefore, the STA 1 cannot receive the DL MU PPDU. Consequently, communication between the AP and the STA 1 cannot continue.

Therefore, based on the problem that the AP cannot determine whether one or more EMLSR stations have been switched back to a listening mode, the following solution is provided in this embodiment of this application:

If the AP cannot determine whether the EMLSR station (or EMLSR non-AP MLD) communicating with the AP has switched back to the listening mode, the AP sends an initial control frame to the EMLSR station (EMLSR non-AP MLD) again. Alternatively, if the AP cannot determine whether an EMLSR station that is in the EMLSR non-AP MLD and that operates on a first link has switched back to a listening mode, the AP sends an initial control frame to the EMLSR station on the first link again. Alternatively, if the AP cannot determine whether the EMLSR station (or EMLSR non-AP MLD) communicating with the AP has switched back to the listening mode, and the AP intends to continue communicating with the EMLSR station, the AP sends an initial control frame to the EMLSR station (EMLSR non-AP MLD) again.

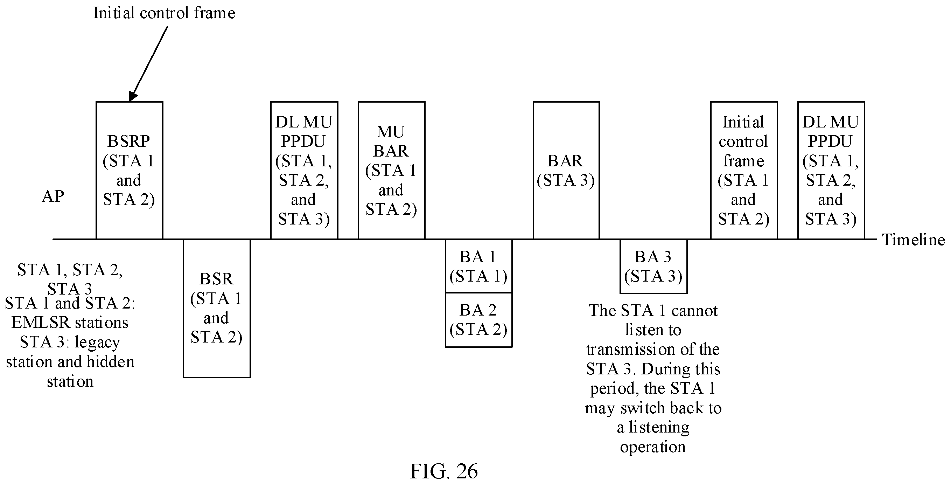

FIG. 26 is a schematic diagram of continuing communication between an AP and an EMLSR station when a hidden node exists according to an embodiment of this application. It is assumed that a STA 1 and a STA 2 are EMLSR stations, and a STA 3 is the hidden node (herein, it is assumed that the STA 3 is a legacy station, for example, a VHT station). In this case, the STA 1 cannot listen to transmission of the STA 3. As shown in FIG. 26, the AP sends BSRP frames to the STA 1 and the STA 2, and the STA 1 and the STA 2 return BSR frames. The AP sends DL MU PPDUs to the STA 1, the STA 2, and the STA 3, and then the AP sends MU BAR frames to the STA 1 and the STA 2. After receiving the MU BAR frames, the STA 1 and the STA 2 separately return BA frames (BA 1 and BA 2 in FIG. 26) to the AP. Because the STA 3 is the legacy station, the STA 3 cannot respond to an MU BAR frame. Therefore, the AP sends a unicast BAR frame to the STA 3. After receiving the BAR frame, the STA 3 returns a BA 3. In addition, because the STA 3 is the hidden node, the STA 1 cannot listen to the transmission of the STA 3. Therefore, when the STA 3 transmits the BA 3, the STA 1 cannot listen to the BA 3, and the STA 1 may switch back to a listening mode (this is because the STA 1 considers that a channel is idle. After the channel is idle for a period of time, the STA 1 switches back to the listening mode). If the AP intends to continue communicating with the STA 1, or the AP still has data to be sent to the STA 1, the AP may send initial control frames to the STA 1 and the STA 2 again.

In this way, if the EMLSR station has switched back to the listening mode, when the EMLSR station receives the initial control frame again, an EMLSR non-AP MLD to which the EMLSR station belongs switches a spatial stream/antenna on another link again to a link on which the EMLSR station operates, to perform a frame exchange with the AP. If the EMLSR station does not switch back to the listening mode, when the EMLSR station receives the initial control frame again, the EMLSR non-AP MLD to which the EMLSR station belongs keeps reception on the link on which the EMLSR station operates by a plurality of spatial streams, in other words, prevents the EMLSR non-AP MLD from switching back to the listening mode, so that communication can continue without interruption.

The foregoing descriptions describe in detail the methods provided in this application. To facilitate implementation of the foregoing solutions in embodiments of this application, embodiments of this application further provide corresponding apparatuses or devices.

In embodiments of this application, the access point and the non-AP MLD may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. The following describes in detail communication apparatuses in embodiments of this application with reference to FIG. 27 to FIG. 29. The communication apparatus is an access point or a non-AP MLD. Further, the communication apparatus may be an apparatus in the AP, or the communication apparatus is an apparatus in the non-AP MLD.

When an integrated unit is used, refer to FIG. 27. FIG. 27 is a schematic diagram of a structure of a communication apparatus 1 according to the claimed invention. As shown in FIG. 27, the communication apparatus 1 includes a switching unit 11 and a transceiver unit 12.

In a first design, the communication apparatus 1 may be a non-AP MLD or a chip in the non-AP MLD, for example, a Wi-Fi chip. The transceiver unit 12 is configured to: when performing a listening operation on a first link, receive a first frame sent by a first AP. The switching unit 11 is configured to: after the first frame sent by the first access point AP is received when the listening operation is performed on the first link, switch a spatial stream on each link to the first link to perform a frame exchange with the first AP, where the non-AP MLD supports an EML. The switching unit 11 is further configured to: when the non-AP MLD meets any preset condition in a preset condition set, switch the spatial stream on the first link back to each link to perform the listening operation. The preset condition set includes a first preset condition, and the first preset condition is that the non-AP MLD receives a radio frame on the first link, where a TA of the radio frame is different from a TA of a frame that initiates a current TXOP; the radio frame is not an uplink unicast control frame, or the radio frame is neither an uplink unicast control frame nor a frame used for reporting; and the uplink unicast control frame includes a BA frame.

Optionally, if the non-AP MLD supports enhanced multi-link single radio EMLSR, the first frame is an initial control frame. Alternatively, if the non-AP MLD supports enhanced multi-link multi-radio EMLMR, the first frame is an initial frame.

In a second design, the communication apparatus 1 may be a non-AP MLD or a chip in the non-AP MLD, for example, a Wi-Fi chip. The transceiver unit 12 is configured to: when performing a listening operation on a first link, receive a first frame sent by a first AP. The switching unit 11 is configured to: after the first frame sent by the first access point AP is received when the listening operation is performed on the first link, switch a spatial stream on each link to the first link to perform a frame exchange with the first AP, where the non-AP MLD supports an EML. The switching unit 11 is further configured to: when the non-AP MLD meets any preset condition in a preset condition set, switch the spatial stream on the first link back to each link to perform the listening operation. The preset condition set includes a second preset condition, and the second preset condition is that the non-AP MLD receives a unicast frame on the first link, where a destination address of the unicast frame is another station, the unicast frame is not a unicast control frame, and the another station is a station other than a station that is in the non-AP MLD and that operates on the first link.

In a third design, the communication apparatus 1 may be a non-AP MLD or a chip in the non-AP MLD, for example, a Wi-Fi chip. The transceiver unit 12 is configured to: when performing a listening operation on a first link, receive a first frame sent by a first AP. The switching unit 11 is configured to: after the first frame sent by the first AP is received when the listening operation is performed on the first link, switch a spatial stream on each link to the first link to perform a frame exchange with the first AP, where the non-AP MLD supports an EML. The switching unit 11 is further configured to: when the non-AP MLD meets any preset condition in a preset condition set, switch the spatial stream on the first link back to each link to perform the listening operation. The preset condition set further includes a third preset condition, and the third preset condition is that the non-AP MLD receives, on the first link, one trigger frame sent by a TXOP holder, where a user information field of the non-AP MLD does not exist in the trigger frame, or an association identifier indicating uplink OFDMA-based random access does not exist in the trigger frame.

The switching unit 11 may also be referred to as a processing unit.

It should be understood that the communication apparatus 1 in the first to third designs may correspondingly perform Embodiment 1, and the foregoing operations or functions of the units in the communication apparatus 1 are separately used to implement corresponding operations of the non-AP MLD in Embodiment 1. For brevity, Details are not described herein again.

In a fourth design, the communication apparatus 1 may be a non-AP MLD or a chip in the non-AP MLD, for example, a Wi-Fi chip. The transceiver unit 12 is configured to receive a first frame when performing a listening operation on a first link. The transceiver unit 12 is further configured to receive a first-type PPDU on the first link by using a plurality of spatial streams after successfully receiving the first frame when performing the listening operation on the first link, and before end of a frame exchange between the non-AP MLD and a first AP associated with a first station in the non-AP MLD, where the first-type PPDU is an MU PPDU, or a PPDU including a broadcast frame or a multicast frame. The switching unit 11 is configured to: when the non-AP MLD meets any preset condition in a preset condition set, switch a spatial stream on the first link back to each link to perform the listening operation. A receiving address carried in the broadcast frame is a broadcast address, and a receiving address carried in the multicast frame is a multicast address. The first-type PPDU carries indication information, and the indication information indicates that a station on the first link is used as a recipient. The non-AP MLD supports an EML, and the first frame indicates the non-AP MLD to switch the spatial stream on each link to the first link for a frame exchange. The preset condition set includes a first preset condition, and the first preset condition is that the non-AP MLD receives a radio frame on the first link, where a transmitting address of the radio frame is different from a transmitting address of a frame that initiates a current TXOP; the radio frame is not an uplink unicast control frame, or the radio frame is neither an uplink unicast control frame nor a frame used for reporting; and the uplink unicast control frame includes a BA frame.

Optionally, if the non-AP MLD supports EMLSR, the first frame is an initial control frame. Alternatively, if the non-AP MLD supports EMLMR, the first frame is an initial frame.

Optionally, the first-type PPDU includes a triggering frame, and the triggering frame is used to schedule the non-AP MLD to send a trigger based physical layer protocol data unit TB PPDU. The transceiver unit 12 is further configured to send the TB PPDU on the first link by using the plurality of spatial streams.

The switching unit 11 may also be referred to as a processing unit.

It should be understood that the communication apparatus 1 in the fourth design may correspondingly perform Embodiment 3, and the foregoing operations or functions of the units in the communication apparatus 1 are separately used to implement corresponding operations of the non-AP MLD in Embodiment 3. For brevity, Details are not described herein again.

In a fifth design, the communication apparatus 1 may be a non-AP MLD or a chip in the non-AP MLD, for example, a Wi-Fi chip. The transceiver unit 12 is configured to receive, on a first link, a first frame sent by a first AP. The switching unit 11 is configured to switch a spatial stream on each link to the first link. The switching unit 11 is further configured to: after the first frame sent by the first AP is received on the first link and the spatial stream on each link is switched to the first link, if the non-AP MLD determines that an exchange of the first frame fails, switch the spatial stream on the first link back to each link to perform a listening operation. The non-AP MLD supports an EML.

Optionally, if the non-AP MLD supports EMLSR, the first frame is an initial control frame. Alternatively, if the non-AP MLD supports EMLMR, the first frame is an initial frame.

Optionally, the communication apparatus 1 may further include a determining unit 13. The determining unit 13 is configured to: when any preset condition in a preset condition set is met within a first duration starting from a moment at which the non-AP MLD receives the first frame, determine that the exchange of the first frame fails.

The switching unit 11 and the determining unit 13 may be integrated into one module, for example, a processing module.

It should be understood that the communication apparatus 1 in the fifth design may correspondingly perform Embodiment 4, and the foregoing operations or functions of the units in the communication apparatus 1 are separately used to implement corresponding operations of the non-AP MLD in Embodiment 4. For brevity, Details are not described herein again.

In a sixth design, the communication apparatus 1 may be a first non-AP MLD or a chip in the first non-AP MLD, for example, a Wi-Fi chip. The transceiver unit 12 is configured to receive, on a first link, a first frame sent by a first AP, where the first frame carries a second duration, a start moment of the second duration is an end moment at which the first non-AP MLD receives the first frame, the first non-AP MLD supports an EML, and the first frame indicates the first non-AP MLD to switch a spatial stream on each link to the first link to perform a frame exchange with the first AP. The switching unit 11 is configured to: after the second duration, switch the spatial stream on the first link back to each link to perform a listening operation.

Optionally, if the non-AP MLD supports EMLSR, the first frame is an initial control frame. Alternatively, if the non-AP MLD supports EMLMR, the first frame is an initial frame.

The switching unit 11 may also be referred to as a processing unit.

It should be understood that the communication apparatus 1 in the sixth design may correspondingly perform Embodiment 5, and the foregoing operations or functions of the units in the communication apparatus 1 are separately used to implement corresponding operations of the first non-AP MLD in Embodiment 5. For brevity, Details are not described herein again.

In a seventh design, the communication apparatus 1 may be a first non-AP MLD or a chip in the first non-AP MLD, for example, a Wi-Fi chip. The transceiver unit 12 is configured to receive, on a first link, a first frame sent by a first AP. The switching unit 11 is configured to switch a spatial stream on each link to the first link to perform a frame exchange with the first AP, where the first non-AP MLD supports an EML. The transceiver unit 12 is further configured to receive a second frame on the first link by using a plurality of spatial streams, where the second frame includes a more data subfield. The switching unit 11 is further configured to: when a value of the more data subfield in the second frame is 0, switch the spatial stream on the first link back to each link to perform a listening operation.

The switching unit 11 may also be referred to as a processing unit.

It should be understood that the communication apparatus 1 in the seventh design may correspondingly perform Embodiment 7, and the foregoing operations or functions of the units in the communication apparatus 1 are separately used to implement corresponding operations of the first non-AP MLD in Embodiment 7. For brevity, Details are not described herein again.

In an eighth design, the communication apparatus 1 may be a first non-AP MLD or a chip in the first non-AP MLD, for example, a Wi-Fi chip. The transceiver unit 12 is configured to receive, on a first link, a first frame sent by a first AP. The switching unit 11 is configured to switch a spatial stream on each link to the first link to perform a frame exchange with the first AP, where the first non-AP MLD supports an EML. The transceiver unit 12 is further configured to receive a third frame on the first link, where the third frame includes an end of service period EOSP subfield, and the EOSP subfield is set to 1. The switching unit 11 is further configured to switch the spatial stream on the first link back to each link to perform a listening operation.

The switching unit 11 may also be referred to as a processing unit.

It should be understood that the communication apparatus 1 in the eighth design may correspondingly perform Embodiment 8, and the foregoing operations or functions of the units in the communication apparatus 1 are separately used to implement corresponding operations of the first non-AP MLD in Embodiment 8. For brevity, Details are not described herein again.

FIG. 28 is a schematic diagram of a structure of a communication apparatus 2 according to an embodiment of this application. The communication apparatus 2 may be a first AP or a chip in a first AP, for example, a Wi-Fi chip. As shown in FIG. 28, the communication apparatus 2 includes a first unit 21, and optionally includes a processing unit 22.

In a first design, the first unit 21 is configured to: after successfully sending a first frame on a first link and before end of frame exchanges with N stations associated with the first AP, use first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML. A receiving address carried in the broadcast frame is a broadcast address, and a receiving address carried in the multicast frame is a multicast address. The first-type PPDU carries indication information, and the indication information indicates that a station on the first link is used as a recipient. It should be understood that the first unit 21 is configured to implement a transceiver function, and the first unit 21 may also be referred to as a transceiver unit.

Optionally, the processing unit 22 is configured to generate the first-type PPDU.

Optionally, if the non-AP MLD to which the at least one station belongs supports EMLSR, the first frame is an initial control frame. Alternatively, if the non-AP MLD to which the at least one station belongs supports EMLMR, the first frame is an initial frame.

It should be understood that the communication apparatus 2 in the first design may correspondingly perform Embodiment 2 or 3, and the foregoing operations or functions of the units in the communication apparatus 2 are separately used to implement corresponding operations of the first AP in Embodiment 2 or 3. For brevity, Details are not described herein again.

In a second design, the first unit 21 is configured to send a first frame on a first link, where the first frame indicates a first non-AP MLD to switch a spatial stream on each link to the first link to perform a frame exchange with the first AP. The first unit 21 is further configured to send a second frame on the first link, where the second frame includes a more data subfield. When a value of the more data subfield is 0, it indicates that the first non-AP MLD switches the spatial stream on the first link back to each link to perform a listening operation.

Optionally, the processing unit 22 is configured to generate the first frame and the second frame.

It should be understood that the communication apparatus 2 in the second design may correspondingly perform Embodiment 7, and the foregoing operations or functions of the units in the communication apparatus 2 are separately used to implement corresponding operations of the first AP in Embodiment 7. For brevity, Details are not described herein again.

In a third design, the first unit 21 is configured to send a first frame on a first link, where the first frame indicates a first non-AP MLD to switch a spatial stream on each link to the first link to perform a frame exchange with the first AP. The first unit 21 is further configured to send a third frame on the first link, where the third frame includes an EOSP subfield. When the EOSP subfield is set to 1, it indicates that the first non-AP MLD switches the spatial stream on the first link back to each link to perform a listening operation.

It should be understood that the communication apparatus 2 in the third design may correspondingly perform Embodiment 8, and the foregoing operations or functions of the units in the communication apparatus 2 are separately used to implement corresponding operations of the first AP in Embodiment 8. For brevity, Details are not described herein again.

The foregoing describes the AP and the non-AP MLD in embodiments of this application. The following describes possible product forms of the AP and the non-AP MLD. It should be understood that any product in any form that has functions of the non-AP MLD described in FIG. 27 and any product in any form that has functions of the AP described in FIG. 28 fall within the protection scope of embodiments of this application. It should be further understood that the following description is merely an example, and product forms of the AP and the non-AP MLD in embodiments of this application are not limited thereto.

As a possible product form, the AP and the non-AP MLD/STA described in embodiments of this application may be implemented by using a general bus architecture.

For ease of description, refer to FIG. 29. FIG. 29 is a schematic diagram of a structure of a communication apparatus 1000 according to an embodiment of this application. The communication apparatus 1000 may be an AP or a STA, or a chip thereof. FIG. 29 shows only main components of the communication apparatus 1000. In addition to a processor 1001 and a communication interface 1002, the communication apparatus may further include a memory 1003 and an input/output apparatus (not shown in the figure).

The processor 1001 is mainly configured to process a communication protocol and communication data, control the entire communication apparatus, execute a software program, and process data of the software program. The memory 1003 is mainly configured to store the software program and the data. The communication interface 1002 may include a control circuit and an antenna. The control circuit is mainly configured to perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in the form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

Optionally, the memory 1003 may be located in the processor 1001.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the communication interface 1002, and the memory 1003 may be connected through a communication bus.

In a design, the communication apparatus 1000 may be configured to perform functions of the non-AP MLD in the foregoing Embodiment 1: The processor 1001 may be configured to perform step S101 and step S102 in FIG. 7, and/or another process of the technology described in this specification; and the communication interface 1002 may be configured to receive a first frame in FIG. 7, and/or perform another process of the technology described in this specification.

In a design, the communication apparatus 1000 may be configured to perform functions of the first AP in the foregoing Embodiment 2: The processor 1001 may be configured to generate a first-type PPDU sent in step S201 in FIG. 8, and/or perform another process of the technology described in this specification; and the communication interface 1002 may be configured to perform step S201 in FIG. 8, and/or another process of the technology described in this specification.

In a design, the communication apparatus 1000 may be configured to perform functions of the non-AP MLD in the foregoing Embodiment 3: The processor 1001 may be configured to perform step S303 in FIG. 9, and/or another process of the technology described in this specification; and the communication interface 1002 may be configured to perform step S302 in FIG. 9, and/or another process of the technology described in this specification.

In another design, the communication apparatus 1000 may be configured to perform functions of the first AP in the foregoing Embodiment 3: The processor 1001 may be configured to generate a first-type PPDU sent in step S301 in FIG. 9, and/or perform another process of the technology described in this specification; and the communication interface 1002 may be configured to perform step S301 in FIG. 9, and/or another process of the technology described in this specification.

In a design, the communication apparatus 1000 may be configured to perform functions of the non-AP MLD in the foregoing Embodiment 4: The processor 1001 may be configured to perform step S401 and step S402 in FIG. 10, and/or another process of the technology described in this specification; and the communication interface 1002 may be configured to receive a first frame in FIG. 10, and/or perform another process of the technology described in this specification.

In a design, the communication apparatus 1000 may be configured to perform functions of the first non-AP MLD in the foregoing Embodiment 5: The processor 1001 may be configured to perform step S503 in FIG. 12, and/or another process of the technology described in this specification; and the communication interface 1002 may be configured to receive a first frame in step S502 in FIG. 12, and/or perform another process of the technology described in this specification.

In another design, the communication apparatus 1000 may be configured to perform functions of the first AP in the foregoing Embodiment 5: The processor 1001 may be configured to generate a first frame sent in step S501 in FIG. 12, and/or perform another process of the technology described in this specification; and the communication interface 1002 may be configured to perform step S501 in FIG. 12, and/or another process of the technology described in this specification.

In a design, the communication apparatus 1000 may be configured to perform functions of the non-AP MLD in the foregoing Embodiment 6: The processor 1001 may be configured to perform step S601 and step S602 in FIG. 15, and/or another process of the technology described in this specification; and the communication interface 1002 may be configured to receive a first frame in step S601 in FIG. 15, and/or perform another process of the technology described in this specification.

In a design, the communication apparatus 1000 may be configured to perform functions of the first non-AP MLD in the foregoing Embodiment 7: The processor 1001 may be configured to perform step S702 and step S705 in FIG. 17, and/or another process of the technology described in this specification; and the communication interface 1002 may be configured to perform step S704 in FIG. 17, and/or another process of the technology described in this specification.

In another design, the communication apparatus 1000 may be configured to perform functions of the first AP in the foregoing Embodiment 7: The processor 1001 may be configured to generate a first frame sent in step S701 and the second frame sent in step S703 in FIG. 17, and/or perform another process of the technology described in this specification; and the communication interface 1002 may be configured to perform step S701 and step S703 in FIG. 17, and/or another process of the technology described in this specification.

In a design, the communication apparatus 1000 may be configured to perform functions of the first non-AP MLD in the foregoing Embodiment 8: The processor 1001 may be configured to perform step S802 and step S805 in FIG. 20, and/or another process of the technology described in this specification; and the communication interface 1002 may be configured to perform step S804 in FIG. 20, and/or another process of the technology described in this specification.

In another design, the communication apparatus 1000 may be configured to perform functions of the first AP in the foregoing Embodiment 8: The processor 1001 may be configured to generate a first frame sent in step S801 and a second frame sent in step S803 in FIG. 20, and/or perform another process of the technology described in this specification; and the communication interface 1002 may be configured to perform step S801 and step S803 in FIG. 20, and/or another process of the technology described in this specification.

In a design, the communication apparatus 1000 may be configured to perform functions of the non-AP MLD in the foregoing Embodiment 9: The processor 1001 may be configured to perform step S901 in FIG. 21, and/or another process of the technology described in this specification; and the communication interface 1002 may be configured to perform step S902 in FIG. 21, and/or another process of the technology described in this specification.

In another design, the communication apparatus 1000 may be configured to perform functions of the first AP in the foregoing Embodiment 9: The processor 1001 may be configured to perform step S904 in FIG. 21, and/or another process of the technology described in this specification; and the communication interface 1002 may be configured to perform step S903 in FIG. 21, and/or another process of the technology described in this specification.

In a design, the communication apparatus 1000 may be configured to perform functions of the STA in the foregoing Embodiment 10: The processor 1001 may be configured to perform step S1 in FIG. 22, and/or another process of the technology described in this specification; and the communication interface 1002 may be configured to perform step S2 in FIG. 22, and/or another process of the technology described in this specification.

In another design, the communication apparatus 1000 may be configured to perform functions of the AP in the foregoing Embodiment 10: The processor 1001 may be configured to perform step S4 in FIG. 22, and/or another process of the technology described in this specification; and the communication interface 1002 may be configured to perform step S3 in FIG. 22, and/or another process of the technology described in this specification.

In any one of the foregoing designs, the processor 1001 may include a communication interface configured to implement a receiving function and a sending function. For example, the communication interface may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be computer programs. When the computer programs are run on the processor 1001, the communication apparatus 1000 can perform the method described in any one of the foregoing embodiments. The computer programs may be fixed in the processor 1001. In this case, the processor 1001 may be implemented by hardware.

In an implementation, the communication apparatus 1000 may include a circuit, and the circuit may implement a sending/receiving/communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal-oxide-semiconductor (complementary metal-oxide-semiconductor, CMOS), an N-type metal-oxide-semiconductor (N-type Metal-oxide-semiconductor, NMOS), a P-channel metal-oxide-semiconductor (positive channel metal-oxide-semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited by FIG. 29. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

As a possible product form, the AP and the non-AP MLD/STA described in embodiments of this application may be implemented by a general-purpose processor.

A general-purpose processor for implementing the non-AP MLD includes a processing circuit and an input/output interface internally connected to and communicating with the processing circuit.

In a design, the general-purpose processor may be configured to perform the functions of the non-AP MLD in the foregoing Embodiment 1. Specifically, the processing circuit may be configured to perform step S101 and step S102 in FIG. 7, and/or the another process of the technology described in this specification; and the input/output interface may be configured to receive the first frame in FIG. 7, and/or perform the another process of the technology described in this specification.

In a design, the general-purpose processor may be configured to perform the functions of the non-AP MLD in the foregoing Embodiment 3. Specifically, the processing circuit may be configured to perform step S303 in FIG. 9, and/or the another process of the technology described in this specification; and the input/output interface may be configured to perform step S302 in FIG. 9, and/or the another process of the technology described in this specification.

In a design, the general-purpose processor may be configured to perform the functions of the non-AP MLD in the foregoing Embodiment 4. Specifically, the processing circuit may be configured to perform step S401 and step S402 in FIG. 10, and/or the another process of the technology described in this specification; and the input/output interface may be configured to receive the first frame in FIG. 10, and/or perform the another process of the technology described in this specification.

In a design, the general-purpose processor may be configured to perform the functions of the non-AP MLD in the foregoing Embodiment 6. Specifically, the processing circuit may be configured to perform step S601 and step S602 in FIG. 15, and/or the another process of the technology described in this specification; and the input/output interface may be configured to receive the first frame in step S601 in FIG. 15, and/or perform the another process of the technology described in this specification.

In a design, the general-purpose processor may be configured to perform the functions of the non-AP MLD in the foregoing Embodiment 9. Specifically, the processing circuit may be configured to perform step S901 in FIG. 21, and/or the another process of the technology described in this specification; and the input/output interface may be configured to perform step S902 in FIG. 21, and/or the another process of the technology described in this specification.

A general-purpose processor for implementing the first non-AP MLD includes a processing circuit and an input/output interface internally connected to and communicating with the processing circuit.

In a design, the general-purpose processor may be configured to perform the functions of the first non-AP MLD in the foregoing Embodiment 5. Specifically, the processing circuit may be configured to perform step S503 in FIG. 12, and/or the another process of the technology described in this specification; and the input/output interface may be configured to perform step S502 in FIG. 12, and/or the another process of the technology described in this specification.

In a design, the general-purpose processor may be configured to perform the functions of the first non-AP MLD in the foregoing Embodiment 7. Specifically, the processing circuit may be configured to perform step S702 and step S705 in FIG. 17, and/or the another process of the technology described in this specification; and the input/output interface may be configured to perform step S704 in FIG. 17, and/or the another process of the technology described in this specification.

In a design, the general-purpose processor may be configured to perform the functions of the first non-AP MLD in the foregoing Embodiment 8. Specifically, the processing circuit may be configured to perform step S802 and step S805 in FIG. 20, and/or the another process of the technology described in this specification; and the input/output interface may be configured to perform step S804 in FIG. 20, and/or the another process of the technology described in this specification.

A general-purpose processor for implementing the STA includes a processing circuit and an input/output interface internally connected to and communicating with the processing circuit. Specifically, the general-purpose processor may be configured to perform the functions of the STA in the foregoing Embodiment 10. Specifically, the processing circuit may be configured to perform step S1 in FIG. 22, and/or the another process of the technology described in this specification; and the input/output interface may be configured to perform step S2 in FIG. 22, and/or the another process of the technology described in this specification.

A general-purpose processor for implementing the AP includes a processing circuit and an input/output interface internally connected to and communicating with the processing circuit.

In a design, the general-purpose processor may be configured to perform the functions of the first AP in the foregoing Embodiment 2. Specifically, the processing circuit may be configured to generate the first-type PPDU sent in step S201 in FIG. 8, and/or perform the another process of the technology described in this specification; and the input/output interface may be configured to perform step S201 in FIG. 8, and/or the another process of the technology described in this specification.

In a design, the general-purpose processor may be configured to perform the functions of the first AP in the foregoing Embodiment 3. Specifically, the processing circuit may be configured to generate the first-type PPDU sent in step S301 in FIG. 9, and/or perform the another process of the technology described in this specification; and the input/output interface may be configured to perform step S301 in FIG. 9, and/or the another process of the technology described in this specification.

In a design, the general-purpose processor may be configured to perform the functions of the first AP in the foregoing Embodiment 7. Specifically, the processing circuit may be configured to generate the first frame sent in step S701 and the second frame sent in step S703 in FIG. 17, and/or perform the another process of the technology described in this specification; and the input/output interface may be configured to perform step S701 and step S703 in FIG. 17, and/or the another process of the technology described in this specification.

In a design, the general-purpose processor may be configured to perform the functions of the first AP in the foregoing Embodiment 8. Specifically, the processing circuit may be configured to generate the first frame sent in step S801 and the second frame sent in step S803 in FIG. 20, and/or perform the another process of the technology described in this specification; and the input/output interface may be configured to perform step S801 and step S803 in FIG. 20, and/or the another process of the technology described in this specification.

In a design, the general-purpose processor may be configured to perform the functions of the first AP in the foregoing Embodiment 9. Specifically, the processing circuit may be configured to perform step S904 in FIG. 21, and/or the another process of the technology described in this specification; and the input/output interface may be configured to perform step S903 in FIG. 21, and/or the another process of the technology described in this specification.

In a design, the general-purpose processor may be configured to perform the functions of the AP in the foregoing Embodiment 10. Specifically, the processing circuit may be configured to perform step S4 in FIG. 22, and/or the another process of the technology described in this specification; and the input/output interface may be configured to perform step S3 in FIG. 22, and/or the another process of the technology described in this specification.

It should be understood that the communication apparatuses in the foregoing various product forms have any function of the AP or the non-AP MLD in any one of the foregoing embodiments. Details are not described herein again.

An embodiment of this application further provides a computer-readable storage medium. The computer-readable storage medium stores computer program code. When the processor executes the computer program code, the processor performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, so that the apparatus performs the method in any one of the foregoing embodiments.

An embodiment of this application further provides a wireless communication system, including an AP and a non-AP MLD. The AP and the non-AP MLD may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effect of this application are further described in detail. It should be understood that the foregoing descriptions are merely specific implementations of this application, but are not intended to limit the protection scope of this application.

## Claims

1. A communication method, comprising:

    in a process of performing a frame exchange between a first access point AP and a first station STA in an enhanced multi-link single radio non-access point multi-link device EMLSR non-AP MLD, sending (S11), by the first access point AP, a downlink frame requiring a reply to the first station STA, wherein the first access point AP is associated with the first station STA; and **characterized in that**
    when the first access point AP does not receive the reply for the downlink frame from the first station STA, sending (S12), by the first access point AP, a first initial control frame to the first station STA.

2. The method according to claim 1, wherein the first access point AP belongs to an access point multi-link device AP MLD.

3. The method according to claim 1 or 2, wherein the sending, by the first access point AP, a downlink frame requiring a reply to the first station STA comprises:
    sending, by the first access point AP, a downlink frame requiring an immediate reply to the first station STA.

4. The method according to any one of claims 1 to 3, wherein the frame exchange process comprises:

    sending, by the first access point AP, a second initial control frame to the first station STA; and
    receiving, by the first access point AP, a response frame for the second initial control frame from the first station STA.

5. An apparatus (1), comprising:

    a transceiver unit (12), configured to when in a process of performing a frame exchange between the apparatus and a first station STA in an enhanced multi-link single radio non-access point multi-link device EMLSR non-AP MLD, send a downlink frame requiring a reply to the first station STA, wherein the apparatus is associated with the first station STA; and **characterized in that**
    when the apparatus does not receive the reply for the downlink frame from the first station STA, the transceiver unit is further configured to send a first initial control frame to the first station STA.

6. The apparatus according to claim 5, wherein the apparatus belongs to an access point multi-link device AP MLD.

7. The apparatus according to claim 5 or 6, wherein the send a downlink frame requiring a reply to the first station STA comprises:
    send a downlink frame requiring an immediate reply to the first station STA.

8. The apparatus according to any one of claims 5 to 7, wherein the frame exchange process comprises:

send a second initial control frame to the first station STA; and
receive a response frame for the second initial control frame from the first station STA.

9. A communication apparatus, comprising a processor and a transceiver, wherein the transceiver is configured to send/receive a frame, and the processor is configured to perform the method according to any one of claims 1 to 4.

10. A computer-readable storage medium, wherein the computer-readable storage medium stores instructions, and when the instructions are run on a computer, the computer is enabled to perform the method according to any one of claims 1 to 4.

**Patentansprüche**

1. Kommunikationsverfahren, das umfasst:

in einem Prozess zum Durchführen eines Rahmenaustauschs zwischen einem ersten Zugangspunkt AP und einer ersten Station STA in einer Nicht-Zugangspunkt-Mehrfachverbindungseinrichtung non-AP MLD mit verbessertem Mehrfachverbindungseinzelfunk EMLSR, Senden (S11), durch den ersten Zugangspunkt AP, eines Downlink-Rahmens, der eine Antwort erfordert, an die erste Station STA, wobei der erste Zugangspunkt AP mit der ersten Station STA verknüpft ist; und **dadurch gekennzeichnet, dass** wenn der erste Zugangspunkt AP die Antwort für den Downlink-Rahmen von der ersten Station STA nicht empfängt, Senden (S12), durch den ersten Zugangspunkt AP, eines ersten anfänglichen Steuerrahmens an die erste Station STA.

2. Verfahren nach Anspruch 1, wobei der erste Zugangspunkt AP zu einer Zugangspunkt-Mehrfachverbindungseinrichtung AP MLD gehört.

3. Verfahren nach Anspruch 1 oder 2, wobei das Senden, durch den ersten Zugangspunkt AP, eines Downlink-Rahmens, der eine Antwort erfordert, an die erste Station STA, umfasst:
Senden, durch den ersten Zugangspunkt AP, eines Downlink-Rahmens, der eine sofortige Antwort erfordert, an die erste Station STA.

4. Verfahren nach einem der Ansprüche 1 bis 3, wobei der Rahmenaustauschprozess umfasst:

Senden, durch den ersten Zugangspunkt AP, eines zweiten anfänglichen Steuerrahmens an die erste Station STA; und
Empfangen, durch den ersten Zugangspunkt AP, eines Antwortrahmens für den zweiten anfänglichen Steuerrahmen von der ersten Station STA.

5. Einrichtung (1), die umfasst:

eine Sendeempfängereinheit (12), die konfiguriert ist, um während eines Prozesses zum Durchführen eines Rahmenaustauschs zwischen der Vorrichtung und einer ersten Station STA in einer Nicht-Zugangspunkt-Mehrfachverbindungseinrichtung non-AP MLD mit verbessertem Mehrfachverbindungseinzelfunk EMLSR einen Downlink-Rahmen, der eine Antwort erfordert, an die erste Station STA zu senden, wobei die Vorrichtung mit der ersten Station STA verknüpft ist; und **dadurch gekennzeichnet, dass** wenn die Vorrichtung die Antwort für den Downlink-Rahmen von der ersten Station STA nicht empfängt, die Sendeempfängereinheit ferner konfiguriert ist, um einen ersten anfänglichen Steuerrahmen an die erste Station STA zu senden.

6. Vorrichtung nach Anspruch 5, wobei die Vorrichtung zu einer Zugangspunkt-Mehrfachverbindungseinrichtung AP MLD gehört.

7. Vorrichtung nach Anspruch 5 oder 6, wobei das Senden eines Downlink-Rahmens, der eine Antwort erfordert, an die erste Station STA, umfasst:
Senden eines Downlink-Rahmens, der eine sofortige Antwort erfordert, an die erste Station STA.

8. Vorrichtung nach einem der Ansprüche 5 bis 7, wobei der Rahmenaustauschprozess umfasst:

Senden eines zweiten anfänglichen Steuerrahmens an die erste Station STA; und

Empfangen eines Antwortrahmens für den zweiten anfänglichen Steuerrahmen von der ersten Station STA.

**9.** Kommunikationsvorrichtung, die einen Prozessor und einen Sendeempfänger umfasst, wobei der Sendeempfänger konfiguriert ist, um einen Rahmen zu senden/empfangen, und der Prozessor konfiguriert ist, um das Verfahren nach einem der Ansprüche 1 bis 4 durchzuführen.

**10.** Computerlesbares Speichermedium, wobei das computerlesbare Speichermedium Anweisungen speichert, und wenn die Anweisungen auf einem Computer ablaufen, der Computer aktiviert wird, um das Verfahren nach einem der Ansprüche 1 bis 4 durchzuführen.

**Revendications**

**1.** Procédé de communication, comprenant :

dans un processus consistant à effectuer un échange de trame entre un premier point d'accès AP et une première station STA dans un dispositif à liaison multiple de point de non accès non-AP MLD de radio à liaison multiple unique améliorée EMLSR,

l'envoi (S11), par le premier point d'accès AP, d'une trame de liaison descendante nécessitant une réponse à la première station STA, dans lequel le premier point d'accès AP est associé à la première station STA ; et **caractérisé en ce que** lorsque le premier point d'accès AP ne reçoit pas la réponse pour la trame de liaison descendante de la première station STA, l'envoi (S12), par le premier point d'accès AP, d'une première trame de commande initiale à la première station STA.

**2.** Procédé selon la revendication 1, dans lequel le premier point d'accès AP appartient à un dispositif à liaison multiple de point d'accès AP MLD.

**3.** Procédé selon la revendication 1 ou 2, dans lequel l'envoi, par le premier point d'accès AP, d'une trame de liaison descendante nécessitant une réponse à la première station STA comprend :

l'envoi, par le premier point d'accès AP, d'une trame de liaison descendante nécessitant une réponse immédiate à la première station STA.

**4.** Procédé selon l'une quelconque des revendications 1 à 3, dans lequel le processus d'échange de trame comprend :

l'envoi, par le premier point d'accès AP, d'une seconde trame de commande initiale à la première station STA ; et

la réception, par le premier point d'accès AP, d'une trame de réponse pour la seconde trame de commande initiale de la première station STA.

**5.** Appareil (1), comprenant :

une unité émettrice-réceptrice (12), configurée pour, lors d'un processus consistant à effectuer un échange de trame entre l'appareil et une première station STA dans un dispositif à liaison multiple de point de non accès non-AP MLD de radio à liaison multiple unique améliorée EMLSR, l'envoi d'une trame de liaison descendante nécessitant une réponse à la première station STA, dans lequel l'appareil est associé à la première station STA ; et **caractérisé en ce que**

lorsque l'appareil ne reçoit pas la réponse pour la trame de liaison descendante de la première station STA, l'unité émettrice-réceptrice est en outre configurée pour envoyer une première trame de commande initiale à la première station STA.

**6.** Appareil selon la revendication 5, dans lequel l'appareil appartient à un dispositif à liaison multiple de point d'accès AP MLD.

**7.** Appareil selon la revendication 5 ou 6, dans lequel l'envoi d'une trame de liaison descendante nécessitant une réponse à la première station STA comprend :

l'envoi d'une trame de liaison descendante nécessitant une réponse immédiate à la première station STA.

**8.** Appareil selon l'une quelconque des revendications 5 à 7, dans lequel le processus d'échange de trame comprend :

l'envoi d'une seconde trame de commande initiale à la première station STA ; et

la réception d'une trame de réponse pour la seconde trame de commande initiale de la première station STA.

9. Appareil de communication, comprenant un processeur et un émetteur-récepteur, dans lequel l'émetteur-récepteur est configuré pour envoyer/recevoir une trame, et le processeur est configuré pour effectuer le procédé selon l'une quelconque des revendications 1 à 4.

10. Support de stockage lisible par ordinateur, dans lequel le support de stockage lisible par ordinateur stocke des instructions, et lorsque les instructions sont exécutées sur un ordinateur, l'ordinateur est activé pour effectuer le procédé selon l'une quelconque des revendications 1 à 4.

FIG. 1

FIG. 2a

Multi-link device

STA 1

⋮

STA 2

⋮

Share a high MAC layer

STA 1 low MAC

STA 2 low MAC

STA 1 PHY

STA 2 PHY

FIG. 2b

Access point multi-link device/AP MLD

AP 1

AP 2

...

AP n

Link 1

Link 2

Link n

STA 1

STA 2

...

STA n

Non-access point multi-link device/non-AP MLD

FIG. 3

AP 1 of an AP
MLD
Link 1

| Initial control frame (initial control frame) | Frame exchange (two antennas/two spatial streams) |

AP 2 of the AP
MLD
Link 2

Non-AP STA 1 of
a non-AP MLD
Link 1

Listening operation (one antenna/one spatial stream)

Frame exchange (two antennas/two spatial streams)

Listening operation (one antenna/one spatial stream)

Non-AP STA 2 of
the non-AP MLD
Link 2

Listening operation (one antenna/one spatial stream)

Listening operation (one antenna/one spatial stream)

FIG. 4

FIG. 5

t

| | | Multi-user request to send MU-RTS | | Data sent to the STA 11 and the STA 21 | | Block ACK request BAR sent to the STA 21 | |

Link 1

AP

Non-AP STA 11 of a non-AP MLD 1 — The non-AP MLD 1 switches all antennas to the link 1 in which the STA 11 is located — Clear to send (CTS) — Block ACK BA — The STA 11 switches back to a listening operation, but actually the AP still has data to be sent the STA 11 and cannot send the data

Non-AP STA 21 of a non-AP MLD 2 — The non-AP MLD 2 switches all antennas to the link 1 in which the STA 21 is located — Clear to send (CTS) — Block ACK BA

FIG. 6

After receiving a first frame sent by a first AP when a non-AP MLD performs a listening operation on a first link, the non-AP MLD switches a spatial stream on each link to the first link to perform a frame exchange with the first AP, where the non-AP MLD supports an enhanced multi-link EML     / S101

When the non-AP MLD meets any preset condition in a preset condition set, the non-AP MLD switches the spatial stream on the first link back to each link to perform the listening operation     / S102

FIG. 7

After a first AP successfully sends a first frame on a first link and before end of frame exchanges with N stations associated with the first AP, the first AP uses first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; the first-type PPDU carries indication information, and the indication information indicates that a station on the first link is used as a recipient; and the first-type PPDU includes a triggering frame (triggering frame), and the triggering frame is used to schedule a station to send a TB PPDU     / S201

FIG. 8

First AP

Non-AP MLD

S301: After the first AP successfully sends a first frame on a first link and before end of frame exchanges with N stations associated with the first AP, the first AP uses first-type PPDUs when performing the frame exchanges with the N stations on the first link, where the first-type PPDU is an MU PPDU, or a PPDU including a broadcast frame or a multicast frame, and a non-AP MLD to which at least one station belongs in the N stations supports an EML; a receiving address carried in the broadcast frame is a broadcast address, and a receiving address carried in the multicast frame is a multicast address; and the first-type PPDU carries indication information, and the indication information indicates that a station on the first link is used as a recipient

S302: Receive the first-type PPDUs on the first link by using a plurality of spatial streams, where the non-AP MLD supports the EML, and the first frame indicates the non-AP MLD to switch a spatial stream on each link to the first link for a frame exchange

S303: When the non-AP MLD meets any preset condition in a preset condition set, switch the spatial stream on the first link back to each link to perform a listening operation

FIG. 9

If the non-AP MLD meets any preset condition in a preset condition set within a first duration starting from a moment at which the first frame is received, the non-AP MLD determines that the exchange of the first frame fails
/ S402

After a non-AP MLD receives, on a first link, a first frame sent by a first AP and switches a spatial stream on each link to the first link, if the non-AP MLD determines that an exchange of the first frame fails, the non-AP MLD switches the spatial stream on the first link back to each link to perform a listening operation, where the non-AP MLD supports an EML
/ S401

FIG. 10

Link 1 {

AP | Multi-user request to send (MU-RTS) | ←——— ΔT ———→ |

Non-AP STA of a non-AP MLD | The non-AP MLD switches all antennas to the link in which the non-AP STA is located | Clear to send (CTS) | If no PPDU is received within ΔT, switch back to a listening operation

FIG. 11a

Link 1 {

AP | Multi-user request to send (MU-RTS) | ←——— ΔT ———→ |

Non-AP STA of a non-AP MLD | The non-AP MLD switches all antennas to the link in which the non-AP STA is located | Clear to send (CTS) | If a first PPDU received within ΔT is an inter-BSS PPDU, switch back to a listening operation immediately

Inter-BSS STA | Frame

FIG. 11b

FIG. 11c

Link 1

AP

Multi-user request to send (MU-RTS)

ΔT

Non-AP STA of a non-AP MLD

The non-AP MLD switches all antennas to the link in which the non-AP STA is located

Clear to send (CTS)

If a first PPDU received within ΔT is an intra-BSS PPDU, but a direction is uplink, switch back to a listening operation immediately

Intra-BSS STA

Frame

$\Delta T$

**AP**

| Multi-user request to send (MU-RTS) | | Frame |

**Link 1**

**Non-AP STA of a non-AP MLD**

The non-AP MLD switches all antennas to the link in which the non-AP STA is located

| Clear to send (CTS) |

If a first PPDU received within $\Delta T$ is an intra-BSS PPDU but a STA-ID indicates that the non-AP STA is not a recipient, or the PPDU includes a frame with a unicast address and a receiving address (RA) is not the non-AP STA, or the PPDU includes a TF but an AID12 in any user information field is inconsistent with an AID of the non-AP STA, switch back to a listening operation immediately

**Intra-BSS STA**

FIG. 11d

```
┌──────────┐                              ┌──────────┐
│ First AP │                              │ First non-│
│          │                              │ AP MLD   │
└────┬─────┘                              └────┬─────┘
     │ S501: Send a first frame on a first link, where the first
     │      frame carries one or more second durations
     │───────────────────────────────────────►│
```

S502: Receive, on the first link, the first frame sent by the first AP, where the first frame carries the second duration, a start moment of the second duration is an end moment at which the first non-AP MLD receives the first frame, the first non-AP MLD supports an EML, and the first frame indicates the first non-AP MLD to switch a spatial stream on each link to the first link to perform a frame exchange with the first AP

S503: Switch, after the second duration, the spatial stream on the first link back to each link to perform a listening operation

FIG. 12

FIG. 13

EP 4 376 527 B1

| | | | |
|---|---|---|---|
| AP | Multi-user request to send (MU-RTS) | | Frame exchanges between the AP and the STA 11 and the STA 21 |

T

Link 1

Non-AP STA 11 of a non-AP MLD 1 — The non-AP MLD 1 switches all antennas to the link 1 in which the STA 11 is located — Clear to send (CTS)

Each of the non-AP STA 11 and the non-AP STA 21 switches back to a listening operation

Non-AP STA 21 of a non-AP MLD 2 — The non-AP MLD 2 switches all antennas to the link 1 in which the STA 21 is located — Clear to send (CTS)

FIG. 14

A non-AP MLD receives, on a first link, a first frame sent by a first AP, starts timing, and switches a spatial stream on each link to the first link to a frame exchange with the first AP, where the non-AP MLD supports an EML ⟋ S601

If a fourth frame is received in a frame exchange process between the non-AP MLD and the first AP, and a TXOP end time indicated by a duration field in the fourth frame is later than a TXOP end time indicated by a duration field in the first frame, the non-AP MLD updates an end time of the timing to the TXOP end time indicated by the duration field in the fourth frame ⟋ S602

When the timing reaches 0, the non-AP MLD switches the spatial stream on the first link back to each link to perform a listening operation ⟋ S603

FIG. 15

EP 4 376 527 B1

Updated TXOP end time

TXOP end time

AP | Multi-user request to send (MU-RTS) | | Frame (for updating the TXOP end time)

Link 1

Non-AP STA 11 of a non-AP MLD 1 | The non-AP MLD 1 switches all antennas to the link 1 in which the STA 11 is located | Clear to send (CTS)

Each of the non-AP STA 11 and the non-AP STA 21 switches back to a listening operation

Non-AP STA 21 of a non-AP MLD 2 | The non-AP MLD 2 switches all antennas to the link 1 in which the STA 21 is located | Clear to send (CTS)

FIG. 16

First AP

First non-AP MLD

S701: Send a first frame on a first link, where the first frame indicates the first non-AP MLD to switch a spatial stream on each link to the first link to perform a frame exchange with the first AP

S702: Receive, on the first link, the first frame sent by the first AP, and switch the spatial stream on each link to the first link to perform the frame exchange with the first AP, where the first non-AP MLD supports an EML

S703: Send a second frame on the first link, where the second frame includes a more data subfield

S704: Receive the second frame on the first link by using a plurality of spatial streams, where the second frame includes the more data subfield

S705: If a value of the more data subfield in the second frame is 0, switch the spatial stream on the first link back to each link to perform a listening operation

FIG. 17

EP 4 376 527 B1

Link 1

AP

| Multi-user request to send (MU-RTS) | | A value of a more data subfield of the non-AP STA 11 is 1, and a value of a more data subfield of the non-AP STA 21 is 1 | The value of the more data subfield of the non-AP STA 11 is 0, and the value of the more data subfield of the non-AP STA 21 is 1 | The value of the more data subfield of the non-AP STA 21 is 0 |

Non-AP STA 11 of a non-AP MLD 1

| The non-AP MLD 1 switches all antennas to the link 1 in which the STA 11 is located | Clear to send (CTS) | | | The non-AP STA 11 switches back to a listening operation |

Non-AP STA 21 of a non-AP MLD 2

| The non-AP MLD 2 switches all antennas to the link 1 in which the STA 21 is located | Clear to send (CTS) | | | The non-AP STA 21 switches back to a listening operation |

FIG. 18

| AP | Multi-user request to send (MU-RTS) | A value of a more data field of the non-AP STA 11 is 1, and a value of a more data field of the non-AP STA 21 is 1 | The value of the more data field of the non-AP STA 11 is 0, and the value of the more data field of the non-AP STA 21 is 1 | The value of the more data field of the non-AP STA 21 is 1 |

T

| Non-AP STA 11 of a non-AP MLD 1 | The non-AP MLD 1 switches all antennas to the link 1 in which the STA 11 is located | Clear to send (CTS) | | | The non-AP STA 11 switches back to a listening operation |

| Non-AP STA 21 of a non-AP MLD 2 | The non-AP MLD 2 switches all antennas to the link 1 in which the STA 21 is located | Clear to send (CTS) | | | | The non-AP STA 21 switches back to a listening operation |

Link 1

FIG. 19

```
┌─────────┐                          ┌──────────┐
│ First AP│                          │First non-│
│         │                          │ AP MLD   │
└────┬────┘                          └────┬─────┘
     │                                    │
     │  S801: Send a first frame on a first link, where the first
     │  frame indicates the first non-AP MLD to switch a spatial
     │  stream on each link to the first link to perform a frame
     │              exchange with the first AP
     │                                    │
     ├───────────────────────────────────►
     │                                    │
     │         ┌──────────────────────────────────────────────┐
     │         │ S802: Receive, on the first link, the first frame sent by the
     │         │ first AP, and switch the spatial stream on each link to the
     │         │ first link to perform the frame exchange with the first AP,
     │         │     where the first non-AP MLD supports an EML
     │         └──────────────────────────────────────────────┘
     │                                    │
     │  S803: Send a third frame on the first link, where the
     │  third frame includes an EOSP subfield, and the EOSP
     │              subfield is set to 1
     │                                    │
     ├───────────────────────────────────►
     │                                    │
     │         ┌──────────────────────────────────────────────┐
     │         │ S804: Receive the third frame on the first link by using a
     │         │ plurality of spatial streams, where the third frame includes
     │         │    the EOSP subfield, and the EOSP subfield is set to 1
     │         └──────────────────────────────────────────────┘
     │                                    │
     │         ┌──────────────────────────────────────────────┐
     │         │ S805: Switch the spatial stream on the first link back to
     │         │     each link to perform a listening operation
     │         └──────────────────────────────────────────────┘
     │                                    │
```

FIG. 20

Non-AP MLD

First AP

S901: Generate a MAC frame, where the MAC frame carries first indication information, and the first indication information indicates whether the non-AP MLD supports participating in multi-user EMLSR/EMLMR

S902: Send the MAC frame

S903: Receive the MAC frame

S904: Determine, based on an indication of the first indication information in the MAC frame, whether the non-AP MLD supports participating in the multi-user EMLSR/EMLMR

FIG. 21

STA

AP

S1: Generate a MAC frame, where the MAC frame carries second indication information, and the second indication information indicates whether the STA supports participating in multi-user SM PS

S2: Send the MAC frame

S3: Receive the MAC frame

S4: Determine, based on an indication of the second indication information in the MAC frame, whether the STA supports participating in the multi-user SM PS

FIG. 22

In a process in which a first AP performs a frame exchange with an EMLSR non-AP MLD, the first AP sends a downlink frame requiring a reply to the EMLSR non-AP MLD    S11

When the first AP meets at least one condition in a preset condition set, the first AP sends an initial control frame to the EMLSR non-AP MLD    S12

FIG. 23

After receiving an initial control frame sent by an AP when performing a listening operation on a first link, an EMLSR non-AP MLD switches a spatial stream on each link to the first link to perform a frame exchange with the AP    S21

When the EMLSR non-AP MLD meets any preset condition in a preset condition set, the EMLSR non-AP MLD switches the spatial stream on the first link back to each link to perform a listening operation    S22

FIG. 24

FIG. 25

Initial control frame

AP

BSRP (STA 1 and STA 2)

DL MU PPDU (STA 1, STA 2, and STA 3)

MU BAR (STA 1 and STA 2)

BAR (STA 3)

Initial control frame (STA 1 and STA 2)

DL MU PPDU (STA 1, STA 2, and STA 3)

Timeline

STA 1, STA 2, STA 3
STA 1 and STA 2: EMLSR stations
STA 3: legacy station and hidden station

BSR (STA 1 and STA 2)

BA 1 (STA 1)

BA 2 (STA 2)

BA 3 (STA 3)

The STA 1 cannot listen to transmission of the STA 3. During this period, the STA 1 may switch back to a listening operation

FIG. 26

EP 4 376 527 B1

FIG. 27

FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- minutes for tgbe mac ad hoc teleconferences may and july 2020. **LIWEN CHU**. IEEE DRAFT; 11-20-0777-14-00BE-MINUTES-FOR-TGBE-MAC-AD-HOC-TELECONFERENCES-MAY-AND-JULY-2020. IEEE-SA MENTOR, 09 July 2020, vol. 802.11 EHT; 802.11be, 1-106